(19) Europäisches Patentamt

European Patent Office

Office européen des brevets

(11) **EP 1 693 742 A2**

(12) **EUROPEAN PATENT APPLICATION**

(43) Date of publication:
**23.08.2006 Bulletin 2006/34**

(51) Int Cl.:
*G06F 7/00* (2006.01)

(21) Application number: **06011060.8**

(22) Date of filing: **17.07.1996**

(84) Designated Contracting States:
**DE FR GB IT**

(30) Priority: **31.08.1995 US 521360**

(62) Document number(s) of the earlier application(s) in accordance with Art. 76 EPC:
**96926742.6 / 0 847 551**

(71) Applicant: **Intel Corporation**
**Santa Clara, CA 95052 (US)**

(72) Inventors:
• **Peleg, Alexander D.**
**Carmelia**
**Haifa (IL)**
• **Mittal, Millind**
**S. San Francisco**
**California (US)**
• **Mennemeier, Larry M.**
**California 95006 (US)**

• **Eitan, Benny**
**Haifa (IL)**
• **Dulong, Carole**
**Saratoga**
**California 95070 (US)**
• **Kowashi, Eiichi**
**Sunnyvale**
**California 94086 (US)**
• **Witt, Wolf**
**Walnut Creek**
**California 94598 (US)**

(74) Representative: **Wombwell, Francis et al**
**Potts, Kerr & Co.**
**15, Hamilton Square**
**Birkenhead**
**Merseyside CH41 6BR (GB)**

Remarks:
This application was filed on 30 - 05 - 2006 as a divisional application to the application mentioned under INID code 62.

(54) **A set of instructions for operating on packed data**

(57) An apparatus comprising:

a first storage area operable to have stored therein a first packed data containing at least an $A_1$, an $A_2$, an $A_3$, and an $A_4$ element;

a second storage area operable to have stored therein a second packed data containing at least a $B_1$, a $B_2$, a $B_3$, and a $B_4$ element;

a multiply circuit including

a first multiplier coupled to said first storage area to receive said $A_1$ and coupled to said second storage area to receive said $B_1$;

a second multiplier coupled to said first storage area to receive said $A_2$ and coupled to said second storage are to receive said $B_2$;

a third multiplier coupled to said first storage area to receive said $A_3$ and coupled to said second storage area to receive said $B_3$;

a fourth multiplier coupled to said first storage area to receive said $A_4$ and coupled to said second storage area to receive said $B_4$;

**(Cont. next page)**

EP 1 693 742 A2

a first adder coupled to said first multiplier and said second multiplier;

a second adder coupled to said third multiplier and said fourth multiplier; and

a third storage area coupled to said first adder and said second adder, said third storage area having at least a first field and a second field, said first field for saving an output of said first adder as a first data element of a third packed data, said second field for saving an output of said second adder as a second data element of said third packed data.

**Figure 1**

**Description**

**BACKGROUND OF THE INVENTION**

1. FIELD OF INVENTION

In particular, the invention relates to the field of computer systems. More specifically, the invention relates to the area of packed data operations.

2. DESCRIPTION OF RELATED ART

In typical computer systems, processors are implemented to operate on values represented by a large number of bits (e.g., 64) using instructions that produce one result. For example, the execution of an add instruction will add together a first 64-bit value and a second 64-bit value and store the result as a third 64-bit value. However, multimedia applications (e.g., applications targeted at computer supported cooperation (CSC -- the integration of teleconferencing with mixed media data manipulation), 2D/3D graphics, image processing, video compression/decompression, recognition algorithms and audio manipulation) require the manipulation of large amounts of data which may be represented in a small number of bits. For example, graphical data typically requires 8 or 16 bits and sound data typically requires 8 or 16 bits. Each of these multimedia application requires one or more algorithms, each requiring a number of operations. For example, an algorithm may require an add, compare and shift operation.

To improve efficiency of multimedia applications (as well as other applications that have the same characteristics), prior art processors provide packed data formats. A packed data format is one in which the bits typically used to represent a single value are broken into a number of fixed sized data elements, each of which represents a separate value. For example, a 64-bit register may be broken into two 32-bit elements, each of which represents a separate 32-bit value. In addition, these prior art processors provide instructions for separately manipulating each element in these packed data types in parallel. For example, a packed add instruction adds together corresponding data elements from a first packed data and a second packed data. Thus, if a multimedia algorithm requires a loop containing five operations that must be performed on a large number of data elements, it is desirable to pack the data and perform these operations in parallel using packed data instructions. In this manner, these processors can more efficiently process multimedia applications.

However, if the loop of operations contains an operation that cannot be performed by the processor on packed data (i.e., the processor lacks the appropriate instruction), the data will have to be unpacked to perform the operation. For example, if the multimedia algorithm required an add operation and the previously described packed add instruction is not available, the programmer must unpack both the first packed data and the second packed data (i.e., separate the elements comprising both the first packed data and the second packed data), add the separated elements together individually, and then pack the results into a packed result for further packed processing. The processing time required to perform such packing and unpacking often negates the performance advantage for which packed data formats are provided. Therefore, it is desirable to incorporate on a general purpose processor a set of packed data instructions that provide all the required operations for typical multimedia algorithms. However, due to the limited die area on today's microprocessors, the number of instructions which may be added is limited.

One general purpose processor that contains packed data instructions is the i860XP™ processor manufactured by Intel Corporation of Santa Clara, California. The i860XP processor includes several packed data types having different element sizes. In addition, the i860XP processor includes a packed add and a packed compare instruction. However, the packed add instruction does not break the carry chain, and thus the programmer has to insure the operations being performed by the software will not cause an overflow -- i.e., the operation will not cause bits from one element in the packed data to overflow into the next element of the packed data. For example, if a value of I is added to an 8-bit packed data element storing "11111111", an overflow occurs and the result is "1 00000000". In addition, the location of the decimal point in the packed data types supported by the i860XP processor is fixed (i.e., the 1860XP processor supported 8.8, 6.10, and 8.24 numbers, where an i.j number contains the i most significant bits and j bits after the decimal point). Thus, the programmer is limited as to the values that may be represented. Since the i860XP processor supports only these two instructions, it cannot perform many of the operations required by multimedia algorithms using packed data.

Another general purpose processor that supports packed data is the MC88110™ processor manufactured by Motorola, Inc. The MC88110 processor supports several different packed data formats having different size elements. In addition, the set of packed instructions supported by the MC88110 processor includes a pack, an unpack, a packed add, a packed subtract, a packed multiply, a packed compare, and a packed rotate.

The MC88110 processor pack command operates by concatenating the (t * r)/64 (where t is the number of bits in the elements of the packed data) most significant bits of each of the elements in a first register pair to generate a field of width r. This field replaces the most significant bits of the packed data stored in a second register pair. This packed data is then stored in a third register pair and rotated left by r bits. The table of supported values for t & r, as well as an example of the operation of this instruction, are shown in Tables 1 and 2 below.

Table 1

| | | r | | |
|---|---|---|---|---|
| | | 8 | 16 | 32 |
| t | 8 | x | x | 4 |
| | 16 | x | 4 | 8 |
| | 32 | 4 | 8 | 16 |
| x = undefined operation | | | | |

Table 2

This implementation of a pack instruction has two disadvantages. The first is that additional logic is required to perform the rotate at the end of the instruction.

The second is the number of instructions required to generate a packed data result. For example, if it is desired to use four 32-bit values to generate the result in the third register (shown above), 2 instructions with t=32 and r=32 are required as shown below in Table 3.

ppack Source1,Source2

| $A_0.$ | $.A_0$ | $C_0.$ | $.C_0$ | Source1 |
|---|---|---|---|---|
| | | | | |
| x | x | x | x | Source2 |
| = | | | | |
| x | x | $A_0.$ | $C_0.$ | Result1 |

4

ppack Result1,Source3

| $G_0.$ | $.G_0$ | $B_0.$ | $.B_0$ | Result1 |
|--------|--------|--------|--------|---------|
| | | | | |
| x | x | $A_0.$ | $C_0.$ | Source3 |
| = | | | | |
| $A_0.$ | $C_0.$ | $G_0.$ | $B_0.$ | Result2 |

## Table 3

The MC88110 processor unpack command operates by placing 4-, 8-, or 16- bit data elements from a packed data into the lower half of data elements that are twice as large (8, 16, or 32 bits) with zero fill -- i.e., the higher order bits in the resulting data elements are set to zero. An example of the operation of this unpack command is shown below in Table 4.

First Register Pair

| 00101010 | 01010101 | 01010101 | 11111111 | 10000000 | 01110000 | 10001111 | 10001000 |
|----------|----------|----------|----------|----------|----------|----------|----------|
| 7 | 6 | 5 | 4 | 3 | 2 | 1 | 0 |

| Unpack |
|--------|
| Second Register Pair |

| 00000000 10000000 | 00000000 01110000 | 00000000 10001111 | 00000000 10001000 |
|-------------------|-------------------|-------------------|-------------------|
| 3 | 2 | 1 | 0 |

## Table 4

The MC88110 processor packed multiply instruction multiplies each element of a 64-bit packed data by a 32-bit value as if the packed data represented a single value as shown below in Table 5.

| 63 | 48 | 47 | 32 | 31 | 16 | 15 | 0 | |
|----|----|----|----|----|----|----|---|---|

| 00 | $a_1$ | 00 | $R_1$ | 00 | $G_1$ | 00 | $B_1$ | rS1:rS1+1 |
|----|-------|----|-------|----|-------|----|-------|-----------|

**X**

| 00 | 00 | 00 | $A_x$ | rS2 |
|----|----|----|-------|-----|

**=**

| $a_1 \times A_x$ | $R_1 \times A_x$ | $G_1 \times A_x$ | $B_1 \times A_x$ | rD:rD+1 |
|------------------|------------------|------------------|------------------|---------|

## Table 5

This multiply instruction has two draw backs. First, this multiply instruction does not break the carry chains, and thus the programmer must insure that the operations performed on the packed data do not cause an overflow. As a result, the programmer is sometimes required to include additional instructions to prevent this overflow. Second, this multiply instruction multiplies each element in the packed data by a single value (i.e., the 32-bit value). As a result, the user does not have the flexibility to choose which elements in a packed data are multiplied by the 32-bit value. Therefore, the programmer must either prepare the data such that the same multiplications are required on every element in the packed data or waste processing time unpacking the data whenever a multiplication on less than all of the elements in the data is required. Thus, the programmer could not perform multiple multiplications using multiple multipliers in parallel. For example, to multiply together eight different pieces of data, each one word long, requires four separate multiply operations. Each operation multiplying two words at a time, effectively wasting data lines and circuitry used for bits higher than bit sixteen.

The MC88110 processor packed compare instruction compares corresponding 32-bit data elements from a first packed data and a second packed data. Each of the two comparisons may return either less-than ($<$) or greater-than-or-equal-to ($\geq$), resulting in four possible combinations. The instruction returns an 8-bit result string; four bits indicate which of the four possible conditions was met, and four bits indicate the complement of those bits. Conditional branching on the results of this instruction can be implemented in two ways: 1) with a sequence of conditional branches; or 2) with a jump table. A problem with this instruction is the fact that it requires conditional branches based on data to perform functions such as: if Y>A then X=X+B else X=X. A pseudo code compiled representation of this function would be:

```
        COMPARE Y,A
        BRANCH if the conditional flag indicates Y≤A
        ADD X,B
        ...
```

New microprocessors try to speed up execution by speculatively predicting where branches go. If a prediction is correct, performance is not lost and there is a potential for a gain in performance. However, if a prediction is wrong, performance is lost. Therefore, the incentive to predict well is great. However, branches based on data (such as the one above) behave in an unpredictable way that breaks the prediction algorithms and results in more wrong predictions. As a result, use of this compare instruction to set up conditional branches on data comes at a high cost to performance.

The MC88110 processor rotate instruction rotates a 64-bit value to any modulo-4 boundary between 0 and 60 bits. (See Table 6 below for an example).

Table 6

Since the rotate instruction causes the high order bits that are shifted out of the register to be shifted into the low order bits of the register, the MC88110 processor does not support individually shifting each element in a packed data. As a result, programming algorithms which require individually shifting each element in a packed data type requires: 1) unpacking the data, 2) performing a shift on each element individually, and 3) packing the results into a result packed data for further packed data processing.

## SUMMARY OF THE INVENTION

A method and apparatus for including in a processor a set of packed data instructions that support the operations required by typical multimedia applications is described. In one embodiment, the invention includes a processor and a storage area. The storage area contains a number of instructions for execution by the processor to manipulate packed data. In this embodiment, these instructions include pack, unpack, packed add, packed subtract, packed multiply, packed shift, and packed compare.

The processor packs a portion of the bits from data elements in at least two packed data to form a third packed data in response to receiving the pack instruction. In contrast, the processor generates a fourth packed data containing at least one data element from a first packed data operand and at least one corresponding data element from a second packed data operand in response to receiving the unpack instruction.

The processor separately adds together in parallel corresponding data elements from at least two packed data in response to receiving the packed add instruction. In contrast, the processor separately subtracts in parallel corresponding data elements from at least two packed data in response to receiving the packed subtract instruction.

The processor separately multiplies together in parallel corresponding data elements from at least two packed data in response to receiving the packed multiply instruction.

The processor separately shifts in parallel each of the data elements in a packed data operand by an indicated count in response to receiving the packed shift instruction.

The processor separately compares in parallel corresponding data elements from at least two packed data according to an indicated relationship and stores as a result a packed mask in a first register in response to receiving the packed compare instruction. The packed mask contains at least a first mask element and a second mask element. Each bit in the first mask element indicates the result of comparing one set of corresponding data elements, while each bit in the second mask element indicates the result of comparing a second set of data elements.

## BRIEF DESCRIPTION OF THE DRAWINGS

The invention is illustrated by way of example, and not limitation, in the figures. Like references indicate similar elements.

Figure 1 illustrates an exemplary computer system according to one embodiment of the invention.
Figure 2 illustrates a register file of the processor according to one embodiment of the invention.
Figure 3 is a flow diagram illustrating the general steps used by the processor to manipulate data according to one embodiment of the invention.
Figure 4 illustrates packed data-types according to one embodiment of the invention.
Figure 5a illustrates in-register packed data representations according to one embodiment of the invention.
Figure 5b illustrates in-register packed data representations according to one embodiment of the invention.
Figure 5c illustrates in-register packed data representations according to one embodiment of the invention.
Figure 6a illustrates a control signal format for indicating the use of packed data according to one embodiment of the invention.
Figure 6b illustrates a second control signal format for indicating the use of packed data according to one embodiment of the invention.

*PACKED ADD/SUBTRACT*

Figure 7a illustrates a method for performing packed addition according to one embodiment of the invention.

Figure 7b illustrates a method for performing packed subtraction according to one embodiment of the invention.

Figure 8 illustrates a circuit for performing packed addition and packed subtraction on individual bits of packed data according to one embodiment of the invention.

Figure 9 illustrates a circuit for performing packed addition and packed subtraction on packed byte data according to one embodiment of the invention.

Figure 10 is a logical view of a circuit for performing packed addition and packed subtraction on packed word data according to one embodiment of the invention.

Figure 11 is a logical view of a circuit for performing packed addition and packed subtraction on packed doubleword data according to one embodiment of the invention.

PACKED MULTIPLY

Figure 12 is a flow diagram illustrating a method for performing packed multiplication operations on packed data according to one embodiment of the invention.
Figure 13 illustrates a circuit for performing packed multiplication according to one embodiment of the invention.

MULTIPLY-ADD/SUBTRACT

Figure 14 is a flow diagram illustrating a method for performing multiply-add and multiply-subtract operations on packed data according to one embodiment of the invention.

Figure 15 illustrates a circuit for performing multiply-add and/or multiply-subtract operations on packed data according to one embodiment of the invention.

PACKED SHIFT

Figure 16 is a flow diagram illustrating a method for performing a packed shift operation on packed data according to one embodiment of the invention.
Figure 17 illustrates a circuit for performing a packed shift on individual bytes of packed data according to one embodiment of the invention.

PACK

Figure 18 is a flow diagram illustrating a method for performing pack operations on packed data according to one embodiment of the invention.
Figure 19a illustrates a circuit for performing pack operations on packed byte data according to one embodiment of the invention.
Figure 19b illustrates a circuit for performing pack operations on packed word data according to one embodiment of the invention.

UNPACK

Figure 20 is a flow diagram illustrating a method for performing unpack operations on packed data according to one embodiment of the invention.
Figure 21 illustrates a circuit for performing unpack operations on packed data according to one embodiment of the invention.

POPULATION COUNT

Figure 22 is a flow diagram illustrating a method for performing a population count operation on packed data according to one embodiment of the invention.

Figure 23 is a flow diagram illustrating a method for performing a population count operation on one data element of a packed data and generating a single result data element for a result packed data according to one embodiment of the invention.

Figure 24 illustrates a circuit for performing a population count operation on packed data having four word data elements according to one embodiment of the invention.

Figure 25 illustrates a detailed circuit for performing a population count operation on one word data element of a packed data according to one embodiment of the invention.

*PACKED LOGICAL OPERATIONS*

Figure 26 is a flow diagram illustrating a method for performing a number of logical operations on packed data according to one embodiment of the invention.

Figure 27 illustrates a circuit for performing logical operations on packed data according to one embodiment of the invention.

*PACKED COMPARE*

Figure 28 is a flow diagram illustrating a method for performing packed compare operations on packed data according to one embodiment of the invention.

Figure 29 illustrates a circuit for performing packed compare operations on individual bytes of packed data according to one embodiment of the invention.

DETAILED DESCRIPTION

This application describes a method and apparatus for including in a processor a set of instructions that support the operations on packed data required by typical multimedia applications. In the following description, numerous specific details are set forth to provide a thorough understanding of the invention. However, it is understood that the invention may be practiced without these specific details. In other instances, well-known circuits, structures and techniques have not been shown in detail in order not to unnecessarily obscure the invention.

DEFINITIONS

To provide a foundation for understanding the description of the embodiments of the invention, the following definitions are provided.

Bit X through Bit Y: defines a subfield of binary number. For example, bit six through bit zero of the byte $00111010_2$ (shown in base two) represent the subfield $111010_2$. The '$_2$' following a binary number indicates base 2. Therefore, $1000_2$ equals $8_{10}$, while $F_{16}$ equals $15_{10}$.

$R_X$: is a register. A register is any device capable of storing and providing data. Further functionality of a register is described below. A register is not necessarily part of the processor's package.

SRC1, SRC2, and DEST: identify storage areas (e.g., memory addresses, registers, etc.)

Sourcel-i and Resultl-i: represent data.

COMPUTER SYSTEM

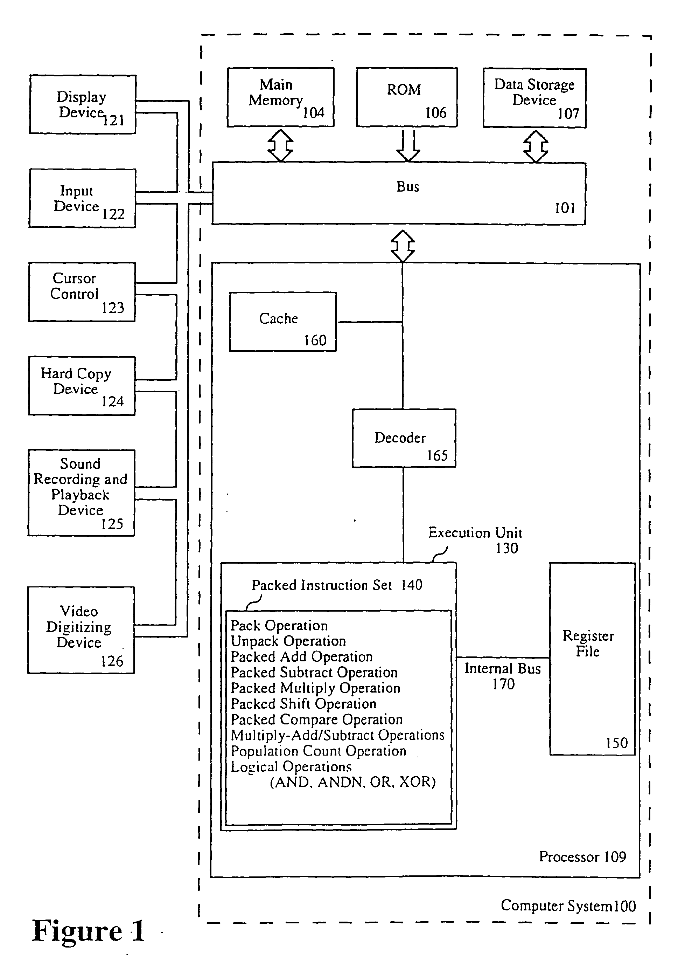

Figure 1 illustrates an exemplary computer system 100 according to one embodiment of the invention. Computer system 100 includes a bus 101, or other communications hardware and software, for communicating information, and a processor 109 coupled with bus 101 for processing information. Processor 109 represents a central processing unit of any type of architecture, including a CISC or RISC type architecture. Computer system 100 further includes a random access memory (RAM) or other dynamic storage device (referred to as main memory 104), coupled to bus 101 for storing information and instructions to be executed by processor 109. Main memory 104 also may be used for storing temporary variables or other intermediate information during execution of instructions by processor 109. Computer system 100 also includes a read only memory (ROM) 106, and/or other static storage device, coupled to bus 101 for storing static information and instructions for processor 109. Data storage device 107 is coupled to bus 101 for storing information and instructions.

Figure 1 also illustrates that processor 109 includes an execution unit 130, a register file 150, a cache 160, a decoder 165, and an internal bus 170. Of course, processor 109 contains additional circuitry which is not shown so as to not obscure the invention.

Execution unit 130 is used for executing instructions received by processor 109. In addition to recognizing instructions typically implemented in general purpose processors, execution unit 130 recognizes instructions in packed instruction set 140 for performing operations on packed data formats. In one embodiment, packed instruction set 140 includes instructions for supporting pack operation(s), unpack operation(s), packed add operation(s), packed subtract operation(s), packed multiply operation(s), packed shift operation(s), packed compare operation(s), multiply-add operation(s), multiply-subtract operation(s), population count operation(s), and a set of packed logical operations (including packed AND, packed ANDNOT, packed OR, and packed XOR) in the manner later described herein. While one embodiment is described in which packed instruction set 140 includes these instructions, alternative embodiment may contain a subset or a super-set of these instructions.

By including these instructions, the operations required by many of the algorithms used in multimedia applications may be performed using packed data. Thus, these algorithms may be written to pack the necessary data and perform the necessary operations on the packed data, without requiring the packed data to be unpacked to perform one or more operations one data element at a time. As previously described, this provides performance advantages over prior art general purpose processors that do not support the packed data operations required by certain multimedia algorithms -- i.e., if a multimedia algorithm requires an operation that cannot be performed on packed data, the program must unpack the data, perform the operation on the separate elements individually, and then pack the results into a packed result for further packed processing. In addition, the disclosed manner in which several of these instructions are performed improves the performance of many multimedia applications.

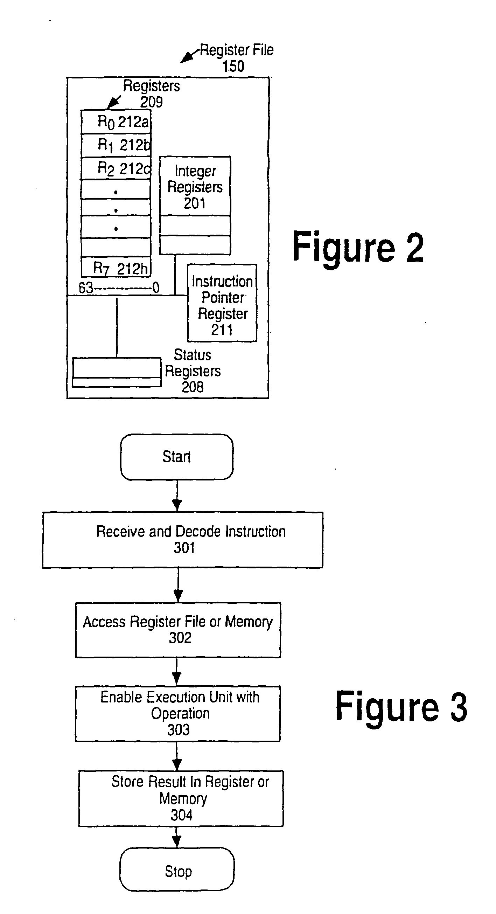

Execution unit 130 is coupled to register file 150 by internal bus 170. Register file 150 represents a storage area on processor 109 for storing information, including data. It is understood that one aspect of the invention is the described instruction set for operating on packed data. According to this aspect of the invention, the storage area used for storing the packed data is not critical. However, one embodiment of the register file 150 is later described with reference to Figure 2. Execution unit 130 is coupled to cache 160 and decoder 165. Cache 160 is used to cache data and/or control signals from, for example, main memory 104. Decoder 165 is used for decoding instructions received by processor 109 into control signals and/or microcode entry points. In response to these control signals and/or microcode entry points, execution unit 130 performs the appropriate operations. For example, if an add instruction is received, decoder 165 causes execution unit 130 to perform the required addition; if a subtract instruction is received, decoder 165 causes execution unit 130 to perform the required subtraction; etc. Decoder 165 may be implemented using any number of different mechanisms (e.g., a look-up table, a hardware implementation, a PLA, etc.). Thus, while the execution of the various instructions by the decoder and execution unit is represented by a series of if/then statements, it is understood that the execution of an instruction does not require a serial processing of these if/then statements. Rather, any mechanism for logically performing this if/then processing is considered to be within the scope of the invention.

Figure 1 additionally shows a data storage device 107, such as a magnetic disk or optical disk, and its corresponding disk drive. Computer system 100 can also be coupled via bus 101 to a display device 121 for displaying information to a computer user. Display device 121 can include a frame buffer, specialized graphics rendering devices, a cathode ray tube (CRT), and/or a flat panel display. An alphanumeric input device 122, including alphanumeric and other keys, is typically coupled to bus 101 for communicating information and command selections to processor 109. Another type of user input device is cursor control 123, such as a mouse, a trackball, a pen, a touch screen, or cursor direction keys for communicating direction information and command selections to processor 109, and for controlling cursor movement on display device 121. This input device typically has two degrees of freedom in two axes, a first axis (e.g., x) and a second axis (e.g., y), which allows the device to specify positions in a plane. However, this invention should not be limited to input devices with only two degrees of freedom.

Another device which may be coupled to bus 101 1 is a hard copy device 124 which may be used for printing instructions, data, or other information on a medium such as paper, film, or similar types of media. Additionally, computer system 100 can be coupled to a device for sound recording, and/or playback 125, such as an audio digitizer coupled to a microphone for recording information. Further, the device may include a speaker which is coupled to a digital to analog (D/A) convener for playing back the digitized sounds.

Also, computer system 100 can be a terminal in a computer network (e.g., a LAN). Computer system 100 would then be a computer subsystem of a computer network. Computer system 100 optionally includes video digitizing device 126. Video digitizing device 126 can be used to capture video images that can be transmitted to others on the computer network.

In one embodiment, the processor 109 additionally supports an instruction set which is compatible with the x86 instruction set (the instruction set used by existing microprocessors, such as the Pentium® processor, manufactured by Intel Corporation of Santa Clara, California). Thus, in one embodiment, processor 109 supports all the operations supported in the IA™ - Intel Architecture, as defined by Intel Corporation of Santa Clara, California (see Microprocessors, Intel Data. Books volume I and volume 2, 1992 and 1993, available from Intel of Santa Clara, California). As a result, processor 109 can support existing x86 operations in addition to the operations of the invention. While the invention is described as being incorporated into an x86 based instruction set, alternative embodiments could incorporate the invention into other instruction sets. For example, the invention could be incorporated into a 64-bit processor using a new instruction set.

Figure 2 illustrates the register file of the processor according to one embodiment of the invention. The register file 150 is used for storing information, including control/status information, integer data, floating point data, and packed data. In the embodiment shown in Figure 2, the register file 150 includes integer registers 201, registers 209, status registers 208, and instruction pointer register 211. Status registers 208 indicate the status of processor 109. Instruction pointer register 211 stores the address of the next instruction to be executed. Integer registers 201, registers 209, status registers 208, and instruction pointer register 211 are all coupled to internal bus 170. Any additional registers would also be coupled to internal bus 170.

In one embodiment, the registers 209 are used for both packed data and floating point data. In one such embodiment, the processor 109, at any given time, must treat the registers 209 as being either stack referenced floating point registers or non-stack referenced packed data registers. In this embodiment, a mechanism is included to allow the processor 109 to switch between operating on registers 209 as stack referenced floating point registers and non-stack referenced packed data registers. In another such embodiment, the processor 109 may simultaneously operate on registers 209 as non-stack referenced floating point and packed data registers. As another example, in another embodiment, these same registers may be used for storing integer data.

Of course, alternative embodiments may be implemented to contain more or less sets of registers. For example, an alternative embodiment may include a separate set of floating point registers for storing floating point data. As another example, an alternative embodiment may including a first set of registers, each for storing control/status information, and a second set of registers, each capable of storing integer, floating point, and packed data. As a matter of clarity, the registers of an embodiment should not be limited in meaning to a particular type of circuit. Rather, a register of an embodiment need only be capable of storing and providing data, and performing the functions described herein.

The various sets of registers (e.g., the integer registers 201, the registers 209) may be implemented to include different numbers of registers and/or to different size registers. For example, in one embodiment, the integer registers 201 are implemented to store thirty-two bits, while the registers 209 are implemented to store eighty bits (all eighty bits are used for storing floating point data, while only sixty-four are used for packed data). In addition, registers 209 contains eight registers, $R_0$ 212a through $R_7$ 212h. $R_1$ 212a, $R_2$ 212b and $R_3$ 212c are examples of individual registers in registers 209. Thirty-two bits of a register in registers 209 can be moved into an integer register in integer registers 201. Similarly, a value in an integer register can be moved into thirty-two bits of a register in registers 209. In another embodiment, the integer registers 201 each contain 64 bits, and 64 bits of data may be moved between the integer register 201 and the registers 209.

Figure 3 is a flow diagram illustrating the general steps used by the processor to manipulate data according to one embodiment of the invention. For example, such operations include a load operation to load a register in register file 150 with data from cache 160, main memory 104, read only memory (ROM) 106, or data storage device 107.

At step 301, the decoder 202 receives a control signal 207 from either the cache 160 or bus 101. Decoder 202 decodes the control signal to determine the operations to be performed.

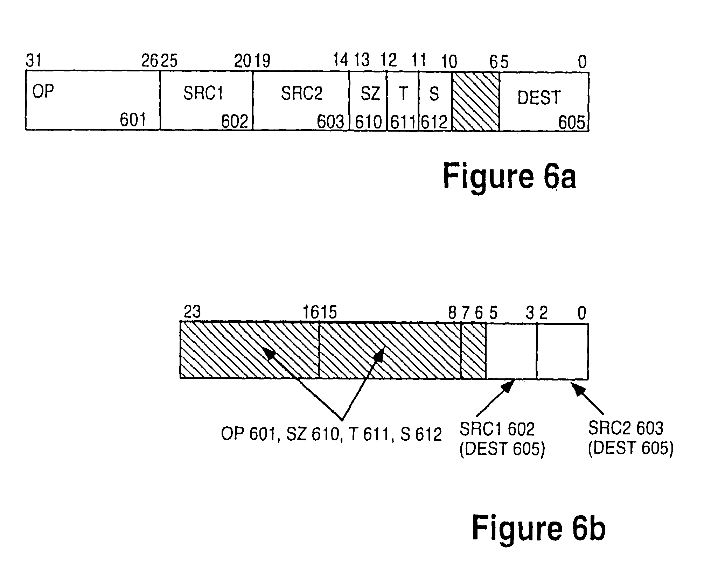

At step 302, Decoder 202 accesses the register file 150, or a location in memory. Registers in the register file 150, or memory locations in the memory, are accessed depending on the register address specified in the control signal 207. For example, for an operation on packed data, control signal 207 can include SRC1, SRC2 and DEST register addresses. SRC1 is the address of the first source register. SRC2 is the address of the second source register. In some cases, the SRC2 address is optional as not all operations require two source addresses, If the SRC2 address is not required for an operation, then only the SRC1 address is used. DEST is the address of the destination register where the result data is stored. In one embodiment, SRC1 or SRC2 is also used as DEST. SRC1, SRC2 and DEST are described more fully in relation to Figure 6a and Figure 6b. The data stored in the corresponding registers is referred to as Source1, Source2, and Result respectively. Each of these data is sixty-four bits in length.

In another embodiment of the invention, any one, or all, of SRC1, SRC2 and DEST, can define a memory location in the addressable memory space of processor 109. For example, SRC1 may identify a memory location in main memory 104, while SRC2 identifies a first register in integer registers 201 and DEST identifies a second register in registers 209. For simplicity of the description herein, the invention will be described in relation to accessing the register file 150. However, these accesses could be made to memory instead.

At step 303, execution unit 130 is enabled to perform the operation on the accessed data. At step 304, the result is stored back into register file 150 according to requirements of control signal 207.

DATA AND STORAGE FORMATS

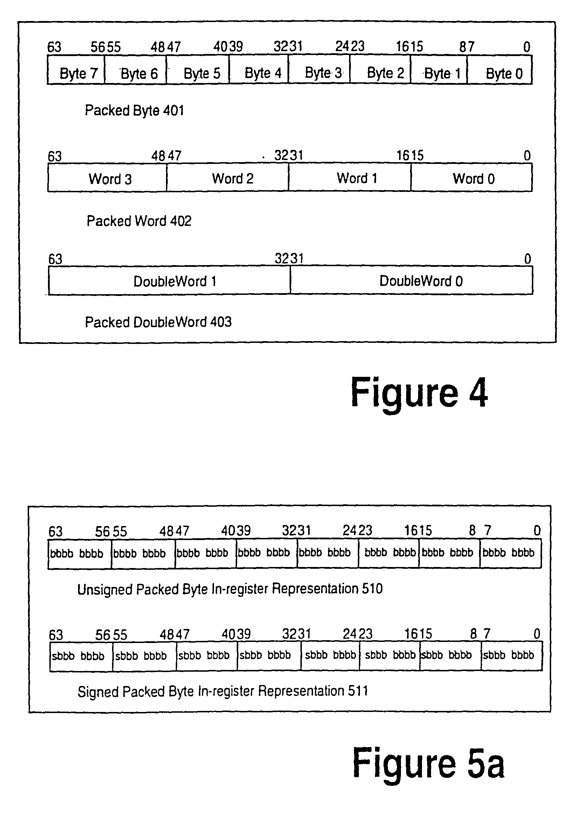

Figure 4 illustrates packed data-types according to one embodiment of the invention. Three packed data formats are illustrated; packed byte 401, packed word 402, and packed doubleword 403. Packed byte, in one embodiment of the invention, is sixty-four bits long containing eight data elements. Each data element is one byte long. Generally, a data element is an individual piece of data that is stored in a single register (or memory location) with other data elements of the same length. In one embodiment of the invention, the number of data elements stored in a register is sixty-four bits divided by the length in bits of a data element.

Packed word 402 is sixty-four bits long and contains four word 402 data elements. Each word 402 data element contains sixteen bits of information.

Packed doubleword 403 is sixty-four bits long and contains two doubleword 403 data elements. Each doubleword 403 data element contains thirty-two bits of information.

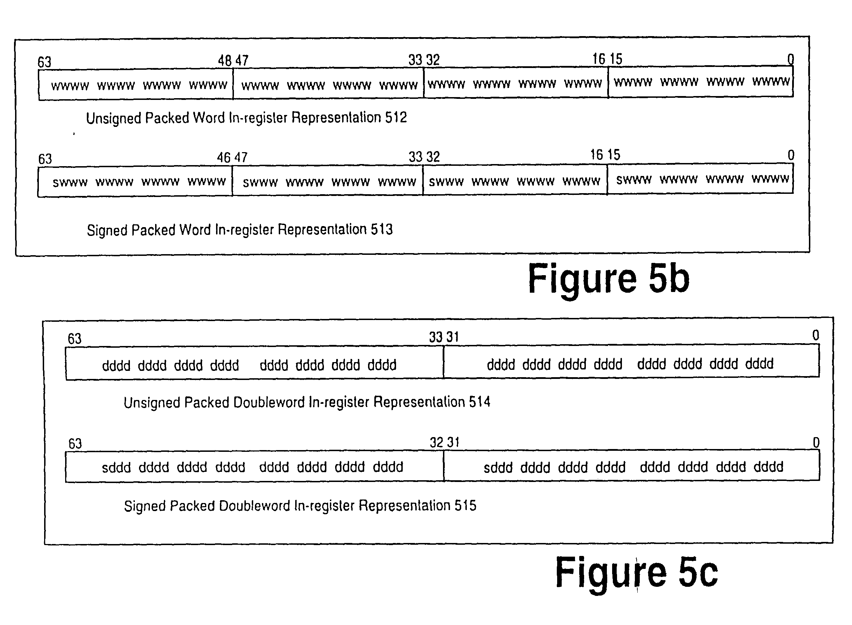

Figure 5a through 5c illustrate the in-register packed data storage representation according to one embodiment of the invention. Unsigned packed byte in-register representation 510 illustrates the storage of an unsigned packed byte 401 in one of the registers $R_0$ 212a through $R_7$ 212h. Information for each byte data element is stored in bit seven through bit zero for byte zero, bit fifteen through bit eight for byte one, bit twenty-three through bit sixteen for byte two, bit thirty-one through bit twenty-four for byte three, bit thirty-nine through bit thirty-two for byte four, bit forty-seven through bit forty for byte five, bit fifty-five through bit forty-eight for byte six and bit sixty-three through bit fifty-six for byte seven. Thus, all available bits are used in the register. This storage arrangement increases the storage efficiency of the processor. As well, with eight data elements accessed, one operation can now be performed on eight data elements simultaneously. Signed packed byte in-register representation 511 illustrates the storage of a signed packed byte 401. Note that only the eighth bit of every byte data element is necessary for the sign indicator.

Unsigned packed word in-register representation 512 illustrates how word three through word zero are stored in one register of registers 209. Bit fifteen through bit zero contain the data element information for word zero, bit thirty-one through bit sixteen contain the information for data element word one, bit forty-seven through bit thirty-two contain the information for data element word two and bit sixty-three through bit forty-eight contain the information for data element word three. Signed packed word in-register representation 513 is similar to the unsigned packed word in-register representation 512. Note that only the sixteenth bit of each word data element is the necessary for the sign indicator.

Unsigned packed doubleword in register representation 514 shows how registers 209 store two doubleword data elements. Doubleword zero is stored in bit thirty-one through bit zero of the register. Doubleword one is stored in bit sixty-three through bit thirty-two of the register. Signed packed doubleword in-register representation 515 is similar to unsigned packed doubleword in-register representation 514. Note that the necessary sign bit is the thirty-second bit of the doubleword data element.

As mentioned previously, registers 209 may be used for both packed data and floating point data. In this embodiment of the invention, the individual programming processor 109 may be required to track whether an addressed register, $R_0$ 212a for example, is storing packed data or floating point data. In an alternative embodiment, processor 109 could track the type of data stored in individual registers of registers 209. This alternative embodiment could then generate errors if, for example, a packed addition operation were attempted on floating point data.

CONTROL SIGNAL FORMATS

The following describes one embodiment of control signal formats used by processor 109 to manipulate packed data. In one embodiment of the invention, control signals are represented as thirty-two bits. Decoder 202 may receive control signal 207 from bus 101. In another embodiment, decoder 202 can also receive such control signals from cache 160.

Figure 6a illustrates a control signal format for indicating the use of packed data according to one embodiment of the invention. Operation field OP 601, bit thirty-one through bit twenty-six, provides information about the operation to be performed by processor 109; for example, packed addition, packed subtraction, etc.. SRC1 602, bit twenty-five through twenty, provides the source register address of a register in registers 209. This source register contains the first packed data, Source1, to be used in the execution of the control signal. Similarly, SRC2 603, bit nineteen through bit fourteen, contains the address of a register in registers 209. This second source register contains the packed data, Source2, to be used during execution of the operation. DEST 605, bit five through bit zero, contains the address of a register in registers 209. This destination register will store the result packed data, Result, of the packed data operation.

Control bits SZ 610, bit twelve and bit thirteen, indicates the length of the data elements in the first and second packed data source registers. If SZ 610 equals $01_2$, then the packed data is formatted as packed byte 401. If SZ 610 equals $10_2$, then the packed data is formatted as packed word 402. SZ 610 equaling $00_2$ or $11_2$ is reserved, however, in another embodiment, one of these values could be used to indicate packed doubleword 403.

Control bit T 611, bit eleven, indicates whether the operation is to be carried out with saturate mode. If T 611 equals one, then a saturating operation is performed. If T 611 equals zero, then a non-saturating operation is performed. Saturating operations will be described later.

Control bit S 612, bit ten, indicates the use of a signed operation. If S 612 equals one, then a signed operation is performed. If S 612 equals zero, then an unsigned operation is performed.

Figure 6b illustrates a second control signal format for indicating the use of packed data according to one embodiment of the invention. This format corresponds with the general integer opcode format described in the "Pentium Processor Family User's Manual," available from Intel Corporation, Literature Sales, P.O. Box 7641, Mt. prospect, IL, 60056-7641. Note that OP 601, SZ 610, T 611, and S 612 are all combined into one large field. For some control signals, bits three through five are SRC1 602. In one embodiment, where there is a SRC1 602 address, then bits three through five also correspond to DEST 605. In an alternate embodiment, where there is a SRC2 603 address, then bits zero through two also correspond to DEST 605. For other control signals, like a packed shift immediate operation, bits three through five represent an extension to the opcode field. In one embodiment, this extension allows a programmer to include an immediate value with the control signal, such as a shift count value. In one embodiment, the immediate value follows the control signal. This is described in more detail in the "Pentium Processor Family User's Manual," in appendix F, pages F-1 through F-3. Bits zero through two represent SRC2 603. This general format allows register to register, memory to register, register by memory, register by register, register by immediate, register to memory addressing. Also, in one embodiment, this general format can support integer register to register, and register to integer register addressing.

DESCRIPTION OF SATURATE/UNSATURATE

As mentioned previously, T 611 indicates whether operations optionally saturate. Where the result of an operation, with saturate enabled, overflows or underflows the range of the data, the result will be clamped. Clamping means setting the result to a maximum or minimum value should a result exceed the range's maximum or minimum value. In the case of underflow, saturation clamps the result to the lowest value in the range and in the case of overflow, to the highest value. The allowable range for each data format is shown in Table 7.

Table 7

| Data Format | Minimum Value | Maximum Value |
|---|---|---|
| Unsigned Byte | 0 | 255 |
| Signed Byte | -128 | 127 |
| Unsigned Word | 0 | 65535 |
| Signed Word | -32768 | 32767 |
| Unsigned Doubleword | 0 | $2^{64}-1$ |
| Signed Doubleword | $-2^{63}$ | $2^{63}-1$ |

As mentioned above, T 611 indicates whether saturating operations are being performed. Therefore, using the unsigned byte data format, if an operation's result = 258 and saturation was enabled, then the result would be clamped to 255 before being stored into the operation's destination register. Similarly, if an operation's result = -32999 and processor 109 used signed word data format with saturation enabled, then the result would be clamped to -32768 before being stored into the operation's destination register.

*PACKED ADDITION*

PACKED ADDITION OPERATION

One embodiment of the invention enables packed addition operations to be performed in Execution unit 130. That is, the invention enables each data element of a first packed data to be added individually to each data element of a second packed data.

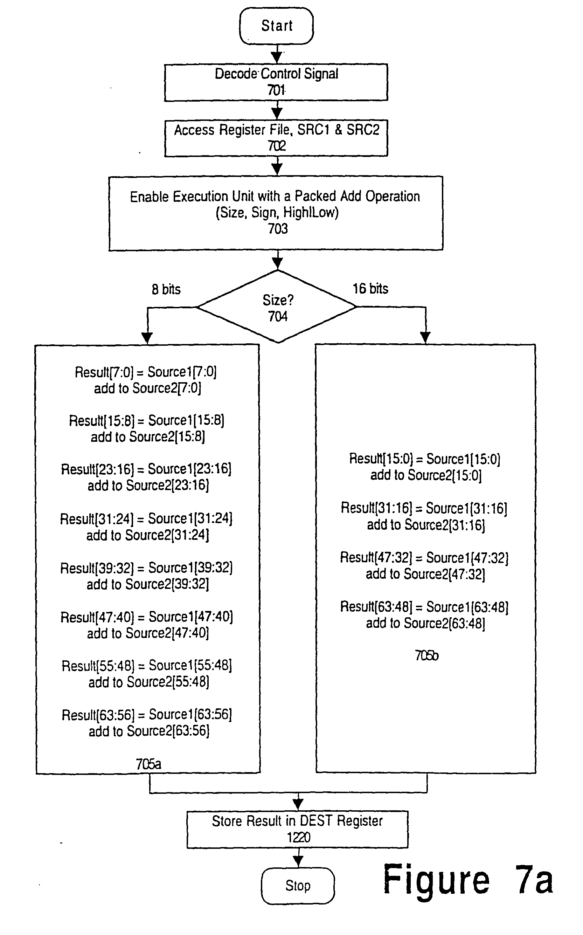

Figure 7a illustrates a method for performing packed addition according to one embodiment of the invention. At step 701, decoder 202 decodes control signal 207 received by processor 109. Thus, decoder 202 decodes: the operation code for packed addition; SRC1 602, SRC2 603 and DEST 605 addresses in registers 209; saturate/unsaturace, signed/unsigned, and length of the data elements in the packed data. At step 702, via internal bus 170, decoder 202 accesses registers 209 in register file 150 given the SRC1 602 and SRC2 603 addresses. Registers 209 provides Execution unit 130 with the packed data stored in the registers at these addresses, Source1 and Source2 respectively. That is, registers 209 communicate the packed data to Execution unit 130 via internal bus 170.

At step 703, decoder 202 enables Execution unit 130 to perform a packed addition operation. Decoder 202 further communicates, via internal bus 170, the length of packed data elements, whether saturation is to be used, and whether signed arithmetic is to be used. At step 704, the length of the data element determines which step is to be executed next. If the length of the data elements in the packed data is eight bits (byte data), then Execution unit 130 performs step 705a. However, if the length of the data elements in the packed data is sixteen bits (word data), then Execution unit 130 performs step 705b. In one embodiment of the invention, only eight bit and sixteen bit data element length packed addition is supported. However, alternative embodiments can support different and/or other lengths. For example, an alternative embodiment could additionally support thirty-two bit data element length packed addition.

Assuming the length of the data elements is eight bits, then step 705a is executed. Execution unit 130 adds bit seven through bit zero of Source1 to bit seven through bit zero of SRC2, producing bit seven through bit zero of Result packed data. In parallel with this addition, Execution unit 130 adds bit fifteen through bit eight of Source1 to bit fifteen through bit eight of Source2, producing bit fifteen through bit eight of Result packed data. In parallel with these additions, Execution unit 130 adds bit twenty-three through bit sixteen of Source1 to bit twenty-three through bit sixteen of Source2, producing bit twenty-three through bit sixteen of Result packed data. In parallel with these additions, Execution unit 130 adds bit thirty-one through bit twenty-four of Source1 to bit thirty-one through bit twenty-four of Source2, producing bit thirty-one through bit twenty four of Result packed data. In parallel with, these additions. Execution unit 130 adds bit thirty-nine through bit thirty-two of Source1 to bit thirty-nine through bit thirty-two of Source2, producing bit thirty-nine through bit thirty-two of Result packed data. In parallel with these additions, Execution unit 130 adds bit forty-seven through bit forty of Source1 to bit forty-seven through bit forty of Source2, producing bit forty-seven through bit forty of Result packed data. In parallel with these additions, Execution unit 130 adds bit fifty-five through bit forty-eight of Source1 to bit fifty-five through-bit forty-eight of Source2, producing bit fifty-five through bit forty-eight of Result packed data. In parallel with these additions, Execution unit 130 adds bit sixty-three through bit fifty-six of Source1 to bit sixty-three through bit fifty-six of Source2, producing bit sixty-three through bit fifty-six of Result packed data.

Assuming the length of the data elements is sixteen bits, then step 705b is executed. Execution unit 130 adds bit fifteen through bit zero of Source1 to bit fifteen through bit zero of SRC2, producing bit fifteen through bit zero of Result packed data. In parallel with this addition, Execution unit 130 adds bit thirty-one through bit sixteen of Source1 to bit thirty-one through bit sixteen of Source2, producing bit thirty-one through bit sixteen of Result packed data. In parallel with these additions, Execution unit 130 adds bit forty-seven through bit thirty-two of Source1 to bit forty-seven through bit thirty-two of Source2, producing bit forty-seven through bit thirty-two of Result packed data. In parallel with these additions, Execution unit 130 adds bit sixty-three through bit forty-eight of Source1 to bit sixty-three through bit forty-eight of Source2, producing bit sixty-three through bit forty-eight of Result packed data.

At step 706. decoder 202 enables a register in registers 209 with DEST 605 address of the destination register. Thus, the Result is stored in the register addressed by DEST 605.

Table 8a illustrates the in-register representation of packed addition operation. The first row of bits is the packed data representation of a Source1 packed data. The second row of bits is the packed data representation of a Source2 packed data. The third row of bits is the packed data representation of the Result packed data. The number below each data element bit is the data element number. For example, Source1 data element 0 is $10001000_2$. Therefore, if the data elements are eight bits in length (byte data), and unsigned, unsaturated addition is performed, the Execution unit 130 produces the Result packed data as shown.

Note that in one embodiment of the invention, where a result overflows or underflows and the operation is using unsaturate, that result is simply truncated. That is, the carry bit is ignored. For example, in Table 8a, the in-register representation of result data element one would be: $10001000_2 + 10001000_2 = 00001000_2$. Similarly, for underflows, the result is truncated. This form of truncation enables a programmer to easily perform module arithmetic. For example, an equation for result data element one can be expressed as: (Source1 data element one + Source2 data element one) mod 256 = result data element one. Further, one skilled in the art would understand from this description that overflows and underflows could be detected by setting error bits in a status register.

| 00101010 | 01010101 | 01010101 | 11111111 | 10000000 | 01110000 | 10001111 | 10001000 |
|---|---|---|---|---|---|---|---|
| $+ \quad 7$ | $+ \quad 6$ | $+$ 5 | $+ \quad 4$ | $+ \quad 3$ | $+$ 2 | $+ \quad 1$ | $+ \quad 0$ |
| 10101010 | 01010101 | 10101010 | 10000001 | 10000000 | 11110000 | 11001111 | 10001000 |
| $= \quad 7$ | $= \quad 6$ | $=$ 5 | $= \quad 4$ | $= \quad 3$ | $=$ 2 | $= \quad 1$ | $= \quad 0$ |
| 11010100 7 | 10101010 6 | 11111111 5 | Overflow 4 | Overflow 3 | Overflow 2 | Overflow 1 | Overflow 0 |

### Table 8a

Table 8b illustrates the in-register representation of a packed word data addition operation. Therefore, if the data elements are sixteen bits in length (word data), and unsigned, unsaturated addition is performed, the Execution unit 130 produces the Result packed data as shown. Note that in word data element two, the carry from bit seven (see emphasized bits *1* below) propagated into bit eight, causing data element two to overflow (see emphasized *overflow* below).

| 00101010 01010101 | 01010101 *11111111* | 10000000 01110000 | 10001111 10001000 |
|---|---|---|---|
| $+$ 3 | $+$ 2 | $+$ 1 | $+$ 0 |
| 10101010 01010101 | 10101010 *10000001* | 10000000 11110000 | 11001111 10001000 |
| $=$ 3 | $=$ 2 | $=$ 1 | $=$ 0 |
| 11010100 10101010 3 | *Overflow* 2 | Overflow 1 | Overflow 0 |

### Table 8b

Table 8c illustrates the in-register representation of packed doubleword data addition operation. This operation is supported in an alternative embodiment of the invention. Therefore, if the data elements are thirty-two bits in length (i.e., doubleword data), and unsigned, unsaturated addition is performed, the Execution unit 130 produces the Result packed data as shown. Note that carries from bit seven and bit fifteen of doubleword data element one propagated into bit eight and bit sixteen respectively.

| 00101010  01010101  01010101  11111111 | 10000000  01110000  10001111  10001000 |
|---|---|
| *L* + | *Q* + |
| 10101010  01010101  10101010  10000001 | 10000000  11110000  11001111  10001000 |
| *L* = | *Q* = |
| 11010100  10101011  00000000  10000000 | Overflow |
| *I* | *0* |

### Table 8c

To better illustrate the difference between packed addition and ordinary addition, the data from the above example is duplicated in Table 9. However, in this case, ordinary addition (sixty-four bit) is performed on the data. Note that the carries from bit seven, bit fifteen, bit twenty-three, bit thirty-one, bit thirty-nine and bit forty-seven have been carried into bit eight, bit sixteen, bit twenty-four, bit thirty-two, bit forty and bit forty-eight respectively.

| 00101010  01010101  01010101  11111111  10000000  01110000  10001111  10001000 |
|---|
| ± |
| 10101010  01010101  10101010  10000001  10000000  11110000  11001111  10001000 |
| = |
| 11010100  10101011  00000000  10000001  00000001  01100001  01011111  00010000 |

### Table 9

SIGNED/UNSATURATE PACKED ADDITION

Table 10 illustrates an example of a signed packed addition where the data element length of the packed data is eight bits. Saturation is not used. Therefore, results can overflow and underflow. Table 10 uses different data than Tables 8a-8c and Table 9.

| 00101010 | 01010101 | 01010101 | 01111111 | 00000000 | 11110000 | 00001111 | 10001000 |
|---|---|---|---|---|---|---|---|
| $+\ \underline{7}$ | $+\ \underline{6}$ | $\underline{+}\atop 5$ | $+\ \underline{4}$ | $+\ \underline{3}$ | $\underline{+}\atop 2$ | $+\ \underline{1}$ | $+\ \underline{0}$ |
| 10101010 | 01010101 | 10101010 | 00000001 | 00000000 | 11110000 | 00001111 | 10001000 |
| $=\ \underline{7}$ | $=\ \underline{6}$ | $\underline{=}\atop 5$ | $=\ \underline{4}$ | $=\ \underline{3}$ | $\underline{=}\atop 2$ | $=\ \underline{1}$ | $=\ \underline{0}$ |
| 11010100 | Overflow | 11111111 | Overflow | 00000000 | Underflow | 00011110 | Underflow |
| 7 | 6 | 5 | 4 | 3 | 2 | 1 | 0 |

## Table 10

### SIGNED/SATURATE PACKED ADDITION

Table 11 illustrates an example of a signed packed addition where the data element length of the packed data is eight bits. Saturate is used, therefore, overflow will be clamped to the maximum value, and underflow will be clamped to the minimum value. Table 11 uses the same data as Table 10. Here data element zero and data element two are clamped to the minimum value, while data element four and data element six are clamped to the maximum value.

| 00101010 | 01010101 | 01010101 | 01111111 | 00000000 | 11110000 | 00001111 | 10001000 |
|---|---|---|---|---|---|---|---|
| $+\ \underline{7}$ | $+\ \underline{6}$ | $\underline{+}\atop 5$ | $+\ \underline{4}$ | $+\ \underline{3}$ | $\underline{+}\atop 2$ | $+\ \underline{1}$ | $+\ \underline{0}$ |
| 10101010 | 01010101 | 10101010 | 00000001 | 00000000 | 11110000 | 00001111 | 10001000 |
| $=\ \underline{7}$ | $=\ \underline{6}$ | $\underline{=}\atop 5$ | $=\ \underline{4}$ | $=\ \underline{3}$ | $\underline{=}\atop 2$ | $=\ \underline{1}$ | $=\ \underline{0}$ |
| 11010100 | 01111111 | 11111111 | 01111111 | 00000000 | 10000000 | 00011110 | 10000000 |
| 7 | 6 | 5 | 4 | 3 | 2 | 1 | 0 |

## Table 11

*PACKED SUBTRACTION*

PACKED SUBTRACTION OPERATION

One embodiment of the invention enables packed subtraction operations to be performed in Execution unit 130. That is, the invention enables each data element of a second packed data to be subtracted individually from each data element of a first packed data.

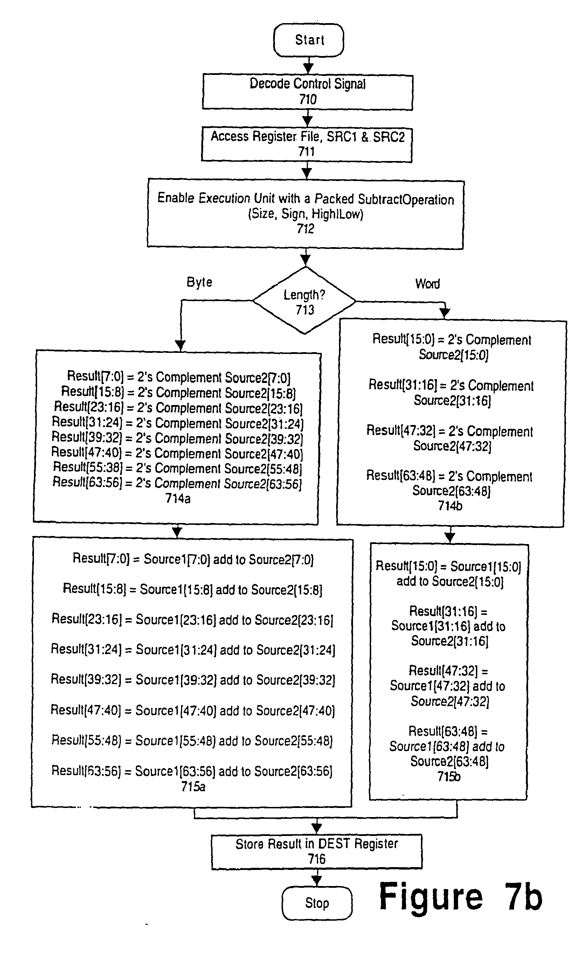

Figure 7b illustrates a method for performing packed subtraction according to one embodiment of the invention. Note that steps 710-713 are similar to steps 701-704.

In the present embodiment of the invention, only eight bit and sixteen bit data element length packed subtraction is supported. However, alternative embodiments can support different and/or other lengths. For example, an alternative embodiment could additionally support, thirty-two bit data element length packed subtraction.

Assuming data element length is eight bits, steps 714a and 715a are executed. Execution unit 130 2's complements bit seven through bit zero of Source2. In parallel with this 2's complement, Execution unit 130 2's complements bit fifteen through bit eight of Source2. In parallel with these 2's complements, Execution unit 130 2's complements bit twenty-three through bit sixteen of Source2. In parallel with these 2's complements, Execution unit 130 2's complements bit thirty-one through bit twenty-four of Source2. In parallel with these 2's complements, Execution unit 130 2's complements bit thirty-nine through bit thirty-two of Source2. In parallel with these 2's complements, Execution unit 130 2's complements bit forty-seven through bit forty of Source2. In parallel with these 2's complements, Execution unit 130 2's complements bit fifty-five through bit forty-eight of Source2. In parallel with these 2's complements, Execution unit 130 2's complements bit sixty-three through bit fifty-six of Source2. At step 715a, Execution unit 130 performs the addition of the 2's complemented bits of Source2 to the bits of Source1 as generally described for step 705a.

Assuming data element length is sixteen bits, steps 714b and 715b are executed. Execution unit 130 2's complements bit fifteen through bit zero of Source2. In parallel with this 2's complement, Execution unit 130 2's complements bit thirty-one through bit sixteen of Source2. In parallel with these 2's complements, Execution unit 130 2's complements bit forty-seven through bit thirty-two of Source2. In parallel with these 2's complements, Execution unit 130 2's complements bit sixty-three through bit forty-eight of Source2. At step 715b, Execution unit 130 performs the addition of the 2's complemented bits of Source2 to the bits of Source1 as generally described for step 705b.

Note that steps 714 and 715 are the method used in one embodiment of the invention to subtract a first number from a second number. However, other forms of subtraction are known in the art and this invention should not be considered limited to using 2's complement arithmetic.

At step 716, decoder 202 enables registers 209 with the destination address of the destination register. Thus, the result packed data is stored in the DEST register of registers 209.

Table 12 illustrates the in-register representation of packed subtraction operation. Assuming the data elements are eight bits in length (byte data), and unsigned, unsaturated subtraction is performed, then Execution unit 130 produces the result packed data as shown.

| 00101010 | 01010101 | 01010101 | 01111111 | 00000000 | 11110000 | 00001111 | 10001000 |
| $-7$ | $-6$ | $-5$ | $-4$ | $-3$ | $-2$ | $-1$ | $-0$ |
| 10101010 | 01010101 | 10101010 | 00000001 | 00000000 | 11110000 | 00001111 | 10001000 |
| $=7$ | $=6$ | $=5$ | $=4$ | $=3$ | $=2$ | $=1$ | $=0$ |
| Underflow | 00000000 | Underflow | 01111110 | 00000000 | 00000000 | 00000000 | 00000000 |
| 7 | 6 | 5 | 4 | 3 | 2 | 1 | 0 |

### Table 12

### PACKED DATA ADDITION/SUBTRACTION CIRCUITS

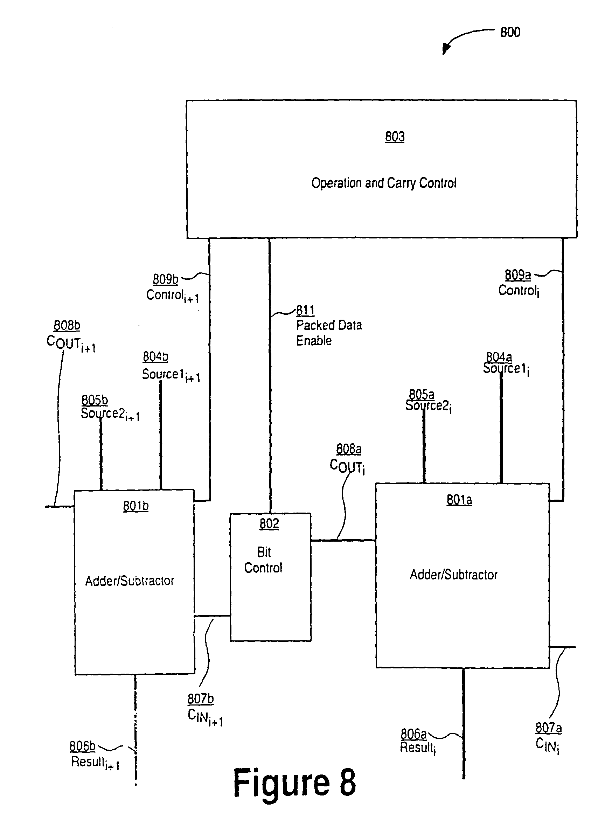

Figure 8 illustrates a circuit for performing packed addition and packed subtraction on individual bits of packed data according to one embodiment of the invention. Figure 8 shows a modified bit slice adder/subtractor 800. Adder/subtractor 801a-b enable two bits from Source2 to be added to, or subtracted from, Source1. Operation and carry control 803 transmits to control 809a control signals to enable an addition or subtraction operation. Thus, adder/subtractor 801a adds or subtracts bit $i$ received on Source2$_i$ 805a to bit $i$ received on Source1$_i$ 804a, producing a result bit transmitted on Result$_i$ 806a. C$_{in}$ 807a-b and C$_{out}$ 808a-b represent carry control circuitry as is commonly found on adder/subtractors.

Bit control 802 is enabled from operation and carry control 803 via packed data enable 811 to control C$_{in_{i+1}}$ 807b and C$_{out_i}$. For example, in Table 13a, an unsigned packed byte addition is performed. If adder/subtractor 801a adds Source1 bit seven to Source2 bit seven, then operation and carry control 803 will enable bit control 802, stopping the propagation of a carry from bit seven to bit eight.

| 7 | 6 | 5 | 4 | 3 | 2 | 1 | 0 |
|---|---|---|---|---|---|---|---|
| ... | ... | ... | ... | ... | ... | 00001111 | 10001000 |
| $+\ \underline{\quad}\ 7$ | $+\ \underline{\quad}\ 6$ | $+\ \underline{\quad}\ 5$ | $+\ \underline{\quad}\ 4$ | $+\ \underline{\quad}\ 3$ | $+\ \underline{\quad}\ 2$ | $+\ \underline{\quad}\ 1$ | $+\ \underline{\quad}\ 0$ |
| ... | ... | ... | ... | ... | ... | 00001111 | 10001000 |
| $=\ \underline{\quad}\ 7$ | $=\ \underline{\quad}\ 6$ | $=\ \underline{\quad}\ 5$ | $=\ \underline{\quad}\ 4$ | $=\ \underline{\quad}\ 3$ | $=\ \underline{\quad}\ 2$ | $=\ \underline{\quad}\ 1$ | $=\ \underline{\quad}\ 0$ |
| ... | ... | ... | ... | ... | ... | 00011110 | Overflow |

Table 13a

However, if an unsigned packed word addition is performed, and adder/subtractor 801a is similarly used to add bit seven of Source1 to bit seven of Source2, bit control 802 propagates the carry to bit eight. Table 13b illustrates this result. This propagation would be allowed for packed doubleword addition as well as unpacked addition.

| 3 | 2 | 1 | 0 |
|---|---|---|---|
| ... | ... | ... | 00001111  10001000 |
| $+\ \underline{\quad}\ 3$ | $+\ \underline{\quad}\ 2$ | $+\ \underline{\quad}\ 1$ | $+\ \underline{\quad}\ 0$ |
| ... | ... | ... | 00001111  10001000 |
| $=\ \underline{\quad}\ 3$ | $=\ \underline{\quad}\ 2$ | $=\ \underline{\quad}\ 1$ | $=\ \underline{\quad}\ 0$ |
| ... | ... | ... | 00011111  00010000 |

Table 13b

Adder/subtractor 801a subtracts bit $Source2_i$ 805a from $Source1_i$ 804a by first forming the 2's complement of $Source2_i$ 805a by inverting $Source2_i$ 805a and adding one. Then adder/subtractor 801a adds this result to $Source1_i$ 804a. Bit slice 2's complementing techniques are well known in the art, and one skilled in the art would understand how to design such a bit slice 2's complementing circuit. Note that propagation of carries are controlled by bit control 802 and operation and carry control 803.

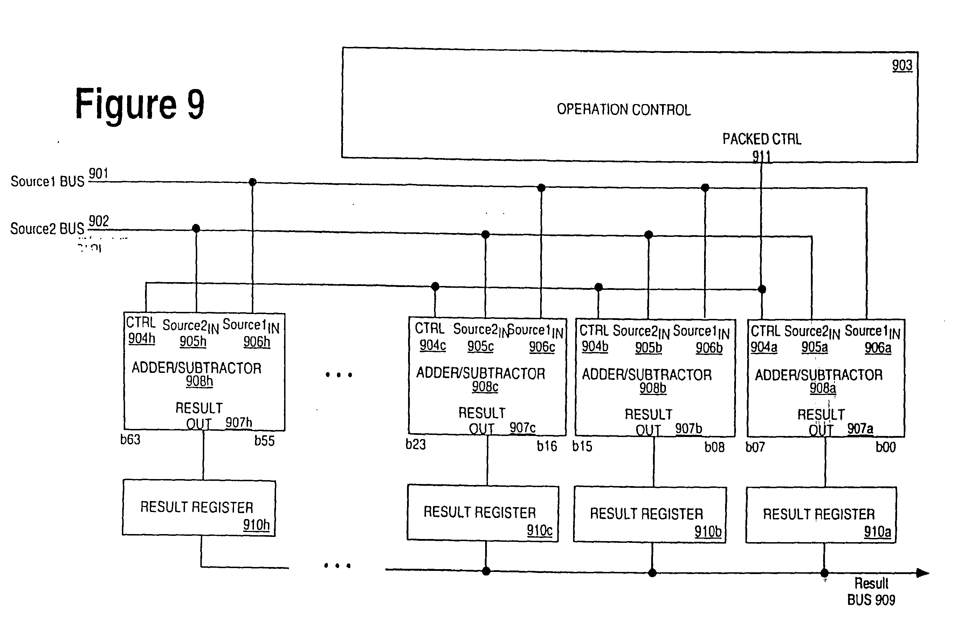

Figure 9 illustrates a circuit for performing packed addition and packed subtraction on packed byte data according to one embodiment of the invention. Source1 bus 901 and Source2 bus 902 carry the information signals to the adder/subtractors 908a-h via $Source1_{in}$ 906a-h and $Source2_{in}$ 905a-h respectively. Thus, adder/subtractor 908a adds/subtracts Source2 bit seven through bit zero to/from Source1 bit seven through bit zero; adder/subtractor 908b adds/subtracts Source2 bit fifteen through bit eight to/from Source1 bit fifteen through bit eight, etc.. CTRL 904a-h receives, from Operation Control 903, via packed control 911, control signals disabling the propagation of carries, enabling/disabling saturate, and enabling/disabling signed/unsigned arithmetic. Operation Control 903 disables propagation of carries by receiving carry information from CTRL 904a-h and not propagating it to the next most significant adder/subtractor 908a-h. Thus, Operation Control 903 performs the operations of the operation and carry control 803 and the bit control 802 for 64 bit packed data. One skilled in the art would be able create such a circuit given the illustrations in Figures 1-9 and the above description.

Adder/subtractors 908a-h communicate result information, via result out 907a-h, of the various packed additions to result register 910a-h. Each result register 910a-h stores and then transmits the result information onto Result bus 909. This result information is then stored in the integer register specified by the DEST 605 register address.

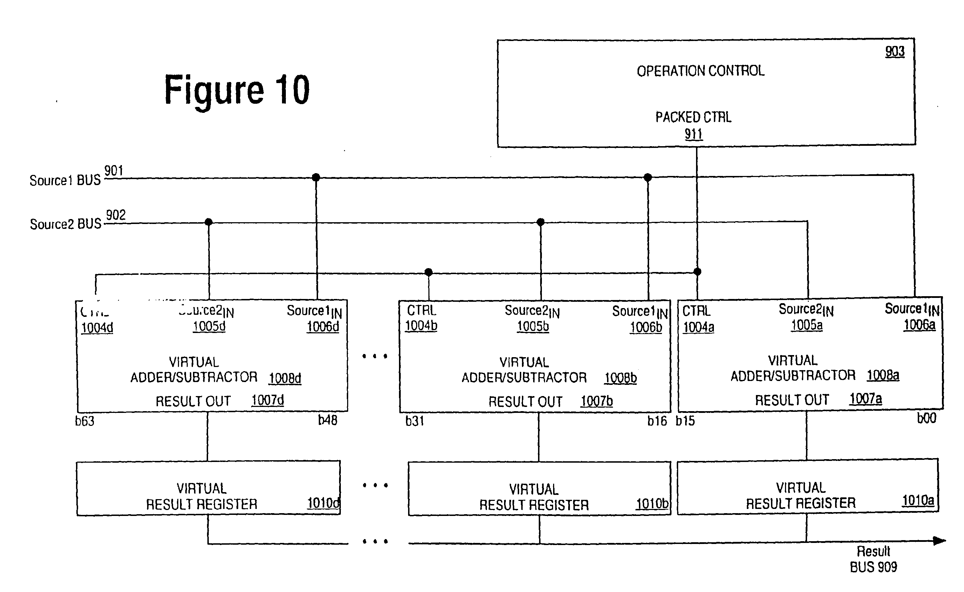

Figure 10 is a logical view of a circuit for performing packed addition and packed subtraction on packed word data according to one embodiment of the invention. Here, packed word operations are being performed. Propagation of carries between bit eight and bit seven, bit twenty-four and bit twenty-three, bit forty and bit thirty-nine, and bit fifty-six and bit fifty-five are enabled by Operation Control 903. Thus, adder/subtractor 908a and 908b, shown as virtual adder/subtractor 1008a, will act together to add/subtract the first word of packed word data Source2 (bit fifteen through bit zero) to/from the first word of packed word data Source1 (bit fifteen through bit zero); adder/subtractor 908c and 908d, shown as virtual adder/subtractor 1008b, will act together to add/subtract the second word of packed word data Source2 (bit thirty-one through bit sixteen) to/from the second word of packed word data Source1 (bit thirty-one through bit sixteen), etc..

Virtual adder/subtractors 1008a-d communicate result information, via result out 1007a-d (combined result outs 907a-b, 907c-d, 907e-f and 907g-h), to virtual result registers 1010a-d. Each virtual result register 1010a-d (combined result registers 910a-b, 910c-d, 910e-f and 910g-h) stores a sixteen bit result data element to be communicated onto Result bus 909.

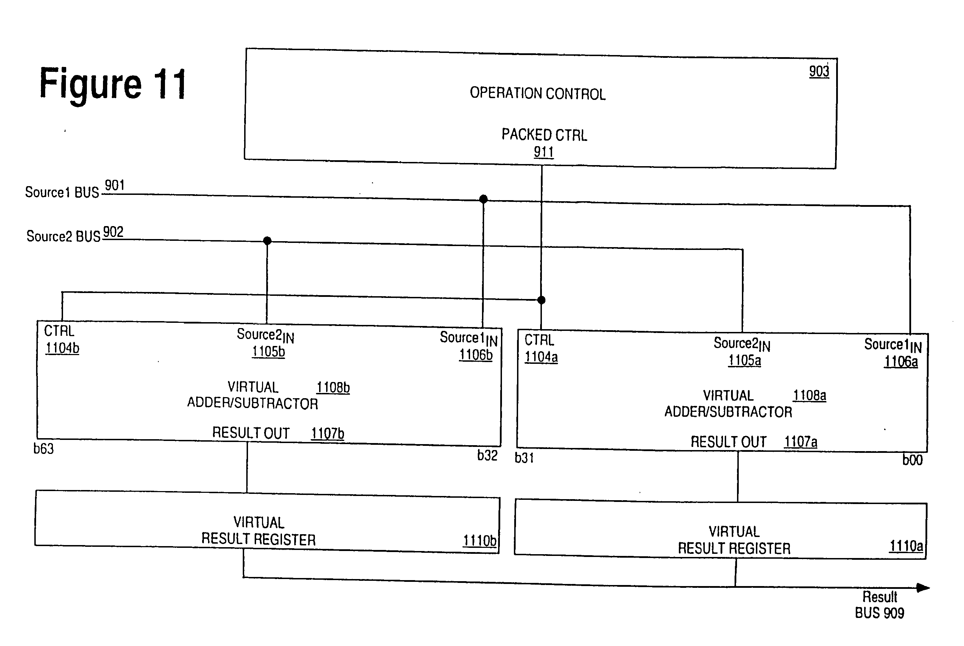

Figure 11 is a logical view of a circuit for performing packed addition and packed subtraction on packed doubleword data according to one embodiment of the invention. Propagation of carries between bit eight and bit seven, bit sixteen and bit fifteen, bit twenty-four and bit twenty-three, bit forty and bit thirty-nine, bit forty-eight and bit forty-seven, and bit fifty-six and bit fifty-five are enabled by Operation Control 903. Thus, adder/subtractors 908a-d, shown as virtual adder/subtractor 1108a, act together to add/subtract the first doubleword of packed doubleword data Source2 (bit thirty-one through bit zero) to/from the first doubleword of packed word data Source1 (bit thirty-one through bit zero); adder/subtractors 908e-h, shown as virtual adder/subtractor 1108b, act together to add/subtract the second doubleword of packed doubleword data Source2 (bit sixty-three through bit thirty-two) to/from the second doubleword of packed doubleword data Source1 (bit sixty-three through bit thirty-two).

Virtual adder/subtractors 1108a-b communicate result information, via result out 1107a-b (combined result outs 907a-d and 907e-h), to virtual result registers 1110a-b. Each virtual result register 1110a-b (combined result registers 910a-d and 910e-h) stores a thirty-two bit result data element to be communicated onto Result bus 909.

*PACKED MULTIPLY*

PACKED MULTIPLY OPERATION

In one embodiment of the invention, the SRC1 register contains multiplicand data (Source1), the SRC2 register contains multiplier data (Source2), and DEST register will contain a portion of the product of the multiplication (Result). That is, Source1 will have each data element independently multiplied by the respective data element of Source2. Depending on the type of the multiply, the Result will include the high order or the low order bits of the product.

In one embodiment of the invention, the following multiply operations are supported: multiply high unsigned packed, multiply high signed packed and multiply low packed. High/low indicate which bits from the product of the multiplication are to be included in the Result. This is needed because a multiplication of two N bit numbers results in a product having 2N bits. As each result data element is the same size as the multiplicand and the multiplier's data elements, only half of the product can be represented by the result. High causes the higher order bits to be output as the result. Low causes the low order bits to be output as the result. For example, unsigned high packed multiplication of Source1[7:0] by Source2[7:0] stores the high order bits of the product in Result[7:0].

In one embodiment of the invention, the use of the high/low operation modifier removes the possibility of an overflow from one data element into the next higher data element. That is, this modifier allows the programmer to select which bits of the product are to be in the result without concern for overflows. The programmer can generate a complete 2N bit product using a combination of packed multiply operations. For example, the programmer can use a multiply high unsigned packed operation and then, using the same Source1 and Source2, a multiply low packed operation to obtain complete (2N) products. The multiply high operation is provided because, often, the high order bits of the product are the only important part of the product. The programmer can obtain the high order bits of the product without first having to perform any truncation, as is often required by a nonpacked data operation.

In one embodiment of the invention, each data element in Source2 can have a different value. This provides the programmer with the flexibility to have a different value as the multiplier for each multiplicand in Source1.

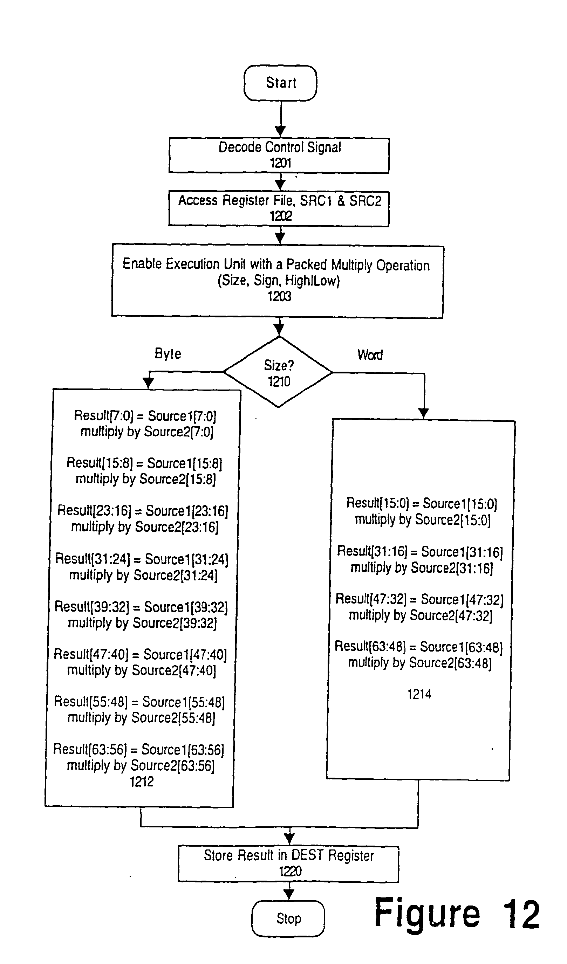

Figure 12 is a flow diagram illustrating a method for performing packed multiplication operations on packed data according to one embodiment of the invention.

At step 1201, decoder 202 decodes control signal 207 received by processor 109. Thus, decoder 202 decodes: the operation code for the appropriate multiply operation; SRC1 602, SRC2 603 and DEST 605 addresses in registers 209; signed/unsigned, high/low, and length of the data elements in the packed data.

At step 1202, via internal bus 170, decoder 202 accesses registers 209 in register file 150 given the SRC1 602 and SRC2 603 addresses. Registers 209 provides execution unit 130 with the packed data stored in the SRC1 602 register (Source1), and the packed data stored in SRC2 603 register (Source2). That is, registers 209 communicate the packed data to execution unit 130 via internal bus 170.

At step 1130, decoder 202 enables execution unit 130 to perform the appropriate packed multiply operation. Decoder 202 further communicates, via internal bus 170, the size of data elements and the highllow for the multiply operation.

At step 1210, the size of the data element determines which step is to be executed next. If the size of the data elements is eight bits (byte data), then execution unit 130 performs step 1212. However, if the size of the data elements in the packed data is sixteen bits (word data), then execution unit 130 performs step 1214. In one embodiment, only sixteen bit data element size packed multiplies are supported. In another embodiment, eight bit and sixteen bit data element size packed multiplies are supported. However, in another embodiment, a thirty-two bit data element size packed multiply is also supported.

Assuming the size of the data elements is eight bits, then step 1212 is executed. In step 1212, the following is performed. Source1 bits seven through zero are multiplied by Source2 bits seven through zero generating Result bits seven through zero. Source1 bits fifteen through eight are multiplied by Source2 bits fifteen through eight generating Result bits fifteen through eight. Source1 bits twenty-three through sixteen are multiplied by Source2 bits twenty-three through sixteen generating Result bits twenty-three through sixteen. Source1 bits thirty-one through twenty-four are multiplied by Source2 bits thirty-one through twenty-four generating Result bits thirty-one through twenty-four. Source1 bits thirty-nine through thirty-two are multiplied by Source2 bits thirty-nine through thirty-two generating Result bits thirty-nine through thirty-two. Source1 bits forty-seven through forty are multiplied by Source2 bits forty-seven through forty generating Result forty-seven through forty. Source1 bits fifty-five through forty-eight are multiplied by Source2 bits fifty-five through forty-eight generating Result bits fifty-five through forty-eight. Source1 bits sixty-three through fifty-six are multiplied by Source2 bits generating Result bits sixty-three through fifty-six.

Assuming the size of the data elements is sixteen bits, then step 1214 is executed. In step 1214, the following is performed. Source1 bits fifteen through zero are multiplied by Source2 bits fifteen through zero generating Result bits fifteen through zero. Source1 bits thirty-one through sixteen are multiplied by Source2 bits thirty-one through sixteen generating Result bits thirty-one through sixteen. Source1 bits forty-seven through thirty-two are multiplied by Source2 bits forty-seven through thirty-two generating Result bits forty-seven through thirty-two. Source1 bits sixty-three through forty-eight are multiplied by Source2 bits sixty-three through forty-eight generating Result bits sixty-three through forty-eight.

In one embodiment, the multiplies of step 1212 are performed simultaneously. However, in another embodiment, these multiplies are performed serially. In another embodiment, some of these multiplies are performed simultaneously and some are performed serially. This discussion also applies to the multiplies of step 1214 as well.

At step 1220, the Result is stored in the DEST register.

Table 14 illustrates the in-register representation of packed multiply unsigned high operation on packed word data. The first row of bits is the packed data representation of Source1. The second row of bits is the data representation of Source2. The third row of bits is the packed data representation of the Result. The number below each data element bit is the data element number. For example, Source1 data element two is 11111111 00000000$_2$.

| 11111111 11111111 | 11111111 00000000 | 11111111 00000000 | 00001110 00001000 |
| | | | |
| 3 | 2 | 1 | 0 |
| Multiply | Multiply | Multiply | Multiply |
| 00000000 00000000 | 00000000 00000001 | 10000000 00000000 | 00001110 10000001 |
| = | = | = | = |
| 00000000 00000000 | 00000000 00000000 | 01111111 10000000 | 00000000 11001011 |
| 3 | 2 | 1 | 0 |

## Table 14

Table 15 illustrates the in-register representation of multiply high signed packed operation on packed word data.

| 11111111 11111111 | 11111111 00000000 | 11111111 00000000 | 00001110 00001000 |
|---|---|---|---|
| 3 | 2 | 1 | 0 |
| Multiply | Multiply | Multiply | Multiply |
| 00000000 00000000 | 00000000 00000001 | 10000000 00000000 | 00001110 10000001 |
| = | = | = | = |
| 00000000 00000000 | 11111111 11111111 | 00000000 10000000 | 00000000 11001011 |
| 3 | 2 | 1 | 0 |

Table 15

Table 16 illustrates the in-register representation of packed multiply low operation on packed word data.

| 11111111 11111111 | 11111111 00000000 | 11111111 00000000 | 00001110 00001000 |
|---|---|---|---|
| 3 | 2 | 1 | 0 |
| Multiply | Multiply | Multiply | Multiply |
| 00000000 00000000 | 00000000 00000001 | 10000000 00000000 | 00001110 10000001 |
| = | = | = | = |
| 00000000 00000000 | 11111111 00000000 | 00000000 00000000 | 10000010 00001000 |
| 3 | 2 | 1 | 0 |

Table 16

## PACKED DATA MULTIPLY CIRCUITS

In one embodiment, the multiply operation can occur on multiple data elements in the same number of clock cycles as a single multiply operation on unpacked data. To achieve execution in the same number of clock cycles, parallelism is used. That is, registers are simultaneously instructed to perform the multiply operation on the data elements. This is discussed in more detail below.

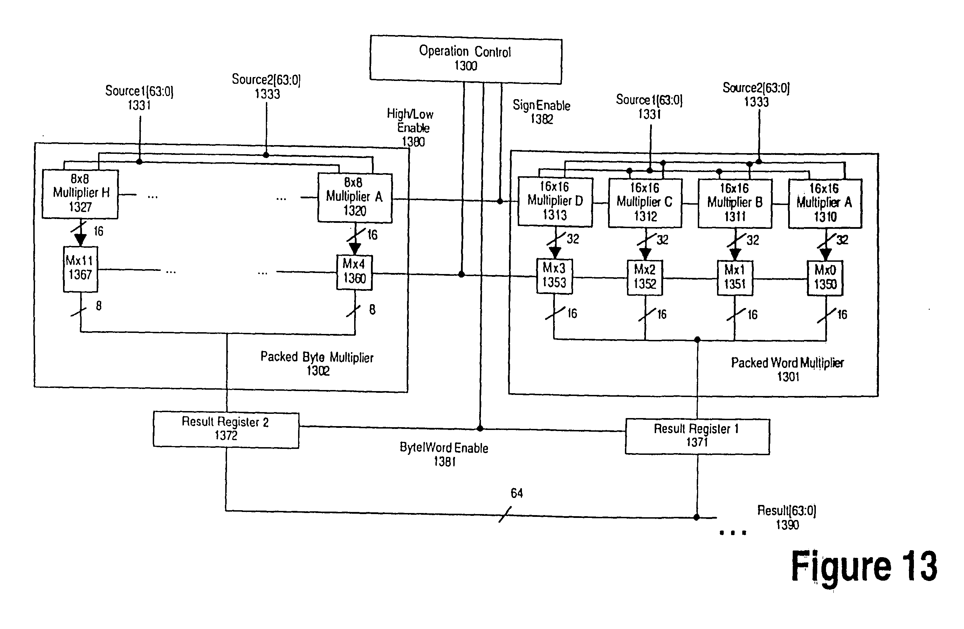

Figure 13 illustrates a circuit for performing packed multiplication according to one embodiment of the invention. Operation control 1300 controls the circuits performing the multiplication. Operation control 1300 processes the control signal for the multiply operation and has the following outputs: highllow enable 1380; bytelword enable 1381 and sign enable 1382. Highllow enable 1380 identifies whether the high or low order bits of the product are to be included in the result. Bytelword enable 1381 identifies whether a byte packed data or word packed data multiply operation is to be performed. Sign enable 1382 indicates whether signed multiplication should be used.

Packed word multiplier 1301 multiplies four word data elements simultaneously. Packed byte multiplier 1302 multiplies eight byte data elements. Packed word multiplier 1301 and packed byte multiplier 1302 both have the following inputs: Source1[63:0] 1331, Source2[63:0] 1333, sign enable 1382, and highllow enable 1380.

Packed word multiplier 1301 includes four 16x16 multiplier circuits: 16x16 multiplier A 1310, 16x16 multiplier B 1311, 16x16 multiplier C 1312 and 16x16 multiplier D 1313. 16x16 multiplier A 1310 has as inputs Source1[15:0] and Source2[15:0]. 16x16 multiplier B 1311 has as inputs Source1[31:16] and Source2[31:16]. 16x16 multiplier C 1312 has as inputs Source1[47:32] and Source2[47:32]. 16x16 multiplier D 1313 has as inputs Source1[63:48] and Source2[63: 48]. Each 16x16 multiplier is coupled to the sign enable 1382. Each 16x16 multiplier produces a thirty-two bit product. For each multiplier, a multiplexor (Mx0 1350, Mx1 1351, Mx2 1352 and Mx3 1353 respectively) receives the thirty-two bit result. Depending on the value of the highllow enable 1380, each multiplexor outputs the sixteen high order bits or the sixteen low order bits of the product. The outputs of the four multiplexors are combined into one sixty-four bit result. This result is optionally stored in a result register 1 1371.

Packed byte multiplier 1302 includes eight 8x8 multiplier circuits: 8x8 multiplier A 1320 through 8x8 multiplier H 1327. Each 8x8 multiplier has an eight bit input from each of Source1[63:0) 1331 and Source2[63:0] 1333. For example 8x8 multiplier A 1320 has as inputs Source1[7:0] and Source2[7:0] while 8x8 multiplier H 1327 has as inputs Source1 [63:56] and Source2[63:56]. Each 8x8 multiplier is coupled to the sign enable 1382. Each 8x8 multiplier produces a sixteen bit product. For each multiplier, a multiplexor (e.g. Mx4 1360 and Mx11 1367) receives the sixteen bit result. Depending on the value of the highllow enable 1380, each multiplexor outputs the eight high order bits or the eight low order bits of the product. The outputs of the eight multiplexors are combined into one sixty-four bit result. This result is optionally stored in a result register 2 1372. The bytelword enable 1381 enables the particular result register, depending on the size of the data element that the operation requires.

In one embodiment, the area used to realize the multiplies is reduced by making circuits that can multiply both two 8x8 numbers or one 16x16 number. That is, two 8x8 multipliers and one 16x16 multiplier are combined into one 8x8 and 16x16 multiplier. Operation control 1300 would enable the appropriate size for the multiply. In such an embodiment, the physical area used by the multipliers would be reduced, however, it would be difficult to execute a packed byte multiply and a packed word multiply. In another embodiment supporting packed doubleword multiplies, one multiplier can perform four 8x8 multiplies, two 16x16 multiplies or one 32x32.

In one embodiment, only a packed word multiply operation is provided. In this embodiment, packed byte multiplier 1302 and result register 2 1372 would not be included.

ADVANTAGES OF INCLUDING THE DESCRIBED PACKED MULTIPLY OPERATION IN THE INSTRUCTION SET

Thus, the described packed multiply instruction provides for the independent multiplication of each data element in Source1 by its respective data element in Source 2. Of course, algorithms that require each element in Source1 to be multiplied by the same number can be performed by storing the same number in each element of Source2. In addition, this multiply instruction insures against overflows by breaking the carry chains; thereby releasing the programmer of this responsibility, removing the need for instructions to prepare data to prevent overflows, and resulting in more robust code.

In contrast, prior art general purpose processors that do not support such an instruction are required to perform this operation by unpacking the data elements, performing the multiplies, and then packing the results for further packed processing. Thus, processor 109 can multiply different data elements of a packed data by different multipliers in parallel using one instruction.

Typical multimedia algorithms perform a large number of multiply operations. Thus, by reducing the number of instructions required to perform these multiply operations, performance of these multimedia algorithms is increased. Thus, by providing this multiply instruction in the instruction set supported by processor 109, processor 109 can execute algorithms requiring this functionality at a higher performance level.

*MULTIPLY-ADD/SUBTRACT*

MULTIPLY-ADD/SUBTRACT OPERATIONS

In one embodiment, two multiply-add operations are performed using a single multiply-add instruction as shown below in Table 17a and Table 17bTable 17a shows a simplified representation of the disclosed multiply-add instruction, while Table 17b shows a bit level example of the disclosed multiply-add instruction.

Multiply-Add Source1, Source2

| $A_1$ | $A_2$ | $A_3$ | $A_4$ | Source1 |
|---|---|---|---|---|
| | | | | |
| $B_1$ | $B_2$ | $B_3$ | $B_4$ | Source2 |
| = | | | | |
| $A_1B_1+A_2B_2$ | | $A_3B_3+A_4B_4$ | | Result1 |

Table 17a

| 11111111 11111111 | 11111111 00000000 | 01110001 11000111 | 01110001 11000111 |
|---|---|---|---|
| Multiply 3 | Multiply 2 | Multiply 1 | Multiply 0 |
| 00000000 00000000 | 00000000 00000001 | 10000000 00000000 | 00000100 00000000 |
| ↓ | ↓ | ↓ | ↓ |
| 32-Bit Intermediate Result 4 | 32-Bit Intermediate Result 3 | 32-Bit Intermediate Result 2 | 32-Bit Intermediate Result 1 |

Add                                    Add

| 11111111 11111111   11111111 00000000 | 11001000 11100011   10011100 00000000 |
|---|---|
| 1 | 0 |

**Table 17b**

The multiply-subtract operation is the same as the multiply-add operation, except that the add is replaced with a subtract. The operation of an example multiply-subtract instruction which performs two multiply-subtract operations is shown below in Table 12.

**Multiply-Subtract Source1, Source2**

| $A_1$ | $A_2$ | $A_3$ | $A_4$ | Source1 |
|---|---|---|---|---|
| $B_1$ | $B_2$ | $B_3$ | $B_4$ | Source2 |
| = | | | | |
| $A_1B_1-A_2B_2$ | | $A_3B_3-A_4B_4$ | | Result1 |

**Table 12**

In one embodiment of the invention, the SRC1 register contains packed data (Source1), the SRC2 register contains packed data (Source2), and the DEST register will contain the result (Result) of performing the multiply-add or multiply-subtract instruction on Source1 and Source2. In the first step of the multiply-add or multiply-subtract instruction, Source1 will have each data element independently multiplied by the respective data element of Source2 to generate a set of respective intermediate results. When executing the multiply-add instruction, these intermediate results are summed by pairs producing two resulting data elements that are stored as data elements of the Result. In contrast, when executing the multiply-subtract instruction, these intermediate results are subtracted by pairs producing two resulting data elements that are stored as data elements of the Result.

Alternative embodiments may vary the number of bits in the data elements, in the intermediate results, and/or in the data elements in the Result. In addition, alternative embodiment may vary the number of data elements in Source1, Source 2, and the Result. For example, if Source1 and Source 2 each have 8 data elements, the multiply-add/subtract instructions may be implemented to produce a Result with 4 data elements (each data element in the Result representing the addition of two intermediate results), 2 data elements (each data element in the result representing the addition of four intermediate results), etc.

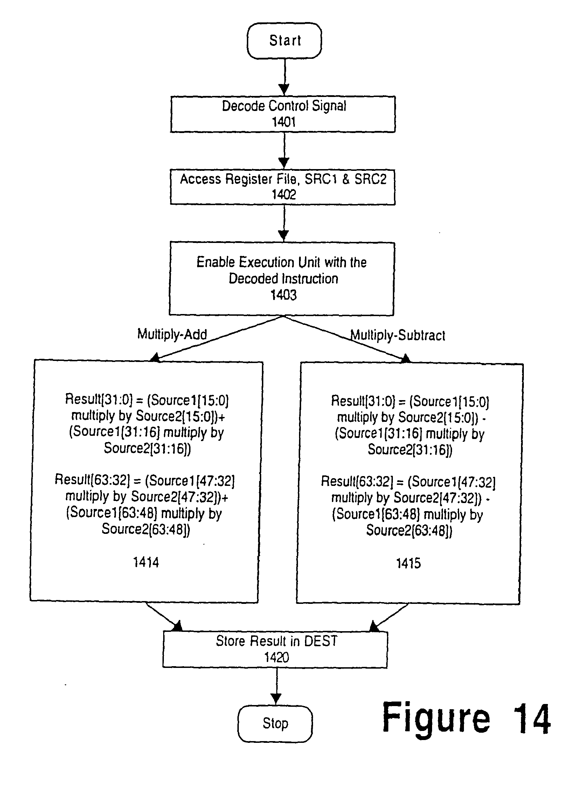

Figure 14 is a flow diagram illustrating a method for performing multiply-add and multiply-subtract operations on packed data according to one embodiment of the invention.

At step 1401, decoder 202 decodes control signal 207 received by processor 109. Thus, decoder 202 decodes: the operation code for a multiply-add or multiply-subtract instruction.

At step 1402, via internal bus 170, decoder 202 accesses registers 209 in register file 150 given the SRC1 602 and SRC2 603 addresses. Registers 209 provide execution unit 130 with the packed data stored in the SRC1 602 register (Source1), and the packed data stored in SRC2 603 register (Source2). That is, registers 209 communicate the packed data to execution unit 130 via internal bus 170.

At step 1403, decoder 202 enables execution unit 130 to perform the instruction. If the instruction is a multiply-add instruction, flow passes to step 1414. However, if the instruction is a multiply-subtract instruction, flow passes to step 1415.

In step 1414, the following is performed. Source1 bits fifteen through zero are multiplied by Source2 bits fifteen through zero generating a first 32-bit intermediate result (Intermediate Result 1). Source1 bits thirty-one through sixteen are multiplied by Source2 bits thirty-one through sixteen generating a second 32-bit intermediate result (Intermediate Result 2). Source1 bits forty-seven through thirty-two are multiplied by Source2 bits forty-seven through thirty-two generating a third 32-bit intermediate result (Intermediate Result 3). Source1 bits sixty-three through forty-eight are multiplied by Source2 bits sixty-three through forty-eight generating a fourth 32-bit intermediate result (Intermediate Result 4). Intermediate Result 1 is added to Intermediate Result 2 generating bits thirty-one through 0 of the Result, and Intermediate Result 3 is added to Intermediate Result 4 generating bits sixty-three through thirty-two of the Result.

Step 1415 is the same as step 1414, with the exception that Intermediate Result 1 and Intermediate Result 2 are subtracted to generate bits thirty-one through 0 of the Result, Result 3 and Intermediate Result 4 are subtracted to generate bits sixty-three through thirty-two of the Result.

Different embodiments may be perform the multiplies and adds/subtracts serially, in parallel, or in some combination of serial and parallel operations.

At step 1420, the Result is stored in the DEST register.

PACKED DATA MULTIPLY-ADD/SUBTRACT CIRCUITS

In one embodiment, each of the multiply-add and multiply-subtract instructions can occur on multiple data elements in the same number of clock cycles as a single multiply on unpacked data. To achieve execution in the same number of clock cycles, parallelism is used. That is, registers are simultaneously instructed to perform the multiply-add or multiply-subtract operations on the data elements. This is discussed in more detail below.

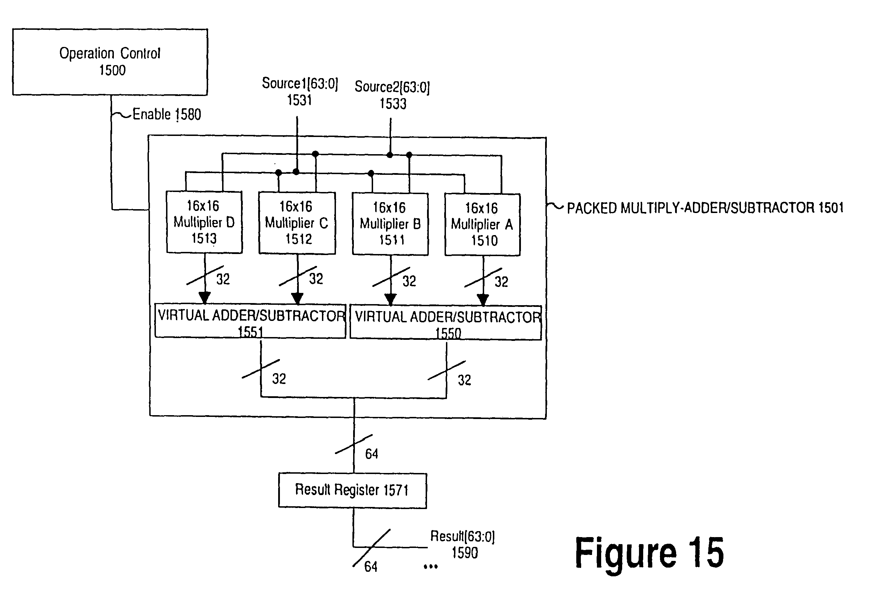

Figure 15 illustrates a circuit for performing multiply-add and/or multiply-subtract operations on packed data according to one embodiment of the invention. Operation control 1500 processes the control signal for the multiply-add and multiply-subtract instructions. Operation control 1500 outputs signals on Enable 1580 to control Packed NIultiply-Adder/Subtractor 1501.

Packed Multiply-Adder/Subtractor 1501 has the following inputs:

Source1[63:0] 1531, Source2[63:0] 1533, and Enable 1580. Packed Multiply-Adder/Subtractor 1501 includes four 16x16 multiplier circuits: 16x16 multiplier A 1510, 16x16 multiplier B 1511, 16x16 multiplier C 1512 and 16x16 multiplier D 1513. 16x16 multiplier A 1510 has as inputs Source1[15:0] and Source2[15:0]. 16x16 multiplier B 1511 has as inputs Source1[31:16] and Source2[31:16]. 16x16 multiplier C 1512 has as inputs Source1[47:32] and Source2[47:32]. 16x16 multiplier D 1513 has as inputs Source1[63:48] and Source2[63:48]. The 32-bit intermediate results generated by 16x16 multiplier A 1510 and 16x16 multiplier B 1511 are received by Virtual Adder/Subtractor 1550, while the 32-bit intermediate-results generated by 16x 16 multiplier C 1512 and 16x16 multiplier D 1513 are received by Virtual Adder/Subtractor 1551.

Based on whether the current instruction is a multiply-add or multiply-subtract instruction, Virtual Adder/Subtractor 1550 and Virtual Adder/Subtractor 1551 either add or subtract their respective 32-bit inputs. The output of Virtual Adder/Subtractor 1550 (i.e., bits thirty one through zero of the Result) and the output of Virtual Adder/Subtractor 1551 (i.e., bits 63 through thirty two of the Result) are combined into the 64-bit Result and communicated to Result Register 1571.

In one embodiment, Virtual Adder/Subtractor 1551 and Virtual Adder/Subtractor 1550 are implemented in a similar fashion as Virtual Adder/Subtractor 1108b and Virtual Adder/Subtractor 1108a (i.e., each of Virtual Adder/Subtractor 1551 and Virtual Adder/Subtractor 1550 are composed of four 8-bit adders with the appropriate propagation delays). However, alternative embodiments could implement Virtual Adder/Subtractor 1551 and Virtual Adder/Subtractor 1550 in any number of ways.

To perform the equivalent of these multiply-add or multiply-subtract instructions on prior art processors which operate on unpacked data, four separate 64-bit multiply operations and two 64-bit add or subtract operations, as well as the necessary load and store operations, would be needed. This wastes data lines and circuitry that are used for the bits that are higher than bit sixteen for Source1 and Source 2, and higher than bit thirty two for the Result. As well, the entire 64-bit result generated by such prior art processors may not be of use to the programmer. Therefore, the programmer would have to truncate each result.

ADVANTAGES OF INCLUDING THE DESCRIBED MULTIPLY-ADD OPERATION IN THE INSTRUCTION SET

The described multiply-add/subtract instructions can be used for a number of purposes. For example, the multiply-add instruction can be used for the multiplication of complex numbers and for the multiplication and accumulation of values. Several algorithms which utilize the multiply-add instruction are later described herein.

Thus, by including the described multiply-add and/or multiply-subtract instructions in the instruction set supported by processor 109, many functions can be performed in fewer instructions than prior art general purpose processors which lack these instructions.

*PACKED SHIFT*

PACKED SHIFT OPERATION

In one embodiment of the invention, the SRC1 register contains the data (Source1) to be shifted, the SRC2 register contains the data (Source2) representing the shift count, and DEST register will contain the result of the shift (Result). That is, Source1 will have each data element independently shifted by the shift count. In one embodiment, Source2 is interpreted as an unsigned 64 bit scalar. In another embodiment, Source2 is packed data and contains shift counts for each corresponding data element in Source1.

In one embodiment of the invention, both arithmetic shifts and logical shifts are supported. An arithmetic shift, shifts the bits of each data element down by a specified number, and fills the high order bit of each data element with the initial value of the sign bit. A shift count greater than seven for packed byte data, greater than fifteen for packed word data, or greater than thirty-one for packed doubleword, causes the each Result data element to be filled with the initial value of the sign bit. A logical shift can operate by shifting bits up or down. In a shift right logical, the high order bits of each data element are filled with zeroes. A shift left logical causes the least significant bits of each data element to be filled with zeroes.

In one embodiment of the invention, a shift right arithmetic, the shift right logical, and the shift left logical operations are supported for packed bytes and packed words. In another embodiment of the invention, these operations are supported for packed doublewords also.

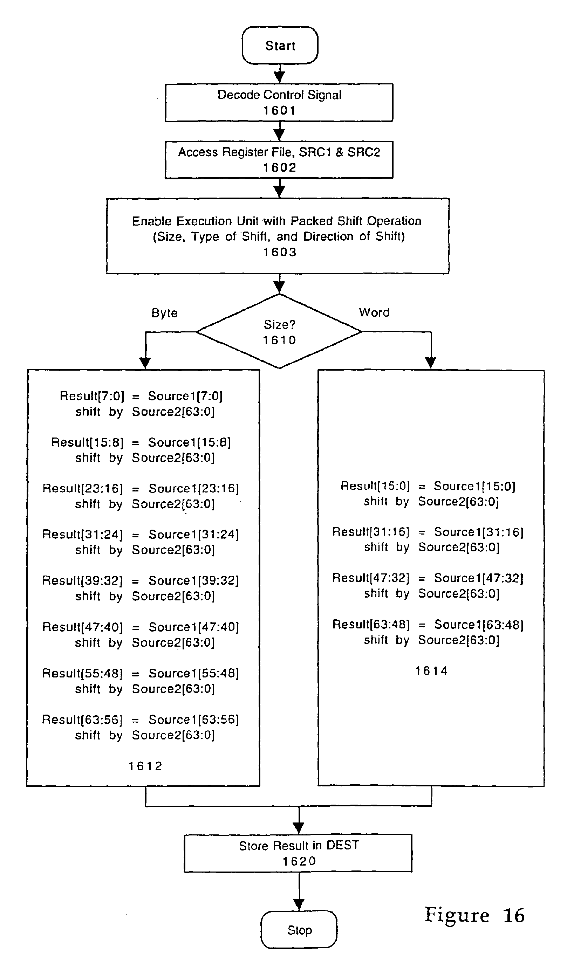

Figure 16 is a flow diagram illustrating a method for performing a packed shift operation on packed data according to one embodiment of the invention.

At step 1601, decoder 202 decodes control signal 207 received by processor 109. Thus, decoder 202 decodes: the operation code for the appropriate shift operation; SRC1 602, SRC2 603 and DEST 605 addresses in registers 209; saturate/unsaturate (not necessarily needed for shift operations), signed/unsigned (again not necessarily needed), and length of the data elements in the packed data.

At step 1602, via internal bus 170, decoder 202 accesses registers 209 in register file 150 given the SRC1 602 and SRC2 603 addresses. Registers 209 provides execution unit 130 with the packed data stored in the SRC1 602 register (Source1), and the scalar shift count stored in SRC2 603 register (Source2). That is, registers 209 communicate the packed data to execution unit 130 via internal bus 170.

At step 1603, decoder 202 enables execution unit 130 to perform the appropriate packed shift operation. Decoder 202 further communicates, via internal bus 170, the size of data elements, the type of shift operation, and the direction of the shift (for logical shifts).

At step 1610, the size of the data element determines which step is to be executed next. If the size of the data elements is eight bits (byte data), then execution unit 130 performs step 1612. However, if the size of the data elements in the packed data is sixteen bits (word data), then execution unit 130 performs step 1614. In one embodiment, only eight bit and sixteen bit data element size packed shifts are supported. However, in another embodiment, a thirty-two bit data element size packed shift is also supported.

Assuming the size of the data elements is eight bits, then step 1612 is executed. In step 1612, the following is performed. Source1 bits seven through zero are shifted by the shift count (Source2 bits sixty-three through zero) generating Result bits seven through zero. Source1 bits fifteen through eight are shifted by the shift count generating Result bits fifteen through eight. Source1 bits twenty-three through sixteen are shifted by the shift count generating Result bits twenty-three through sixteen. Source1 bits thirty-one through twenty-four are shifted by the shift count generating Result bits thirty-one through twenty-four. Source1 bits thirty-nine through thirty-two are shifted by the shift count generating Result bits thirty-nine through thirty-two. Source1 bits forty-seven through forty are shifted by the shift count generating Result forty-seven through forty. Source1 bits fifty-five through forty-eight are shifted by the shift count generating Result bits fifty-five through forty-eight. Source1 bits sixty-three through fifty-six are shifted by the shift count generating Result bits sixty-three through fifty-six.

Assuming the size of the data elements is sixteen bits, then step 1614 is executed. In step 1614, the following is performed. Source1 bits fifteen through zero are shifted by the shift count generating Result bits fifteen through zero. Source1 bits thirty-one through sixteen are shifted by the shift count generating Result bits thirty-one through sixteen. Source1 bits forty-seven through thirty-two are shifted by the shift count generating Result bits forty-seven through thirty-two. Source1 bits sixty-three through forty-eight are shifted by the shift count generating Result bits sixty-three through fony-eight.

In one embodiment, the shifts of step 1612 are performed simultaneously. However, in another embodiment, these shifts are performed serially. In another embodiment, some of these shifts are performed simultaneously and some are performed serially. This discussion applies to the shifts of step 1614 as well.

At step 1620, the Result is stored in the DEST register.

Table 19 illustrates the in-register representation of byte packed shift right arithmetic operation. The first row of bits is the packed data representation of Source1. The second row of bits is the data representation of Source2. The third row of bits is the packed data representation of the Result. The number below each data element bit is the data element number. For example, Source1 data element three is $10000000_2$.

| 00101010 | 01010101 | 01010101 | 11111111 | 10000000 | 01110000 | 10001111 | 10001000 |
|---|---|---|---|---|---|---|---|
| 7 | 6 | 5 | 4 | 3 | 2 | 1 | 0 |
| Shift | Shift | Shift | Shift | Shift | Shift | Shift | Shift |
| 00000000 | 00000000 | 00000000 | 00000000 | 00000000 | 00000000 | 00000000 | 00000100 |
| = | = | = | = | = | = | = | = |
| 00000010 | 00000101 | 00000101 | 11111111 | 11110000 | 00000111 | 11111000 | 11111000 |
| 7 | 6 | 5 | 4 | 3 | 2 | 1 | 0 |

Table 19

Table 20 illustrates the in-register representation of packed shift right logical operation on packed byte data.

| 00101010 | 01010101 | 01010101 | 11111111 | 10000000 | 01110000 | 10001111 | 10001000 |
|---|---|---|---|---|---|---|---|
| 7 | 6 | 5 | 4 | 3 | 2 | 1 | 0 |
| Shift | Shift | Shift | Shift | Shift | Shift | Shift | Shift |
| 00000000 | 00000000 | 00000000 | 00000000 | 00000000 | 00000000 | 00000000 | 00000011 |
| = | = | = | = | = | = | = | = |
| 00000101 | 00001010 | 00001010 | 00011111 | 00010000 | 00001110 | 00010001 | 00010001 |
| 7 | 6 | 5 | 4 | 3 | 2 | 1 | 0 |

Table 20

Table 21 illustrates the in-register representation of packed shift left logical operation on packed byte data.

| 00101010 | 01010101 | 01010101 | 11111111 | 10000000 | 01110000 | 10001111 | 10001000 |
|---|---|---|---|---|---|---|---|
| Shift 7 | Shift 6 | Shift 5 | Shift 4 | Shift 3 | Shift 2 | Shift 1 | Shift 0 |
| 00000000 | 00000000 | 00000000 | 00000000 | 00000000 | 00000000 | 00000000 | 00000011 |
| = | = | = | = | = | = | = | = |
| 01010000 | 10101000 | 10101000 | 11111000 | 00000000 | 10000000 | 01111000 | 01000000 |
| 7 | 6 | 5 | 4 | 3 | 2 | 1 | 0 |

## Table 21

PACKED DATA SHIFT CIRCUITS

In one embodiment, the shift operation can occur on multiple data elements in the same number of clock cycles as a single shift operation on unpacked data. To achieve execution in the same number of clock cycles, parallelism is used. That is, registers are simultaneously instructed to perform the shift operation on the data-elements. This is discussed in more detail below.

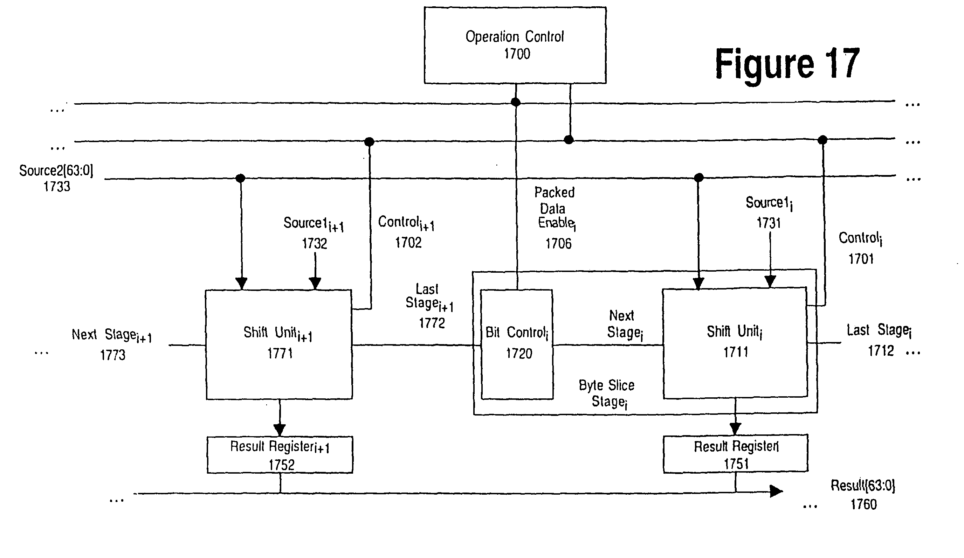

Figure 17 illustrates a circuit for performing a packed shift on individual bytes of packed data according to one embodiment of the invention. Figure 17 illustrates the use of a modified byte slice shift circuit, byte slice stage$_i$ 1799. Each byte slice, except for the most significant data element byte slice, includes a shift unit and bit control. The most significant data element byte slice need only have a shift unit.

Shift unit$_i$ 1711 and shift unit$_{i+1}$ 1771 each allow eight bits from Source1 to be shifted by the shift count. In one embodiment, each shift unit operates like a known eight bit shift circuit. Each shift unit has a Source1 input, a Source2 input, a control input, a next stage signal, a last stage signal, and a result output. Therefore, shift unit$_i$ 1711 has Source1$_i$ 1731 input, Source2[63:0] 1733 input, control$_i$ 1701 input, next stage$_i$ 1713 signal, last stage$_i$ 1712 input, and a result stored in result register$_i$ 1751. Therefore, shift unit$_{i+1}$ 1771 has Source1$_{i+1}$ 1732 input, Source2[63:0] 1733 input, control$_{i+1}$ 1702 input, next stage$_{i+1}$ 1773 signal, last stage$_{i+1}$ 1772 input, and a result stored in result register$_{i+1}$ 1752.

The Source1 input is typically an eight bit portion of Source1. The eight bits represents the smallest type of data element, one packed byte data element. Source2 input represents the shift count. In one embodiment, each shift unit receives the same shift count from Source2[63:0] 1733. Operation control 1700 transmits control signals to enable each shift unit to perform the required shift. The control signals are determined from the type of shift (arithmetic/logical) and the direction of the shift. The next stage signal is received from the bit control for that shift unit. The shift unit will shift the most significant bit out/in on the next stage signal, depending on the direction of the shift (left/right). Similarly, each shift unit will shift the least significant bit out/in on the last stage signal, depending on the direction of the shift (right/left). The last stage signal being received from the bit control unit of the previous stage. The result output represents the result of the shift operation on the portion of Source1 the shift unit is operating upon.

Bit control$_i$ 1720 is enabled from operation control 1700 via packed data enable$_i$ 1706. Bit control$_i$ 1720 controls next stage$_i$ 1713 and last stage$_{i+1}$ 1772. Assume, for example, shift unit$_i$ 1711 is responsible for the eight least significant bits of Source1, and shift unit$_{i+1}$ 1771 is responsible for the next eight bits of Source1. If a shift on packed bytes is performed, bit control$_i$ 1720 will not allow the least significant bit from shift unit$_{i+1}$ 1771 to be communicated with the most significant bit of shift unit$_i$ 1711. However, a shift on packed words is performed, then bit control$_i$ 1720 will allow the least significant bit from shift unit$_{i+1}$ 1771 to be communicated with the most significant bit of shift unit$_i$ 1711.

For example, in Table 22, a packed byte arithmetic shift right is performed. Assume that shift unit$_{i+1}$ 1771 operates on data element one, and shift unit$_i$ 1711 operates on data element zero. Shift unit$_{i+1}$ 1771 shifts its least significant bit out. However operation control 1700 will cause bit control$_i$ 1720 to stop the propagation of that bit, received from last stage$_{i+1}$ 1721, to next stage$_i$ 1713. Instead, shift unit$_i$ 1711 will fill the high order bits with the sign bit, Source1[7].

28

| | | | | | | | |
|---|---|---|---|---|---|---|---|
| ... | ... | ... | ... | ... | ... | 00001110 | 10001000 |
| 7<br>Shift | 6<br>Shift | 5<br>Shift | 4<br>Shift | 3<br>Shift | 2<br>Shift | 1<br>Shift | 0<br>Shift |
| ... | ... | ... | ... | ... | ... | ... | 00000001 |
| = | = | = | = | = | = | = | = |
| ... | ... | ... | ... | ... | ... | 00001111 | 01000100 |
| 7 | 6 | 5 | 4 | 3 | 2 | 1 | 0 |

## Table 22

However, if a packed word arithmetic shift is performed, then the least significant bit of shift $unit_{i+1}$ 1771 will be communicated to the most significant bit of shift $unit_i$ 1711. Table 23 illustrates this result. This communication would be allowed for packed doubleword shifts as well.

| | | | |
|---|---|---|---|
| ... | ... | ... | 00001110  10001000 |
| 3<br>Shift | 2<br>Shift | 1<br>Shift | 0<br>Shift |
| ... | ... | ... | 00000001 |
| = | = | = | = |
| ... | ... | ... | 00000111  01000100 |
| 3 | 2 | 1 | 0 |

## Table 23

Each shift unit is optionally coupled to a result register. The result register temporarily stores the result of the shift operation until the complete result, Result[63:0] 1760 can be transmitted to the DEST register.

For a complete sixty-four bit packed shift circuit, eight shift units and seven bit control units are used. Such a circuit can also be used to perform a shift on a sixty-four bit unpacked data, thereby using the same circuit to perform the unpacked shift operation and the packed shift operation.

ADVANTAGES OF INCLUDING THE DESCRIBED SHTFT OPERATION IN THE INSTRUCTION SET

The described packed shift instruction causes each element of Source1 to be shifted by the indicated shift count. By including this instruction in the instruction set, each element of a packed data may be shifted using a single instruction. In contrast, prior art general purpose processors that do not support such an operation must perform numerous instructions to unpack Source1, individually shift each unpacked data element, and then pack the results into a packed data format for further packed processing.

*MOVE OPERATION*

The move operation transfers data to or from registers 209. In one embodiment, SRC2 603 is the address containing the source data and DEST 605 is the address where the data is to be transferred. In this embodiment, SRC1 602 would not be used. In another embodiment, SRC1 602 is equal to DEST 605.

For the purposes of the explanation of the move operation, a distinction is drawn between a register and a memory location. Registers are found in register file 150 while memory can be, for example, in cache 160, main memory 104, ROM 106, data storage device 107.

The move operation can move data from memory to registers 209, from registers 209 to memory, and from a register in registers 209 to a second register in-registers 209. In one embodiment, packed data is stored in different registers than those used to store integer data. In this embodiment, the move operation can move data from integer registers 201 to registers 209. For example, in processor 109, if packed data is stored in registers 209 and integer data is stored in integer registers 201, then a move instruction can be used to move data from integer registers 201 to registers 209, and vice versa.

In one embodiment, when a memory address is indicated for the move, the eight bytes of data at the memory location (the memory location containing the least significant byte) are loaded to a register in registers 209 or stored from that register. When a register in registers 209 is indicated, the contents of that register are moved to or loaded from a second register in registers 209. If the integer registers 201 are sixty-four bits in length, and an integer register is specified, then the eight bytes of data in that integer register are loaded to a register in registers 209 or stored from that register.

In one embodiment, integers are represented as thirty-two bits. When a move operation is performed from registers 209 to integer registers 201, then only the low thirty-two bits of the packed data are moved to the specified integer register. In one embodiment, the high order thirty-two bits are zeroed. Similarly, only the low thirty-two bits of a register in registers 209 are loaded when a move is executed from integer registers 201 to registers 209. In one embodiment, processor 109 supports a thirty-two bit move operation between a register in registers 209 and memory. In another embodiment, a move of only thirty-two bits is performed on the high order thirty-two bits of packed data.

*PACK OPERATION*

In one embodiment of the invention, the SRC1 602 register contains data (Source1), the SRC2 603 register contains the data (Source2), and DEST 605 register will contain the result data (Result) of the operation. That is, parts of Source1 and parts of Source2 will be packed together to generate Result.

In one embodiment, a pack-operation converts packed words (or doublewords) into packed bytes (or words) by packing the low order bytes (or words) of the source packed words (or doublewords) into the bytes (or words) of the Result. In one embodiment, the pack operation converts quad packed words into packed doublewords. This operation can be optionally performed with signed data. Further, this operation can be optionally performed with saturate. In an alternative embodiment, additional pack operations are included which operates on the high order portions of each data element.

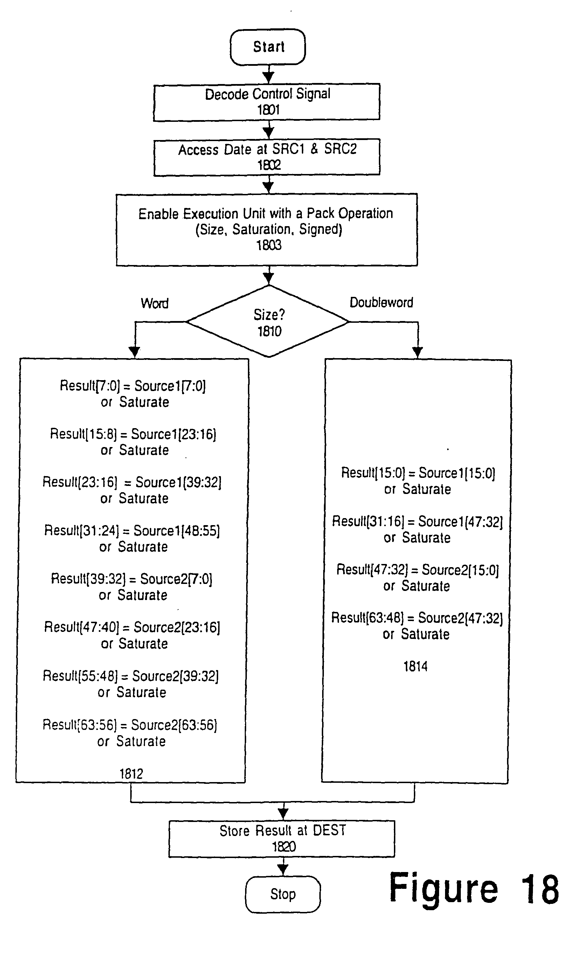

Figure 18 is a flow diagram illustrating a method for performing pack operations on packed data according to one embodiment of the invention.

At step 1801, decoder 202 decodes control signal 207 received by processor 109. Thus, decoder 202 decodes: the operation code for the appropriate pack operation; SRC1 602, SRC2 603 and DEST 605 addresses in registers 209; saturate/unsaturate, signed/unsigned, and length of the data elements in the packed data. As mentioned previously, SRC1 602 (or SRC2 603) can be used as DEST 605.

At step 1802, via internal bus 170, decoder 202 accesses registers 209 in register file 150 given the SRC1 602 and SRC2 603 addresses. Registers 209 provides execution unit 130 with the packed data stored in the SRC1 602 register (Source1), and the packed data stored in SRC2 603 register (Source2). That is, registers 209 communicate the packed data to execution unit 130 via internal bus 170.

At step 1803, decoder 202 enables execution unit 130 to perform the appropriate pack operation. Decoder 202 further communicates, via internal bus 170, saturate and the size of the data elements in Source1 and Source2. Saturate is optionally used to maximize the value of the data in the result data element. If the value of the data elements in Source1 or Source2 are greater than or less than the range of values that the data elements of Result can represent, then the corresponding result data element is set to its highest or lowest value. For example, if signed values in the word data elements of Source1 and Source2 are smaller than 0x80 (or 0x8000 for doublewords), then the result byte (or word) data elements are clamped to 0x80 (or 0x8000 for doublewords). If signed values in word data elements of Source1 and Source 2 are greater than 0x7F (or 0x7FFF for doublewords), then the result byte (or word) data elements are clamped to 0x7F (or 0x7FFF).

At step 1810, the size of the data element determines which step is to be executed next. If the size of the data elements is sixteen bits (packed word 402 data), then execution unit 130 performs step 1812. However, if the size of the data elements in the packed data is thirty-two bits (packed doubleword 403 data), then execution unit 130 performs step 1814.

Assuming the size of the source data elements is sixteen bits, then step 1812 is executed. In step 1812, the following is performed. Source1 bits seven through zero are Result bits seven through zero. Source1 bits twenty-three through sixteen are Result bits fifteen through eight. Source1 bits thirty-nine through thirty-two are Result bits twenty-three through sixteen. Source1 bits sixty-three through fifty-six are Result bits thirty-one through twenty-four. Source2 bits seven through zero are Result bits thirty-nine through thirty-two. Source2 bits twenty-three through sixteen are Result bits forty-seven through forty. Source2 bits thirty-nine through thirty-two are Result bits fifty-five through forty-eight. Source2 bits sixty-three through fifty-six are Result bits thirty-one through twenty-four. If saturate is set, then the high order bits of each word are tested to determine whether the Result data element should be clamped.

Assuming the size of the source data elements is thirty-two bits, then step 1814 is executed. In step 1814, the following is performed: Source1 bits fifteen through zero are Result bits fifteen through zero. Source1 bits forty-seven through thirty-two are Result bits thirty-one through sixteen. Source2 bits fifteen through zero are Result bits forty-seven through thirty-two. Source2 bits forty-seven through thirty-two are Result bits sixty-three through forty-eight. If saturate is set, then the high order bits of each doubleword are tested to determine whether the Result data element should be clamped.

In one embodiment, the packing of step 1812 is performed simultaneously. However, in another embodiment, this packing is performed serially. In another embodiment, some of the packing is performed simultaneously and some is performed serially. This discussion also applies to the packing of step 1814.

At step 1820, the Result is stored in the DEST 605 register.

Table 24 illustrates the in-register representation of a pack word operation. The subscripted $H_S$ and $L_S$ represent the high and low order bits, respectively, of each 16-bit data element in Source1 and Source2. For example, $A_L$ represents the low order 8 bits of the data element A in Source1.

Table 24

Table 25 illustrates the in-register representation of a pack doubleword operation, where the subscripted $H_S$ and $L_S$ represent the high low order bits, respectively, of each 32-bit data element in Source1 and Source2.

Table 25

31

PACK CIRCUITS

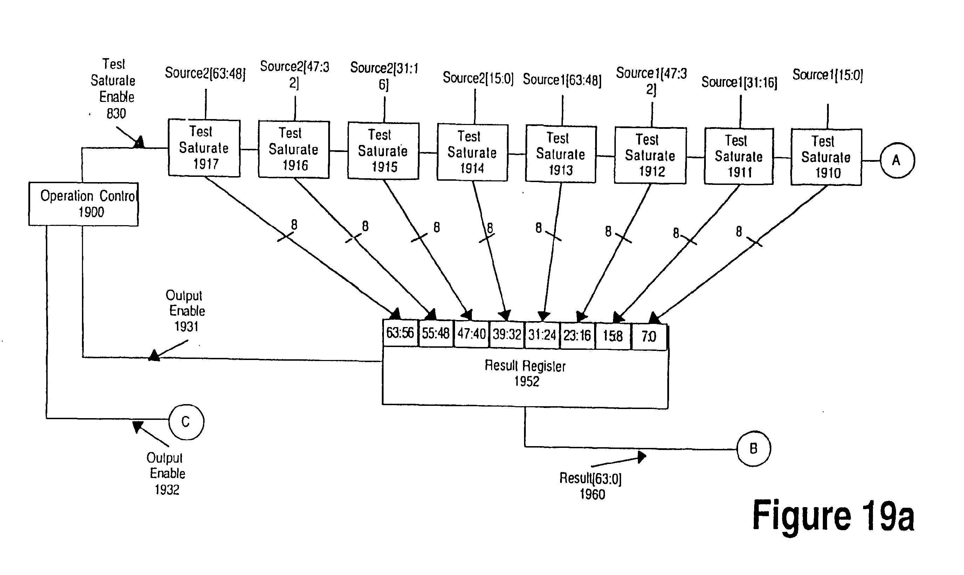

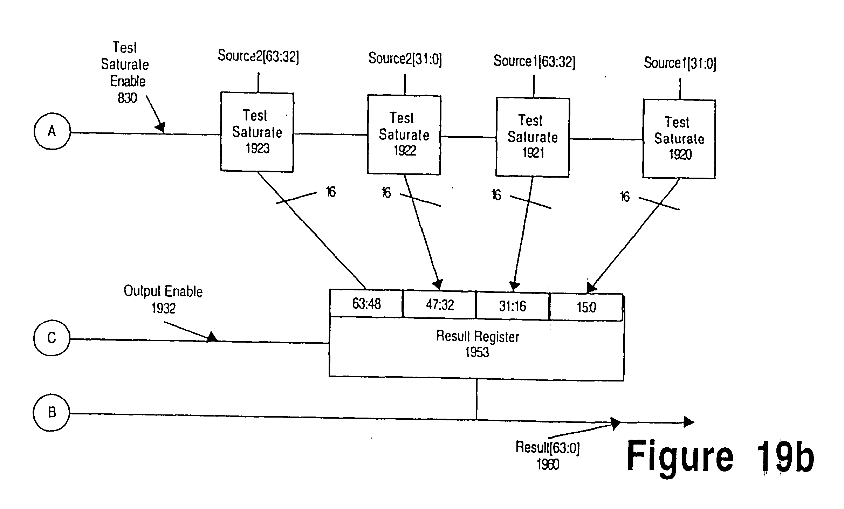

In one embodiment of the invention, to achieve efficient execution of pack operations parallelism is used. Figures 19a and 19b illustrate a circuit for performing pack operations on packed data according to one embodiment of the invention. The circuit can optionally perform the pack operation with saturation.

The circuit of Figures 19a and 19b includes an operation control 1900, a result register 1952, a result register 1953, eight sixteen bit to eight bit test saturate circuits, and four thirty-two bit to sixteen bit test saturate circuits.

Operation control 1900 receives information from the decoder 202 to enable a pack operation. Operation control 1900 uses the saturate value to enable the saturation tests for each of the test saturate circuits. If the size of the source packed data is word packed data 503, then output enable 1931 is set by operation control 1900. This enables the output of result register 1952. If the size of the source packed data is doubleword packed data 504, then output enable 1932 is set by operation control 1900. This enables the output of output register 1953.

Each test saturate circuit can selectively test for saturation. If a test for saturation is disabled, then each test saturate circuit merely passes the low order bits through to a corresponding position in a result register. If a test for saturate is enabled, then each test saturate circuit tests the high order bits to determine if the result should be clamped.

Test saturate 1910 through test saturate 1917 have sixteen bit inputs and eight bit outputs. The eight bit outputs are the lower eight bits of the inputs, or optionally, are a clamped value (0x80, 0x7F, or 0xFF). Test saturate 1910 receives Source1 bits fifteen through zero and outputs bits seven through zero for result register 1952. Test saturate 1911 receives Source1 bits thirty-one through sixteen and outputs bits fifteen through eight for result register 1952. Test saturate 1912 receives Source1 bits forty-seven through thirty-two and outputs bits twenty-three through sixteen for result register 1952. Test saturate 1913 receives Source1 bits sixty-three through forty-eight and outputs bits thirty-one through twenty-four for result register 1952. Test saturate 1914 receives Source2 bits fifteen through zero and outputs bits thirty-nine through thirty-two for result register 1952. Test saturate 1915 receives Source2 bits thirty-one through sixteen and outputs bits forty-seven through forty for result register 1952. Test saturate 1916 receives Source2 bits forty-seven through thirty-two and outputs bits fifty-five through forty-eight for result register 1952. Test saturate 1917 receives Source2 bits sixty-three through forty-eight and outputs bits sixty-three through fifty-six for result register 1952.

Test saturate 1920 through test saturate 1923 have thirty-two bit inputs and sixteen bit outputs. The sixteen bit outputs are the lower sixteen bits of the inputs, or optionally, are a clamped value (0x8000, Ox7FFF, or 0xFFFF). Test saturate 1920 receives Source1 bits thirty-one through zero and outputs bits fifteen through zero for result register 1953. Test saturate 1921 receives Source1 bits sixty-three through thirty-two and outputs bits thirty-one through sixteen for result register 1953. Test saturate 1922 receives Source2 bits thirty-one through zero and outputs bits forty-seven through thirty-two for result register 1953. Test saturate 1923 receives Source2 bits sixty-three through thirty-two and outputs bits sixty-three though forty-eight of result register 1953.

For example, in Table 26, a pack word unsigned with no saturate is performed. Operation control 1900 will enable result register 1952 to output result[63:0] 1960.

Source1

| | | | | | 00001110 01110000 | 00001110 00001000 |
|---|---|---|---|---|---|---|
| ... | | ... | | 3 | 2 | 1 | 0 |

Source2

| | | | | | 00001110 10000001 | 00001110 10000001 |
|---|---|---|---|---|---|---|
| ... | | ... | | 3 | 2 | 1 | 0 |

Result

| ... | ... | 10000001 | 10000001 | ... | ... | 01110000 | 00001000 |
|---|---|---|---|---|---|---|---|
| 7 | 6 | 5 | 4 | 3 | 2 | 1 | 0 |

Table 26

However, if a pack doubleword unsigned with no saturate is performed, operation control 1900 will enable result register 1953 to output result[63:0] 1960. Table 27 illustrates this result.

| | | | |
|---|---|---|---|
| ... | ... | 00001110 01000001 | 00001110 00001000 |

Source1

1 → 0

| | | | |
|---|---|---|---|
| ... | ... | 00001110 00000001 | 00001110 10000001 |

Source2

1 → 0

| | | | |
|---|---|---|---|
| ... | 00001110 10000001 | ... | 00001110 00001000 |

Result

3 — 2 — 1 — 0

**Table 27**

ADVANTAGES OF INCLUDING THE DESCRIBED PACK OPERATION IN THE INSTRUCTION SET

The described pack instruction packs a predefined number of bits from each data element in Source1 and Source 2 to generate the Result. In this manner, processor 109 can pack data in as little as half the instructions required by prior art general purpose processors. For example, generating a result which contains four 16-bit data elements from four 32-bit data elements requires only one instruction (as opposed to 2 instructions) as shown below:

Pack.High Source1,Source2

| $A_0.$ | $.A_0$ | $C_0.$ | $.C_0$ | Source1 |
|---|---|---|---|---|
| | | | | |
| $G_0.$ | $.G_0$ | $B_0.$ | $.B_0$ | Source2 |
| | = | | | |
| $A_0.$ | $C_0.$ | $G_0.$ | $B_0.$ | Result1 |

**Table 28**

Typical multimedia applications pack large amounts of data. Thus, by reducing the number of instructions required to pack this data by as much as half, performance of these multimedia applications is increased.

*UNPACK OPERATION*

UNPACK OPERATION

In one embodiment, an unpack operation interleaves the low order packed bytes, words or doublewords of two source packed data to generate result packed bytes, words, or doublewords. This operation is referred to herein as an unpack low operation. In another embodiment, an unpack operation could also interleave the high order elements (referred to as the unpack high operation).

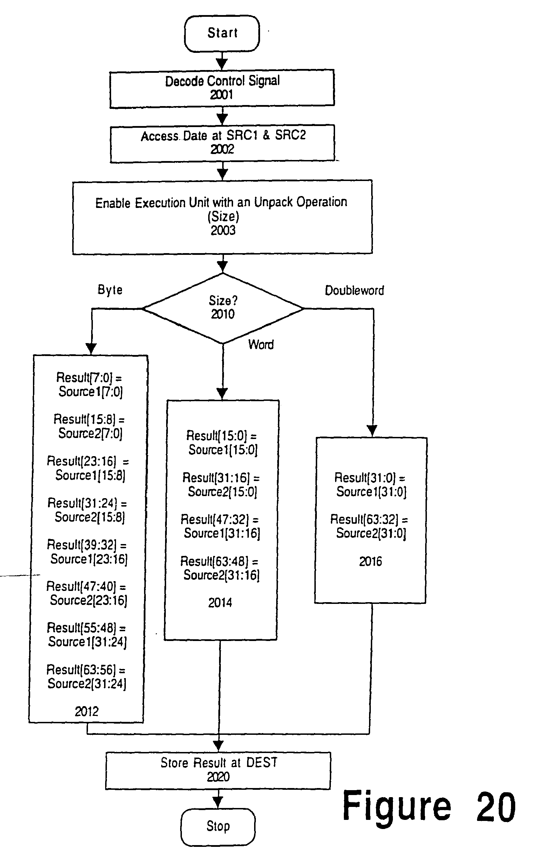

Figure 20 is a flow diagram illustrating a method for performing unpack operations on packed data according to one embodiment of the invention.

Step 2001 and step 2002 are executed first. At step 2003, decoder 202 enables execution unit 130 to perform the unpack operation. Decoder 202 communicates, via internal bus 170, the size of the data elements in Source1 and Source2.

At step 2010, the size of the data element determines which step is to be executed next. If the size of the data elements is eight bits (packed byte 401 data), then execution unit 130 performs step 2012. However, if the size of the data elements in the packed data is sixteen bits (packed word 402 data), then execution unit 130 performs step 2014.

However, if the size of the data elements in the packed data is thirty-two bits (packed doubled word 503 data), then execution unit 130 performs step 2016.

Assuming the size of the source data elements is eight bits, then step 2012 is executed. In step 2012, the following is performed. Source1 bits seven through zero are Result bits seven through zero. Source2 bits seven through zero are Result bits fifteen through eight. Source1 bits fifteen through eight are Result bits twenty-three through sixteen. Source2 bits fifteen through eight are Result bits thirty-one through twenty-four. Source1 bits twenty-three through sixteen are Result bits thirty-nine through thirty-two. Source2 bits twenty-three through sixteen are Result bits forty-seven through forty. Source1 bits thirty-one through twenty-four are Result bits fifty-five through forty-eight. Source2 bits thirty-one through twenty-four are Result bits sixty-three through fifty-six.

Assuming the size of the source data elements is sixteen bits, then step 2014 is executed. In step 2014, the following is performed. Source1 bits fifteen through zero are Result bits fifteen through zero. Source2 bits fifteen through zero are Result bits thirty-one through sixteen. Source1 bits thirty-one through sixteen are Result bits forty-seven through thirty-two. Source2 bits thirty-one through sixteen are Result bits sixty-three through forty-eight.

Assuming the size of the source data elements is thirty-two bits, then step 2016 is executed. In step 2016, the following is performed. Source1 bits thirty-one through zero are Result bits thirty-one through zero. Source2 bits thirty-one through zero are Result bits sixty-three through thirty-two.

In one embodiment, the unpacking of step 2012 is performed simultaneously. However, in another embodiment, this unpacking is performed serially. In another embodiment, some of the unpacking is performed simultaneously and some is performed serially. This discussion also applies to the unpacking of step 2014 and step 2016.

At step 2020, the Result is stored in the DEST 605 register.

Table 29 illustrates the in-register representation of an unpack doubleword operation (each of data elements $A_{0-1}$ and $B_{0-1}$ contain 32 bits).

Table 29

Table 30 illustrates the in-register representation of an unpack word operation (each of data elements $A_{0-3}$ and $B_{0-3}$ contain 16 bits).

Table 30

34

Table 31 illustrates the in-register representation of an unpack byte operation (each of data elements $A_{0-7}$ and $B_{0-7}$ contain 8 bits).

Table 31

UNPACK CIRCUITS

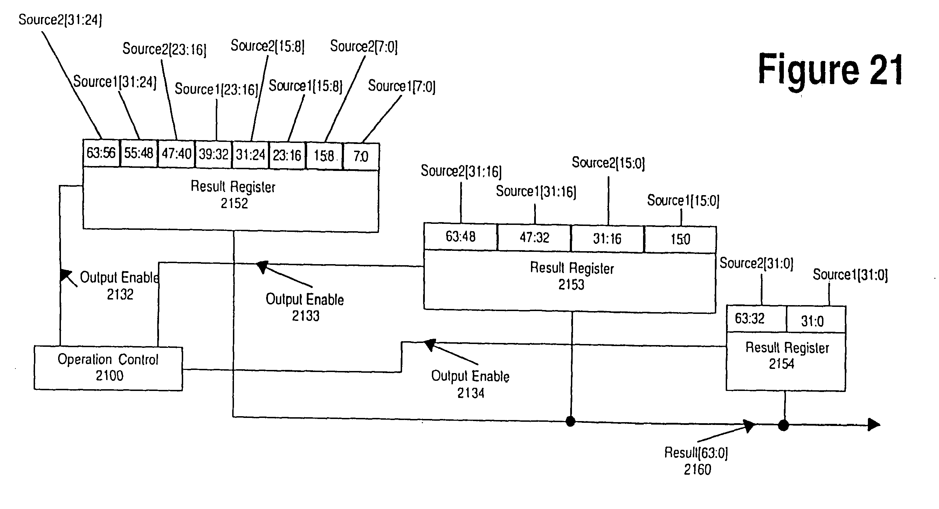

Figure 21 illustrates a circuit for performing unpack operations on packed data according to one embodiment of the invention. The circuit of Figure 21 includes the operation control circuit 2100, a result register 2152, a result register 2153, and a result register 2154.

Operation control 2100 receives information from the decoder 202 to enable an unpack operation. If the size of the source packed data is byte packed data 502, then output enable 2132 is set by operation control 2100. This enables the output of result register 2152. If the size of the source packed data is word packed data 503, then output enable 2133 is set by operation control 2100. This enables the output of output register 2153. If the size of the source packed data is doubleword packed data 504, then output enable 2134 is set by operation control 2100. This enables the output of output result register 2154.

Result register 2152 has the following inputs. Source1 bits seven through zero are bits seven through zero for result register 2152. Source2 bits seven through zero are bits fifteen through eight for result register 2152. Source1 bits fifteen through eight are bits twenty-three through sixteen for result register 2152. Source 2 bits fifteen through eight are bits thirty-one through twenty-four for result register 2152. Source1 bits twenty-three through sixteen are bits thirty-nine through thirty-two for result register 2152. Source2 bits twenty-three through sixteen are bits forty-seven through forty for result register 2152. Source1 bits thirty-one through twenty-four are bits fifty-five through forty-eight for result register 2152. Source2 bits thirty-one through twenty-four are bits sixty-three through fifty-six for result register 2152.

Result register 2153 has the following inputs. Source1 bits fifteen through zero are bits fifteen through zero for result register 2153. Source2 bits fifteen through zero are bits thirty-one through sixteen for result register 2153. Source1 bits thirty-one through sixteen are bits forty-seven through thirty-two for result register 2153. Source2 bits thirty-one through sixteen are bits sixty-three though forty-eight of result register 1953.

Result register 2154 has the following inputs. Source1 bits thirty-one through zero are bits thirty-one through zero for result register 2154. Source2 bits thirty-one through zero are bits sixty-three through thirty-two of result register 2154.

For example, in Table 32, an unpack word operation is performed. Operation control 2100 will enable result register 2153 to output result[63:0] 2160.

Source 1

| ... | ... | 00001110  01110000 | 00001110  00001000 |
|---|---|---|---|
| 3 | 2 | 1 | 0 |

Source 2

| ... | ... | 00001110  00000001 | 00001110  10000001 |
|---|---|---|---|
| 3 | 2 | 1 | 0 |

Result

| 00001110  00000001  00001110  01110000 | 00001110  10000001  00001110  00001000 |
|---|---|
| 3   2 | 1   0 |

## Table 32

However, if an unpack doubleword is performed, operation control 2100 will enable result register 2154 to output result[63:0] 2160. Table 33 illustrates this result.

Source 1

| ... | 00001110 01000001    00001110 00001000 |
|---|---|
| 1 | 0 |

Source 2

| ... | 00001110 00000001    00001110 10000001 |
|---|---|
| 1 | 0 |

Result

| 00001110 00000001    00001110 10000001 | 00001110 01000001    00001110 00001000 |
|---|---|
| 1 | 0 |

## Table 33

ADVANTAGES OF INCLUDING THE DESCRIBED UNPACK INSTRUCTION IN THE INSTRUCTION SET

By including the described unpack instruction in the instruction set, packed data may be either interleaved or unpacked. This unpack instruction can be used for unpacking packed data by making all of the data elements in Source2 all 0s. An example of unpacking bytes is shown below in Table 34a.

| | | | | | | | Source1 |
|---|---|---|---|---|---|---|---|
| 00101010 | 01010101 | 01010101 | 11111111 | 10000000 | 01110000 | 10001111 | 10001000 |
| 7 | 6 | 5 | 4 | 3 | 2 | 1 | 0 |

| | | | | | | | Source2 |
|---|---|---|---|---|---|---|---|
| 00000000 | 00000000 | 00000000 | 00000000 | 00000000 | 00000000 | 00000000 | 00000000 |
| 7 | 6 | 5 | 4 | 3 | 2 | 1 | 0 |

| | | | Result |
|---|---|---|---|
| 00000000 10000000 | 00000000 01110000 | 00000000 10001111 | 00000000 10001000 |
| 3 | 2 | 1 | 0 |

## Table 34a

This same unpack instruction can be used for interleaving data as shown in Table 34b. Interleaving is useful in a number of multimedia algorithms. For example, interleaving is useful for transposing matrixes and interpolating pixels.

| | | | | | | | Source1 |
|---|---|---|---|---|---|---|---|
| 00101010 | 01010101 | 01010101 | 11111111 | 10000000 | 01110000 | 10001111 | 10001000 |
| 7 | 6 | 5 | 4 | 3 | 2 | 1 | 0 |

| | | | | | | | Source2 |
|---|---|---|---|---|---|---|---|
| 00000000 | 00000000 | 11000000 | 00000000 | 11110011 | 00000000 | 10001110 | 10001000 |
| 7 | 6 | 5 | 4 | 3 | 2 | 1 | 0 |

| | | | | | | | Result |
|---|---|---|---|---|---|---|---|
| 11110011 | 10000000 | 00000000 | 01110000 | 10001110 | 10001111 | 10001000 | 10001000 |
| 7 | 6 | 5 | 4 | 3 | 2 | 1 | 0 |

## Table 34b

Thus, by providing this unpack instruction in the instruction set supported by processor 109, processor 109 is more versatile and can perform algorithms requiring this functionality at a higher performance level.

*POPULATION COUNT*

POPULATION COUNT

One embodiment of the invention enables population count operations to be performed on packed data. That is, the invention generates a result data element for each data element of a first packed data. Each result data element represents the number of bits set in each corresponding data element of the first packed data. In one embodiment, the total number of bits set to one is counted.

Table 35a illustrates an in-register representation of a population count operation on a packed data. The first row of bits is the packed data representation of a Source1 packed data. The second row of bits is the packed data representation of the Result packed data. The number below each data element bit is the data element number. For example, Source1 data element 0 is $1000111110001000_2$. Therefore, if the data elements are sixteen bits in length (word data), and a population count operation is performed, Execution unit 130 produces the Result packed data as shown.

| 01110010 00000101 | 11111111 11111111 | 01111111 11111111 | 10001111 10001000 |
|---|---|---|---|
| = 3 | = 2 | = 1 | = 0 |
| 00000000 00000110 | 00000000 00010000 | 00000000 00001111 | 00000000 00000111 |
| 3 | 2 | 1 | 0 |

### Table 35a

In another embodiment, population counts are performed on eight bit data elements. Table 35b illustrates an in-register representation of a population count on a packed data having eight eight-bit packed data elements.

| 01111111 | 01010101 | 10101010 | 10000001 | 10000000 | 11111111 | 11001111 | 00000000 |
|---|---|---|---|---|---|---|---|
| = 7 | = 6 | = 5 | = 4 | = 3 | = 2 | = 1 | = 0 |
| 00000111 | 00000100 | 00000100 | 00000010 | 00000001 | 00001000 | 00000110 | 00000000 |
| 7 | 6 | 5 | 4 | 3 | 2 | 1 | 0 |

### Table 35b

In another embodiment, population counts are performed on thirty-two bit data elements. Table 35c illustrates an in-register representation of a population count on a packed data having two, thirty-two bit, packed data elements.

| 11111111 11111111 11111111 11111111 | 10000000 11110000 11001111 10001000 |
|---|---|
| = 1 | = 0 |
| 00000000 00000000 00000000 00100000 | 00000000 00000000 00000000 00001101 |
| 1 | 0 |

### Table 35c

Population counts can also be performed on sixty-four bit integer data. That is, the number of bits set to one, in sixty-four bits of data, is totaled. Table 35d illustrates an in-register representation of a population count on sixty-four bit integer data.

| | | | | | | | |
|---|---|---|---|---|---|---|---|
| 11111111 | 11111111 | 11111111 | 11111111 | 10000000 | 11110000 | 11001111 | 10001000 |

=

| | | | | | | | |
|---|---|---|---|---|---|---|---|
| 00000000 | 00000000 | 00000000 | 00100000 | 00000000 | 00000000 | 00000000 | 00101101 |

**Table 35d**

A METHOD OF PERFORMING A POPULATION COUNT

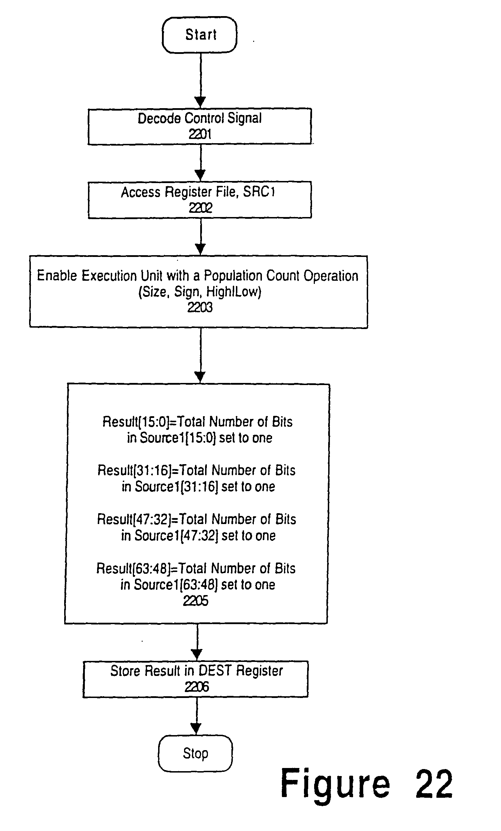

Figure 22 is a flow diagram illustrating a method for performing a population count operation on packed data according to one embodiment of the invention. At step 2201, responsive to receiving a control signal 207, decoder 202 decodes that control signal 207. In one embodiment, control signal 207 is supplied via bus 101. In another embodiment, control signal 207 is supplied by cache 160. Thus, decoder 202 decodes: the operation code for population count, and SRC1 602 and DEST 605 addresses in registers 209. Note that SRC2 603 is not used in this present embodiment of the invention. As well, saturate/unsaturate, signed/unsigned, and length of the data elements in the packed data are not used in this embodiment. In the present embodiment of the invention, only sixteen bit data element length packed addition is supported. However, one skilled in the art would understand that population counts can be performed on packed data having eight packed byte data elements or two packed doubleword data elements.

At step 2202, via internal bus 170, decoder 202 accesses registers 209 in register file 150 given the SRC1 602 address. Registers 209 provides Execution unit 130 with the packed data, Source1, stored in the register at this address. That is, registers 209 communicate the packed data to Execution unit 130 via internal bus 170.

At step 2130, decoder 202 enables Execution unit 130 to perform a population count operation. In an alternative embodiment, decoder 202 further communicates, via internal bus 170, the length of packed data elements.

At step 2205, assuming the length of the data elements is sixteen bits, then Execution unit 130 totals the number of bits set in bit fifteen through bit zero of Source1, producing bit fifteen through bit zero of Result packed data. In parallel with this totaling, Execution unit 130 adds totals thirty-one through bit sixteen of Source1, producing bit thirty-one through bit sixteen of Result packed data. In parallel with the generation of these totals, Execution unit 130 totals bit forty-seven through bit thirty-two of Source1, producing bit forty-seven through bit thirty-two of Result packed data. In parallel with the generation of these totals, Execution unit 130 totals bit sixty-three through-bit forty-eight of Source1, producing bit sixty-three through bit-forty-eight of Result packed data.

At step 2206, decoder 202 enables a register in registers 209 with DEST 605 address of the destination register. Thus, the Result packed data is stored in the register addressed by DEST 605.

A METHOD OF PERFORMING A POPULATION COUNT ON ONE DATA ELEMENT

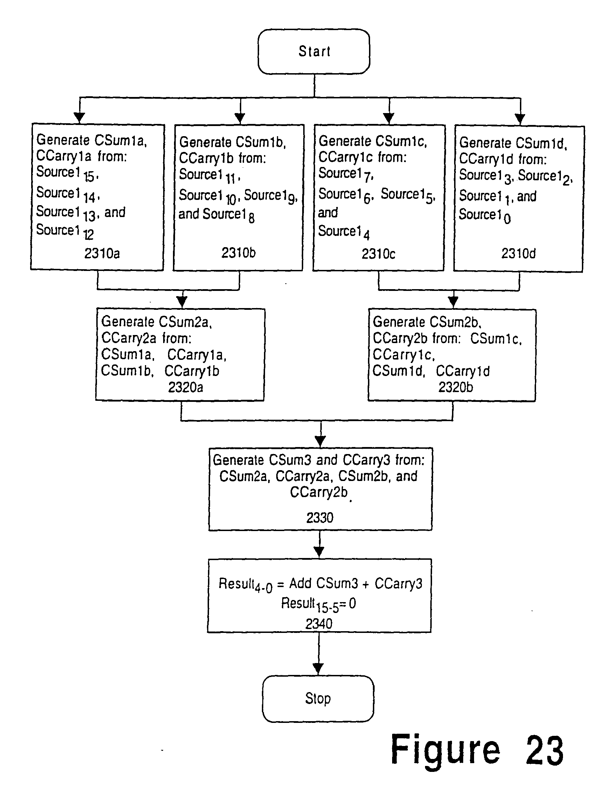

Figure 23 is a flow diagram illustrating a method for performing a population count operation on one data element of a packed data and generating a single result data element for a result packed data according to one embodiment of the invention. At step 2310a, a column sum, CSum1a, and a column carry, CCarry 1a, are generated from Source1 bits fifteen, fourteen, thirteen and twelve. At step 2310b, a column sum, CSum1b, and a column carry, CCarry 1b, are generated from Source1 bits eleven, ten, nine and eight. At step 2310c, a column sum, CSum1c, and a column carry, CCarry 1c, are generated from Source1 bits seven, six, five and four. At step 2310d, a column sum, CSum1d, and a column carry, CCarry 1d, are generated from Source1 bits three, two, one and zero. In one embodiment of the invention, steps 2310a-d are performed in parallel. At step 2320a, a column sum, CSum2a, and a column carry, CCarry 2b, are generated from CSum1a, CCarry1a, CSum1b, and CCarry1b. At step 2320b, a column sum, CSum2b, and a column carry, CCarry 2b, are generated from CSum1c, CCarry1, CSum1d, and CCarry1d. In one embodiment of the invention, steps 2320a-b are performed in parallel. At step 2330, a column sum, CSum3, and a column carry, CCarry 3, are generated from CSum2a, CCarry2a, CSum2b, and CCarry2b. At step 2340, a Result is generated from CSum3 and CCarry3. In one embodiment, the Result is represented in sixteen bits. In this embodiment, as only bit four through bit zero are need to represent the maximum number of bits set in a Source1, bits fifteen through five are set to zero. The maximum number of bits for Source1 is sixteen. This occurs when Source1 equals $1111111111111111_2$. The Result would be sixteen and would be represented by $0000000000010000_2$.

Thus, to calculate four result data elements for a population count operation on a sixty-four bit packed data, the steps of Figure 23 would be performed for each data element in the packed data. In one embodiment, the four sixteen bit result data elements would be calculated in parallel.

## A CIRCUIT FOR PERFORMING A POPULATION COUNT

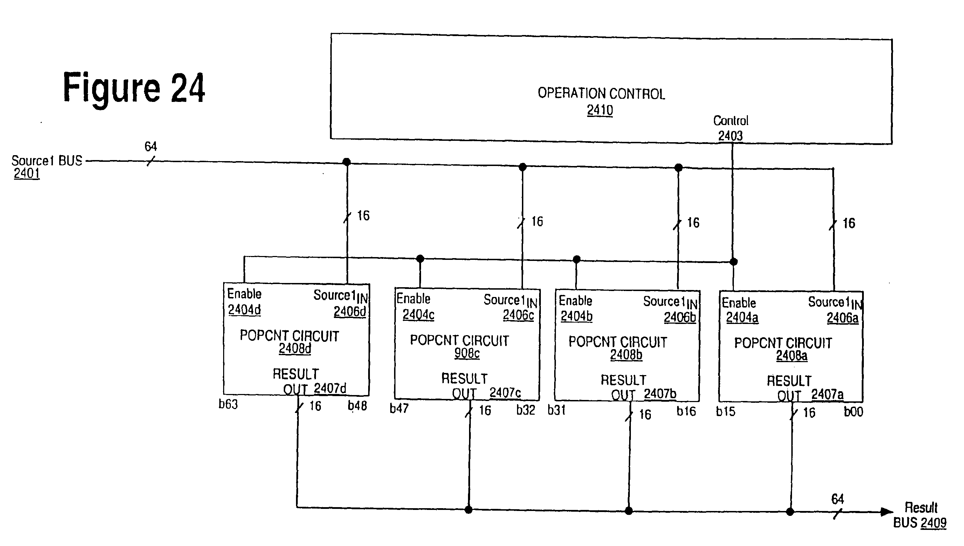

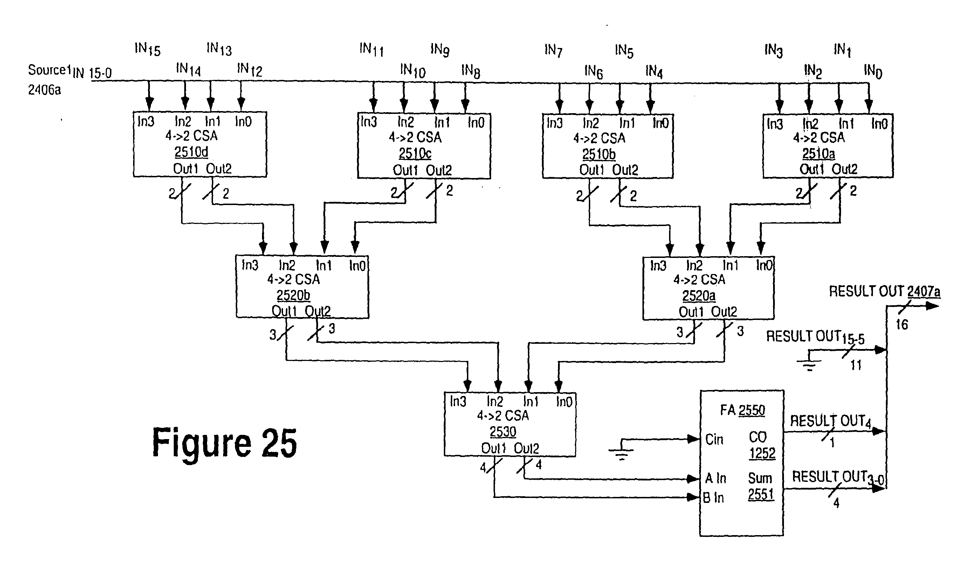

Figure 24 illustrates a circuit for performing a population count operation on packed data having four word data elements according to one embodiment of the invention. Figure 25 illustrates a detailed circuit for performing a population count operation on one word data element of a packed data according to one embodiment of the invention.

Figure 24 illustrates a circuit wherein Source1 bus 2401 carries information signals to the popcnt circuits 2408a-d via Source1$_{IN}$ 2406a-d. Thus, popcnt circuit 2408a totals the number of bits set in bit fifteen through bit zero of Source1, producing bit fifteen through bit zero of Result. Popcnt circuit 2408b totals the number of bits set in bit thirty-one through bit sixteen of Source1, producing bit thirty-one through bit sixteen of Result. Popcnt circuit 2408c totals the number of bits set in bit forty-seven through bit thirty-two of Source1, producing bit forty-seven through bit thirty-two of Result. Popcnt circuit 2408d totals the number of bits set in bit sixty-three through bit forty-eight of Source1, producing bit sixty-three through bit forty-eight of Result. Enable 2404a-d receives, from Operation Control 2410, via control 2403, control signals enabling popcnt circuits 2408a-d to perform population count operations, and to place a Result on the Result Bus 2409. One skilled in the art would be able to create such a circuit given the above description and the above description and illustrations in Figures 1-6b and 23-25.

Popcnt circuits 2408a-d communicate result information of a packed population count operation onto Result bus 2409, via result out 2407a-d. This result information is then stored in the integer register specified by the DEST 605 register address.

## A CIRCUIT FOR PERFORMING A POPULATION COUNT ON ONE DATA ELEMENT

Figure 25 illustrates a detailed circuit for performing a population count operation on one, word, data element of a packed data. In particular, Figure 25 illustrates a portion of popcnt circuit 2408a. To achieve the maximum performance for applications employing a population count operation, the operation should be complete within one clock cycle. Therefore, given that accessing a register and storing a result requires a certain percentage of the clock cycle, the circuit of Figure 24 completes its operation within approximately 80% of one clock period. This circuit has the advantage of allowing processor 109 to execute a population count operation on four sixteen bit data elements in one clock cycle.

Popcnt circuit 2408a employs 4->2 carry-save adders (unless otherwise specified, CSA will refer to a 4->2 carry-save adder). 4->2 carry-save adders, as may be employed in the popcnt circuit 2408a-d, are well known in the art. A 4->2 carry-save adder is an adder that adds four operands, resulting in two sums. Since the population count operation in popent circuit 2408a involves sixteen bits, the first level includes four 4->2 carry-save adders. These four 4->2 carry-save adders transform the sixteen one-bit operands into eight two-bit sums. The second level transforms the eight two-bit sums into four three-bit sums, and the third level transforms the four three-bit sums into two four-bit sums. Then a four-bit full adder, adds the two four-bit sums to generate a final result.

Although 4->2 carry-save adders are used, an alternative embodiments could employ 3->2 carry-save adders. Alternatively, a number of full adders could be used; however, this configuration would not provide a result as quickly as the embodiment shown in Figure 25.

Source1$_{IN\ 15-0}$ 2406a carries bit fifteen through bit zero of Source1. The first four bits are coupled to the inputs of a 4->2 carry-save adder (CSA 2510a). The next four bits are coupled to the inputs of CSA 2510b. The next four bits are coupled to the inputs of CSA 2510c. The final four bits are coupled to the inputs of CSA 2510d. Each CSA 2510a-d generates two, two-bit, outputs. The two, two bit, outputs of CSA 2510a are coupled to two inputs of CSA 2520a. The two, two bit, outputs of CSA 2510b are coupled to the other two inputs of CSA 2520a. The two, two bit outputs of CSA 2510c are coupled to two inputs of CSA 2520b. The two, two bit outputs of CSA 2510d are coupled to the other two inputs of CSA 2520b. Each CSA 2520a-b generates two, three bit, outputs. The two, three bit, outputs of 2520a are coupled to two inputs of CSA 2530. The two , three bit, outputs of 2520b are coupled to the other two inputs of CSA 2530. CSA 2530 generates two, four bit, outputs.

These two four bit outputs are coupled to two inputs of a full adder (FA 2550). FA 2550 adds the two four bit inputs and communicates bit three through bit zero of Result Out 2407a as a total of the addition of the two, four bit, inputs. FA 2550 generates bit four of Result Out 2407a through carry out (CO 2552). In an alternative embodiment, a five bit full adder is used to generate bit four through bit zero of Result Out 2407a. In either case, bit fifteen through bit five of Result Out 2407a are tied to zero. As well, any carry inputs to the full adder are tied to zero.

Although not shown in Figure 25, one skilled in the art would understand that Result Out 2407a could be multiplexed or buffered onto Result bus 2409. The multiplexor would be controlled by Enable 2404a. This would allow other Execution unit circuits to write data onto Result bus 2409.

ADVANTAGES OF INCLUDING THE DESCRIBED POPULATION COUNT OPERATION IN THE INSTRUCTION SET

The described population count instruction calculates the number of bits set in each of the data elements of packed data, such as Source1. Thus, by including this instruction in the instruction set, a population count operation may be performed on packed data in a single instruction. In contrast, prior art general purpose processors must perform numerous instructions to unpack Source1, perform the function individually on each unpacked data element, and then pack the results for further packed processing.

Thus, by providing this population count instruction in the instruction set supported by processor 109, the performance of algorithms requiring this functionality is increased.

*LOGICAL OPERATIONS*

LOGICAL OPERATIONS

In one embodiment of the invention, the SRC1 register contains packed data (Source1), the SRC2 register contains packed data (Source2), and the DEST register will contain the result (Result) of performing the selected logical operation on Source1 and Source2. For example, if the logical AND operation is selected, Source1 will be logically ANDed with Source 2.

In one embodiment of the invention, the following logical operations are supported: logical AND, logical ANDN, logical OR, and logical XOR. The logical AND, OR, and XOR operations are well known in the art. The logical ANDN operation causes Source2 to be ANDed with the logical inversion of Source 1. While the invention is described in relation to these logical operations, alternative embodiments could implement other logical operations.

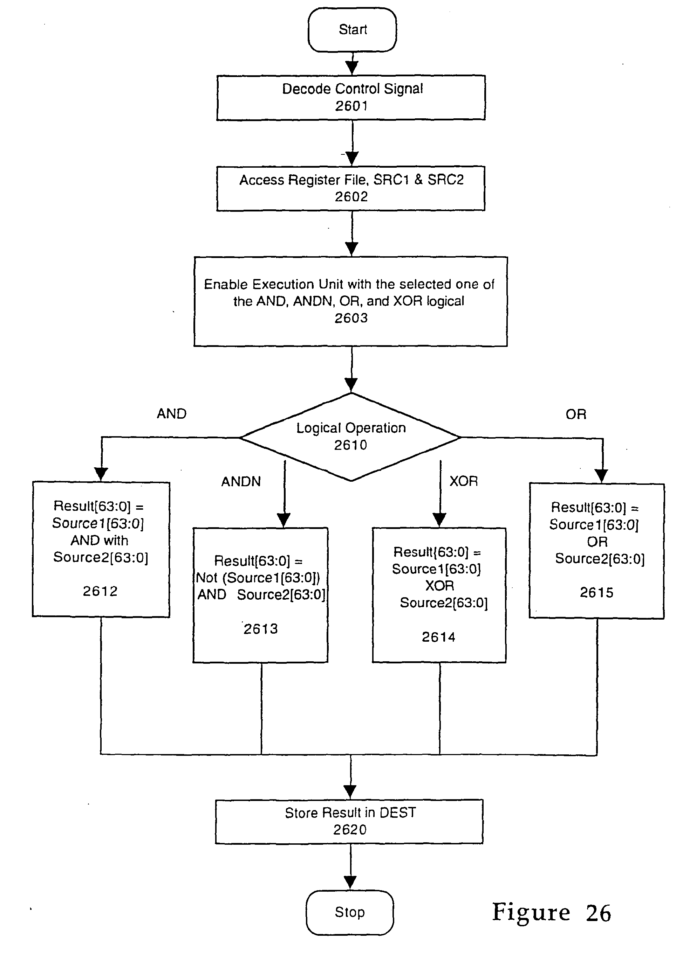

Figure 26 is a flow diagram illustrating a method for performing a number of logical operations on packed data according to one embodiment of the invention.

At step 2601, decoder 202 decodes control signal 207 received by processor 109. Thus, decoder 202 decodes: the operation code for the appropriate logical operation (i.e., AND, ANDN, OR, or XOR); SRC1 602, SRC2 603 and DEST 605 addresses in registers 209.

At step 2602, via internal bus 170, decoder 202 accesses registers 209 in register file 150 given the SRC1 602 and SRC2 603 addresses. Registers 209 provide execution unit 130 with the packed data stored in the SRC1 602 register (Source1) and the packed data stored in SRC2 603 register (Source2). That is, registers 209 communicate the packed data to execution unit 130 via internal bus 170.

At step 2603, decoder 202 enables execution unit 130 to perform the selected one of the packed logical operations.

At step 2610, the selected one of the packed logical operations determines which step is to be executed next. Execution unit 130 performs step 2612 if the logical AND operation was selected; Execution unit 130 performs step 2613 if the logical ANDN operation was selected; Execution unit 130 performs step 2614 if the logical OR operation was selected; and Execution unit 130 performs step 2615 if the logical XOR operation was selected.

Assuming the logical AND operation was selected, step 2612 is executed. In step 2612, Source1 bits sixty-three through zero are ANDed with Source2 bits sixty-three through zero to generate Result bits sixty-three through zero.

Assuming the logical ANDN operation was selected, step 2613 is executed. In step 2613, Source1 bits sixty-three through zero are ANDNed with Source2 bits sixty-three through zero to generate Result bits sixty-three through zero.

Assuming the logical OR operation was selected, step 2614 is executed. In step 2614, Source1 bits sixty-three through zero are ORed with Source2 bits sixty-three through zero to generate Result bits sixty-three through zero.

Assuming the logical XOR operation was selected, step 2615 is executed. In step 2615, Source1 bits sixty-three through zero are exclusive ORed with Source2 bits sixty-three through zero to generate Result bits sixty-three through zero.

At step 2620, the Result is stored in the DEST register.

Table 36 illustrates the in-register representation of a logical ANDN operation on packed data. The first row of bits is the packed data representation of Source1. The second row of bits is the packed data representation of Source2. The third row of bits is the packed data representation of the Result. The number below each data element bit is the data element number. For example, Source1 data element two is $11111111\ 00000000_2$.

| 11111111 11111111 | 11111111 00000000 | 11111111 00000000 | 00001110 00001000 |
|---|---|---|---|
| Logical ANDN _3_ | Logical ANDN _2_ | Logical ANDN _1_ | Logical ANDN _0_ |
| 00000000 00000000 | 00000000 00000001 | 10000000 00000000 | 00001110 10000001 |
| = | = | = | = |
| 00000000 00000000 | 00000000 00000001 | 00000000 00000000 | 00000000 10000001 |
| _3_ | _2_ | _1_ | _0_ |

## Table 36

While the invention is described in relation to the same logical operation being performed on corresponding data elements in Source1 and Source2, alternative embodiments could support instructions which allowed for the logical operation performed on corresponding data elements to be selected on a per element basis.

PACKED DATA LOGICAL CIRCUITS

In one embodiment, the described logical operations can occur on multiple data elements in the same number of clock cycles as a single logical operation on unpacked data. To achieve execution in the same number of clock cycles, parallelism is used.

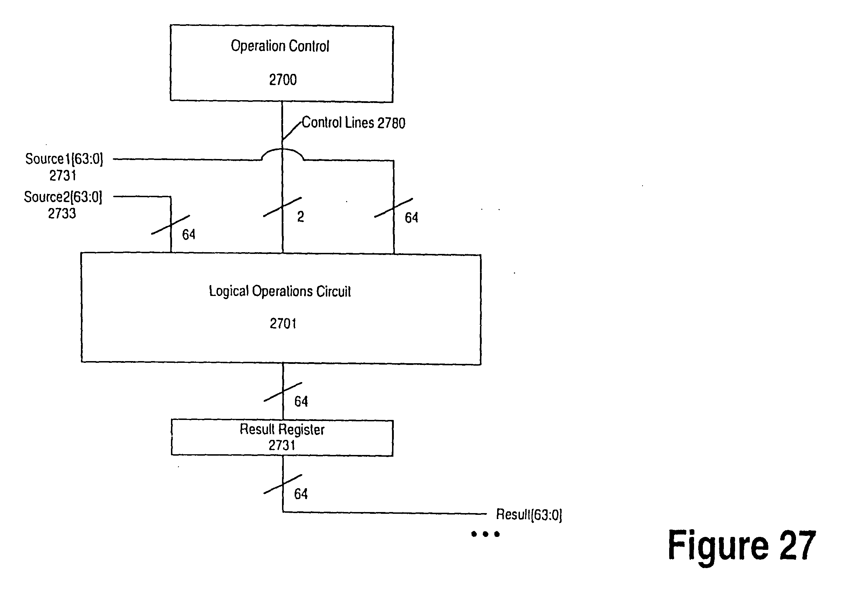

Figure 27 illustrates a circuit for performing logical operations on packed data according to one embodiment of the invention. Operation control 2700 controls the circuits performing the logical operations. Operation control 2700 processes the control signal and outputs selection signals on control lines 2780. These selection signals communicate to Logical Operations Circuit 2701 the selected one of the AND, ANDN, OR, and XOR operations.

Logical Operations Circuit 2701 receives Source1 [63:0] and Source2 [63:0] and performs the logical operation indicated by the selection signals to generate the Result. Logical Operations Circuit 2701 communicates Result [63:0] to Result Register 2731.

ADVANTAGES OF INCLUDING THE DESCRIBED LOGICAL OPERATIONS IN THE INSTRUCTION SET

The described logical instructions perform a logical AND, a logical AND NOT, a logical OR, and a logical OR NOT. These instructions are useful in any application that requires logical manipulation of data. By including these instructions in the instruction set supported by processor 109, these logical operations may be performed on packed data in one instruction.

*PACKED COMPARE*

PACKED COMPARE OPERATION

In one embodiment of the invention, the SRC1 602 register contains data (Source1) to be compared, the SRC2 603 register contains the data (Source2) to be compared against, and DEST 605 register will contain the result of the compare (Result). That is, Source1 will have each data element independently compared by the each data element of Source2, according to an indicated relationship.

In one embodiment of the invention, the following compare relationships are supported: equal; signed greater than; signed greater than or equal; unsigned greater than; or unsigned greater than or equal. The relationship is tested in each pair of corresponding data elements. For example, Source1[7:0] is greater than Source2[7:0], with the result being Result[7:0]. If the result of the comparison satisfies the relationship, then, in one embodiment, the corresponding data element in Result is set to all ones. If the result of the comparison does not satisfy the relationship, then the corresponding data element in Result is set to all zeroes.

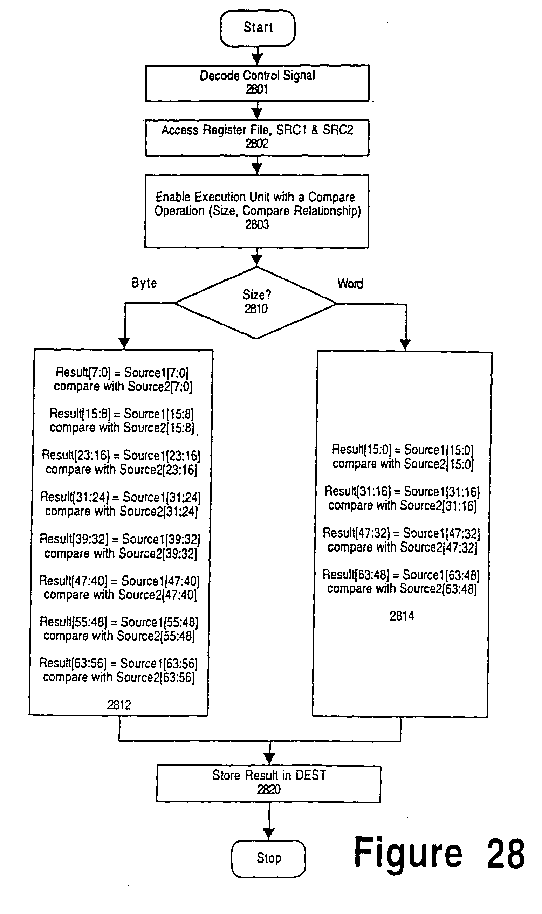

Figure 28 is a flow diagram illustrating a method for performing packed compare operations on packed data according to one embodiment of the invention.

At step 2801, decoder 202 decodes control signal 207 received by processor 109. Thus, decoder 202 decodes: the operation code for the appropriate compare operation; SRC1 602, SRC2 603 and DEST 605 addresses in registers 209; saturate/uiisaturate (not necessarily needed for compare operations), signed/unsigned, and length of the data elements in the packed data. As mentioned previously, SRC1 602 (or SRC2 603) can be used as DEST 605.

At step 2802, via internal bus 170, decoder 202 accesses registers 209 in register file 150 given the SRC1 602 and SRC2 603 addresses. Registers 209 provides execution unit 130 with the packed data stored in the SRC1 602 register (Source1), and the packed data stored in SRC2 603 register (Source2). That is, registers 209 communicate the packed data to execution unit 130 via internal bus 170.

At step 2803, decoder 202 enables execution unit 130 to perform the appropriate packed compare operation. Decoder 202 further communicates, via internal bus 170, the size of data elements and the relationship for the compare operation.

At step 2810, the size of the data element determines which step is to be executed next. If the size of the data elements is eight bits (packed byte 401 data), then execution unit 130 performs step 2812. However, if the size of the data elements in the packed data is sixteen bits (packed word 402 data), then execution unit 130 performs step 2814. In one embodiment, only eight bit and sixteen bit data element size packed compares are supported. However, in another embodiment, a thirty-two bit data element size packed compare is also supported (packed doubleword 403).

Assuming the size of the data elements is eight bits, then step 2812 is executed. In step 2812, the following is performed. Source1 bits seven through zero are compared to Source2 bits seven through zero generating Result bits seven through zero. Source1 bits fifteen through eight are compared to Source2 bits fifteen through eight generating Result bits fifteen through eight. Source1 bits twenty-three through sixteen are compared to Source2 bits twenty-three through sixteen generating Result bits twenty-three through sixteen. Source1 bits thirty-one through twenty-four are compared to Source2 bits thirty-one through twenty-four generating Result bits thirty-one through twenty-four. Source1 bits thirty-nine through thirty-two are compared to Source2 bits thirty-nine through thirty-two generating Result bits thirty-nine through thirty-two. Source1 bits forty-seven through forty are compared to Source2 bits forty-seven through forty generating Result forty-seven through forty. Source1 bits fifty-five through forty-eight are compared to Source2 bits fifty-five through forty-eight generating Result bits fifty-five through forty-eight. Source1 bits sixty-three through fifty-six are compared to Source2 bits generating Result bits sixty-three through fifty-six.

Assuming the size of the data elements is sixteen bits, then step 2814 is executed. In step 2814, the following is performed. Source1 bits fifteen through zero are compared to Source2 bits fifteen through zero generating Result bits fifteen through zero. Source1 bits thirty-one through sixteen are compared to Source2 bits thirty-one through sixteen generating Result bits thirty-one through sixteen. Source1 bits forty-seven through thirty-two are compared to Source2 bits forty-seven through thirty-two generating Result bits forty-seven through thirty-two. Source1 bits sixty-three through forty-eight are compared to Source2 bits sixty-three through forty-eight generating Result bits sixty-three through forty-eight.

In one embodiment, the compares of step 2812 are performed simultaneously. However, in another embodiment, these compares are performed serially. In another embodiment, some of these compares are performed simultaneously and some are performed serially. This discussion also applies to the compares of step 2814 as well.

At step 2820, the Result is stored in the DEST 605 register.

Table 37 illustrates the in-register representation of packed compare unsigned greater than operation. The first row of bits is the packed data representation of Source1. The second row of bits is the data representation of Source2. The third row of bits is the packed data representation of the Result. The number below each data element bit is the data element number. For example, Source1 data element three is $10000000_2$.

| 00101010 | 01010101 | 01010101 | 11111111 | 10000000 | 01110000 | 10001111 | 10001000 |
| --- | --- | --- | --- | --- | --- | --- | --- |
| 7 | 6 | 5 | 4 | 3 | 2 | 1 | 0 |
| > | > | > | > | > | > | > | > |
| 00000000 | 00000000 | 10000000 | 00000000 | 11110011 | 00000000 | 10001110 | 10001000 |
| ↓ | ↓ | ↓ | ↓ | ↓ | ↓ | ↓ | ↓ |
| 11111111 | 11111111 | 00000000 | 11111111 | 00000000 | 11111111 | 11111111 | 00000000 |
| 7 | 6 | 5 | 4 | 3 | 2 | 1 | 0 |

**Table 37**

Table 38 illustrates the in-register representation of packed compare signed greater than or equal to operation on packed byte data.

| | | | | | | | |
|---|---|---|---|---|---|---|---|
| 00101010 | 01010101 | 01010101 | 11111111 | 10000000 | 01110000 | 10001111 | 10001000 |
| >= _7_ | >= _6_ | >= _5_ | >= _4_ | >= _3_ | >= _2_ | >= _1_ | >= _0_ |
| 00000000 | 00000000 | 10000000 | 00000000 | 11110011 | 00000000 | 10001110 | 10001000 |
| ↓ | ↓ | ↓ | ↓ | ↓ | ↓ | ↓ | ↓ |
| 11111111 | 11111111 | 11111111 | 00000000 | 00000000 | 11111111 | 00000000 | 11111111 |
| _7_ | _6_ | _5_ | _4_ | _3_ | _2_ | _1_ | _0_ |

## Table 38

### PACKED DATA COMPARE CIRCUITS

In one embodiment, the compare operation can occur on multiple data elements in the same number of clock cycles as a single compare operation on unpacked data. To achieve execution in the same number of clock cycles, parallelism is used. That is, registers are simultaneously instructed to perform the compare operation on the data elements. This is discussed in more detail below.

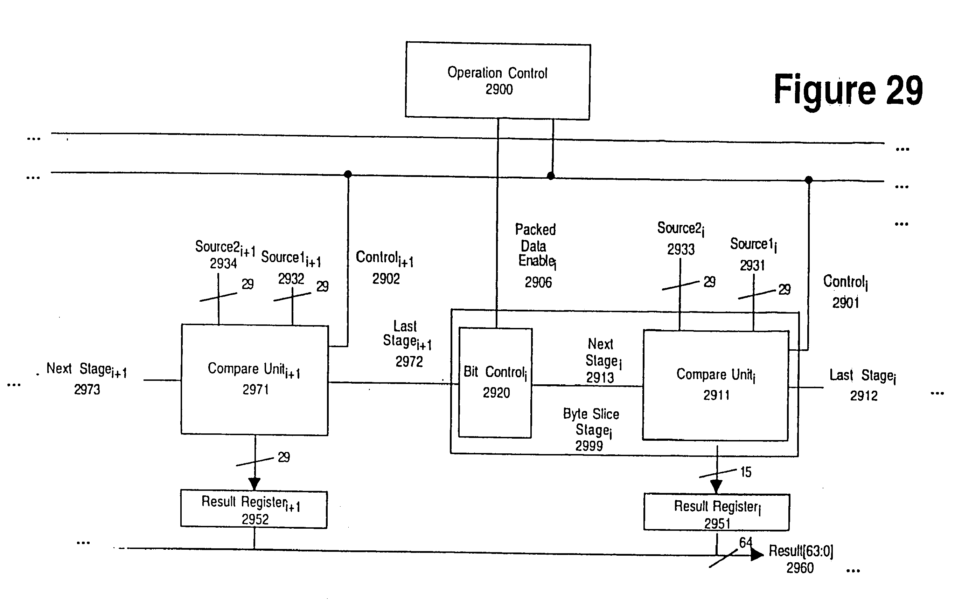

Figure 29 illustrates a circuit for performing packed compare operations on individual bytes of packed data according to one embodiment of the invention. Figure 29 illustrates the use of a modified byte slice compare circuit, byte slice stage$_i$ 2999. Each byte slice, except for the most significant data element byte slice, includes a compare unit and bit control. The most significant data element byte slice need only have a compare unit.

Compare unit$_i$ 2911 and compare unit$_{i+1}$ 2971 each allow eight bits from Source1 to be compared to the corresponding eight bits from Source2. In one embodiment, each compare unit operates like a known eight bit compare circuit. Such a known eight bit compare circuit includes a byte slice circuit allowing the subtraction of Source2 from Source1. The results of the subtraction are processed to determine the results of the compare operation. In one embodiment, the results of the subtraction include an overflow information. This overflow information is tested to determine whether the result of the compare operation is true.

Each compare unit has a Source1 input, a Source2 input, a control input, a next stage signal, a last stage signal, and a result output. Therefore, compare unit$_i$ 2911 has Source1$_i$ 2931 input, Source2$_i$ 2933 input, control$_i$ 2901 input, next stage$_i$ 2913 signal, last stage$_i$ 2912 input, and a result stored in result register$_i$ 2951. Therefore, compare unit$_{i+1}$ 2971 has Source1$_{i+1}$ 2932 input, Source2$_{i+1}$ 2934 input, control$_{i+1}$ 2902 input, next stage$_{i+1}$ 2973 signal, last stage$_{i+1}$ 2972 input, and a result stored in result register$_{i+1}$ 2952.

The Source1$_n$ input is typically an eight bit portion of Source1. The eight bits represents the smallest type of data element, one packed byte 401 data element. Source2 input is the corresponding eight bit portion of Source2. Operation control 2900 transmits control signals to enable each compare unit to perform the required compare. The control signals are determined from the relationship for the compare (e.g. signed greater than) and the size of the data element (e.g. byte or word). The next stage signal is received from the bit control for that compare unit. Compare units are effectively combined by the bit control units when a larger than byte size data element is used. For example, when the word packed data is compared, the bit control unit between the first compare unit and the second compare unit will cause the two compare units to act as one sixteen bit compare unit. Similarly, the compare unit between the third and fourth compare units will cause these two compare units to act as one compare unit. This continues for the four packed word data elements.

Depending on the desired relationship and the values of Source1 and Source2, the compare unit performs the compare by allowing result of the higher order compare unit to be propagated down to the lower order compare unit or vice versa. That is, each compare unit will provide the results of the compare using the information communicated by the bit control$_i$ 2920. If double word packed data is used, then four compare units act together to form one thirty-two bit long compare unit for each data element. The result output of each compare unit represents the result of the compare operation on the portion of Source1 and Source2 the compare unit is operating upon.

Bit control$_i$ 2920 is enabled from operation control 2900 via packed data enable$_i$ 2906. Bit control$_i$ 2920 controls next stage$_i$ 2913 and last stage$_{i+1}$ 2972. Assume, for example, compare unit$_i$ 2911 is responsible for the eight least significant bits of Source1 and Source2, and compare unit$_{i+1}$ 2971 is responsible for the next eight bits of Source1 and Source2. If a compare on packed byte data is performed, bit control$_i$ 2920 will not allow the result information from

compare unit$_{i+1}$ 2971 to be communicated with the compare unit$_i$ 2911, and vice versa. However, if a compare on packed words is performed, then bit control$_i$ 2920 will allow the result (in one embodiment, an overflow) information from compare unit$_i$ 2911 to be communicated to compare unit$_{i+1}$ and result (in one embodiment, an overflow) information from compare unit$_{i+1}$ 2971 to be communicated to compare unit$_i$ 2911.

For example, in Table 39, a packed byte signed greater-than compare is performed. Assume that compare unit$_{i+1}$ 2971 operates on data element one, and compare unit$_i$ 2911 operates on data element zero. Compare unit$_{i+1}$ 2971 compares the most significant eight bits of a word and communicates the result information via last stage$_{i+1}$ 2972. Compare unit$_i$ 2911 compares the least significant eight bits of the word and communicates the result information via next stage$_i$ 2913. However operation control 2900 will cause bit control$_i$ 2920 to stop the propagation of that result information, received from the last stage$_{i+1}$ 2972 and next stage$_i$ 2913, between the compare units.

| | | | | | | | |
|---|---|---|---|---|---|---|---|
| ... | ... | ... | ... | ... | ... | 00001110 | 00001000 |
| 7 | 6 | 5 | 4 | 3 | 2 | 1 | 0 |
| > | > | > | > | > | > | > | > |
| ... | ... | ... | ... | ... | ... | 00001110 | 10001000 |
| ↓ | ↓ | ↓ | ↓ | ↓ | ↓ | ↓ | ↓ |
| ... | ... | ... | ... | ... | ... | 00000000 | 11111111 |
| 7 | 6 | 5 | 4 | 3 | 2 | 1 | 0 |

## Table 39

However, if a packed word signed greater than compare is performed, then the result of compare unit$_{i+1}$ 2971 will be communicated to the compare unit$_i$ 2911, and vice versa. Table 40 illustrates this result. This type of communication would be allowed for packed doubleword compares as well.

| | | | |
|---|---|---|---|
| ... | ... | ... | 00001110 00001000 |
| 3 | 2 | 1 | 0 |
| > | > | > | > |
| ... | ... | ... | 00001110 10000001 |
| ↓ | ↓ | ↓ | ↓ |
| ... | ... | ... | 00000000 00000000 |
| 3 | 2 | 1 | 0 |

## Table 40

Each compare unit is optionally coupled to a result register. The result register temporarily stores the result of the compare operation until the complete result, Result[63:0] 2960, can be transmitted to the DEST 605 register.

For a complete sixty-four bit packed compare circuit, eight compare units and seven bit control units are used. Such a circuit can also be used to perform a compare on sixty-four bit-unpacked data, thereby using the same circuit to perform the unpacked compare operation and the packed compare operation.

## ADVANTAGES OF INCLUDING THE DESCRIBED PACKED COMPARE OPERATION IN THE INSTRUCTION SET

The described packed compare instruction stores the result of comparing Source1 and Source2 as a packed mask. As previously described, conditional branches on data are unpredictable, and thus cost processor performance because they break the branch prediction algorithms. However, by generating a packed masked, this comparison instruction reduces the number of required conditional branches based on data. For example, the function (if Y > A then X = X + B; else X = X) may be performed on packed data as shown below in Table 41 (the values shown in Table 41 are shown in hexadecimal notation).

Compare.Greater_Than Source1,Source2

| 00000001 | 00000000 | Source1=$Y_{0-1}$ |
|---|---|---|
| > | > | |
| 00000000 | 00000001 | Source2=$A_{0-1}$ |
| = | | |
| FFFFFFFF | 00000000 | Mask |

Packed AND Source3,Mask

| 00000005 | 0000000A | Source3=$B_{0-1}$ |
|---|---|---|
| > | > | |
| FFFFFFFF | 00000000 | Mask |
| = | | |
| 00000005 | 00000000 | Result |

Packed Add Source4, Result

| 00000010 | 00000020 | Source4=$X_{0-1}$ |
|---|---|---|
| > | > | |
| 00000005 | 00000000 | Result |
| = | | |
| 00000015 | 00000020 | New $X_{0-1}$ value |

Table 41

As can be seen from the above example, conditional branches are no longer required. Since a branch instruction is not required, processors that speculatively predict branches do not have a performance decrease when using this compare instruction to perform this and other similar operations. Thus, by providing this compare instruction in the instruction set supported by processor 109, processor 109 can perform algorithms requiring this functionality at a higher performance level.

*EXAMPLE MULTIMEDIA ALGORITHMS*

To illustrate the versatility of the disclosed instruction set, several example multimedia algorithms are described below. In some cases, similar packed data instructions could be used to perform certain steps in these algorithms. A number of steps requiring the use of general purpose processor instructions to manage data movement, looping, and conditional branching have been omitted in the following examples.

1) Multiplication of Complex Numbers

[0283] The disclosed-multiply-add instruction can be used to multiply two complex numbers in a single instruction as shown in Table 42a. The multiplication of two complex number (e.g., $r_1 i_1$ and $r_2 i_2$) is performed according to the following equation:

$$\text{Real Component} = r_1 \cdot r_2 - i_1 \cdot i_2$$
$$\text{Imaginary Component} = r_1 \cdot i_2 + r_2 \cdot i_1$$

If this instruction is implemented to be completed every clock cycle, the invention can multiply two complex numbers every clock cycle.

### Multiply-Add Source1, Source2

| $r_1$ | $i_2$ | $r_1$ | $i_1$ | Source1 |
|-------|-------|-------|-------|---------|
| | | | | |
| $r_2$ | $-i_2$ | $i_2$ | $r_2$ | Source2 |
| = | | | | |
| Real Component: $r_1 r_2 - i_1 i_2$ | | Imaginary Component: $r_1 i_2 + r_2 i_1$ | | Result 1 |

### Table 42a

As another example, Table 42b shows the instructions used to multiply together three complex numbers.

### Multiply-Add Source1, Source2

| $r_1$ | $i_1$ | $r_1$ | $i_1$ | Source1 |
|-------|-------|-------|-------|---------|
| | | | | |
| $r_2$ | $-i_2$ | $i_2$ | $r_2$ | Source2 |
| = | | | | |
| Real Component1: $r_1 r_2 - i_1 i_2$ | | Imaginary Component1: $r_1 i_2 + r_2 i_1$ | | Result1 |

## EP 1 693 742 A2

### Packed Shift Right Source1, Source2

| Real Component$_1$ | | Imaginary Component$_1$ | | Result1 |
|---|---|---|---|---|
| | | | | |
| 16 | | | | |
| = | | | | |
| | Real Component$_1$ | | Imaginary Component$_1$ | Result2 |

### Pack Result2, Result2

| | Real Component$_1$ | | Imaginary Component$_1$ | Result2 |
|---|---|---|---|---|
| | | | | |
| | Real Component$_1$ | | Imaginary Component$_1$ | Result2 |
| = | | | | |
| Real Component$_1$ | Imaginary Component$_1$ | Real Component$_1$ | Imaginary Component$_1$ | Result3 |

### Multiply-Add Result3, Source3

| Real Component$_1$: $r_1r_2-i_1i_2$ | Imaginary Component$_1$: $r_1i_2+r_2i_1$ | Real Component$_1$: $r_1r_2-i_1i_2$ | Imaginary Component$_1$: $r_1i_2+r_2i_1$ | Result3 |
|---|---|---|---|---|
| | | | | |
| $r_3$ | $-i_3$ | $i_3$ | $r_3$ | Source3 |
| = | | | | |
| Real Component$_2$ | | Imaginary Component$_2$ | | Result4 |

### Table 42b

2) <u>Multiply Accumulation Operations</u>

The disclosed instructions can also be used to multiply and accumulate values. For example, two sets of four data elements ($A_{1-4}$ and $B_{1-4}$) may be multiplied and accumulated as shown below in Table 43. In one embodiment, each of the instructions shown in Table 43 is implemented to complete each clock cycle.

48

## Multiply-Add Source1, Source2

| 0 | 0 | $A_1$ | $A_2$ | Source1 |
|---|---|---|---|---|
| | | | | |
| 0 | 0 | $B_1$ | $B_2$ | Source2 |
| | = | | | |
| 0 | | $A_1B_1+A_2B_2$ | | Result1 |

## Multiply-Add Source3, Source4

| 0 | 0 | $A_3$ | $A_4$ | Source3 |
|---|---|---|---|---|
| | | | | |
| 0 | 0 | $B_3$ | $B_4$ | Source4 |
| | = | | | |
| 0 | | $A_3A_4+B_3B_4$ | | Result2 |

## Unpacked Add Result1, Result2

| 0 | $A_1B_1+A_2B_2$ | Result1 |
|---|---|---|
| | | |
| 0 | $A_3A_4+B_3B_4$ | Result2 |
| | = | |
| 0 | $A_1B_1+A_2B_2+A_3A_4+B_3B_4$ | Result3 |

## Table 43

If the number of data elements in each set exceeds 8 and is a multiple of 4, the multiplication and accumulation of these sets requires fewer instructions if performed as shown in Table 44 below.

### Multiply-Add Source1, Source2

| A$_1$ | A$_2$ | A$_3$ | A$_4$ | Source1 |
|---|---|---|---|---|
| | | | | |
| B$_1$ | B$_2$ | B$_3$ | B$_4$ | Source2 |
| = | | | | |
| A$_1$B$_1$+A$_2$B$_2$ | | A$_3$B$_3$+A$_4$B$_4$ | | Result1 |

### Multiply-Add Source3, Source4

| A$_5$ | A$_6$ | A$_7$ | A$_8$ | Source3 |
|---|---|---|---|---|
| | | | | |
| B$_5$ | B$_6$ | B$_7$ | B$_8$ | Source4 |
| = | | | | |
| A$_5$B$_5$+A$_6$B$_6$ | | A$_7$B$_7$+A$_8$B$_8$ | | Result2 |

### Packed Add Result1, Result2

| A$_1$B$_1$+A$_2$B$_2$ | A$_3$B$_3$+A$_4$B$_4$ | Result1 |
|---|---|---|
| | | |
| A$_5$B$_5$+A$_6$B$_6$ | A$_7$B$_7$+A$_8$B$_8$ | Result2 |
| = | | |
| A$_1$B$_1$+A$_2$B$_2$+A$_5$B$_5$+A$_6$B$_6$ | A$_3$B$_3$+A$_4$B$_4$+A$_7$B$_7$+A$_8$B$_8$ | Result3 |

### Unpack High Result3, Source5

| A$_1$B$_1$+A$_2$B$_2$+A$_5$B$_5$+A$_6$B$_6$ | A$_3$B$_3$+A$_4$B$_4$+A$_7$B$_7$+A$_8$B$_8$ | Result3 |
|---|---|---|
| | | |
| 0 | 0 | Source5 |
| = | | |
| 0 | A$_1$B$_1$+A$_2$B$_2$+A$_5$B$_5$+A$_6$B$_6$ | Result4 |

Unpack Low Result3, Source5

| | | |
|---|---|---|
| $A_1B_1+A_2B_2+A_5B_5+A_6B_6$ | $A_3B_3+A_4B_4+A_7B_7+A_8B_8$ | Result3 |
| | | |
| 0 | 0 | Source5 |
| = | | |
| 0 | $A_3B_3+A_4B_4+A_7B_7+A_8B_8$ | Result5 |

Packed Add Result4, Result5

| | | |
|---|---|---|
| 0 | $A_1B_1+A_2B_2+A_5B_5+A_6B_6$ | Result4 |
| | | |
| 0 | $A_3B_3+A_4B_4+A_7B_7+A_8B_8$ | Result5 |
| = | | |
| 0 | TOTAL | Result6 |

**Table 44**

As another example, Table 45 shows the separate multiplication and accumulation of sets A and B and sets C and D, where each of these sets includes 2 data elements.

Multiply-Add Source1, Source2

| | | | | |
|---|---|---|---|---|
| $A_1$ | $A_2$ | $C_1$ | $C_2$ | Source1 |
| | | | | |
| $B_1$ | $B_2$ | $D_1$ | $D_2$ | Source2 |
| = | | | | |
| $A_1B_1+A_2B_2$ | | $C_1D_1+C_2D_2$ | | Result1 |

**Table 45**

As another example, Table 46 shows the separate multiplication and accumulation of sets A and B and sets C and D, where each of these sets includes 4 data elements.

### Multiply-Add Source1, Source2

| $A_1$ | $A_2$ | $C_1$ | $C_2$ | Source1 |
|---|---|---|---|---|
| | | | | |
| $B_1$ | $B_2$ | $D_1$ | $D_2$ | Source2 |
| | = | | | |
| $A_1B_1+A_2B_2$ | | $C_1D_1+C_2D_2$ | | Result1 |

### Multiply-Add Source3, Source4

| $A_3$ | $A_4$ | $C_3$ | $C_4$ | Source3 |
|---|---|---|---|---|
| | | | | |
| $B_3$ | $B_4$ | $D_3$ | $D_4$ | Source4 |
| | = | | | |
| $A_3B_3+A_4B_4$ | | $C_3D_3+C_4D_4$ | | Result2 |

### Packed Add Result1, Result2

| $A_1B_1+A_2B_2$ | $C_1D_1+C_2D_2$ | Result1 |
|---|---|---|
| | | |
| $A_3B_3+A_4B_4$ | $C_3D_3+C_4D_4$ | Result2 |
| | = | |
| $A_1B_1+A_2B_2+A_3B_3+A_4B_4$ | $C_1D_1+C_2D_2+C_3D_3+C_4D_4$ | Result6 |

## Table 46

### 3) Dot Product Algorithms

Dot product (also termed as inner product) is used in signal processing and matrix operations. For example, dot product is used when computing the product of matrices, digital filtering operations (such as FIR and IIR filtering), and computing correlation sequences. Since many speech compression algorithms (e.g., GSM, G.728, CELP, and VSELP) and Hi-Fi compression algorithms (e.g., MPEG and subband coding) make extensive use of digital filtering and correlation computations, increasing the performance of dot product increases the performance of these algorithms.

The dot product of two length N sequences A and B is defined as:

$$Result = \sum_{i=0}^{N-1} Ai \cdot Bi$$

Performing a dot product calculation makes extensive use of the multiply accumulate operation where corresponding elements of each of the sequences are multiplied together, and the results are accumulated to form the dot product result.

By including the move, packed add, multiply-add, and pack shift operations, the invention allows the dot product calculation to be performed using packed data. For example if the packed data type containing four sixteen-bit elements is used, the dot product calculation may be performed on two sequences each containing four values by:

1) accessing the four sixteen-bit values from the *A* sequence to generate Source1 using a move instruction;
2) accessing four sixteen-bit values from the *B* sequence to generate Source2 using a move instruction; and
3) multiplying and accumulating as previously described using a multiply-add, packed add, and shift instructions.

For vectors with more than just a few elements the method shown in Table 46 is used and the final results are added together at the end. Other supporting instructions include the packed OR and XOR instructions for initializing the accumulator register, the packed shift instruction for shifting off unwanted values at the final stage of computation. Loop control operations are accomplished using instructions already existing in the instruction set of processor 109.

4) <u>2-Dimensional Loop Filter</u>

2-dimensional loop filters are used in certain multimedia algorithms. For example, the filter coefficients shown below in Table 47 may be used in video conferencing algorithms to perform a low pass filter on pixel data.

$$\begin{bmatrix} 1 & 2 & 1 \\ 2 & 4 & 2 \\ 1 & 2 & 1 \end{bmatrix}$$

**Table 47**

To calculate the new value of a pixel at location (x, y), the following equation is used:

$$\text{Resulting Pixel} = (x\text{-}1,y\text{-}1) + 2(x,y\text{-}1) + (x\text{+}1,y\text{-}1) + 2(x\text{-}1,y) + 4(x,y) + 2(x\text{+}1,y)$$
$$+$$
$$(x\text{-}1,y\text{+}1) + 2(x,y\text{+}1) + (x\text{+}1,y\text{+}1)$$

By including the pack, unpack, move, packed shift, and a packed add, the invention allows a 2-dimensional loop filter to be performed using packed data. According to one implementation of the-previously described loop filter, this loop filter is applied as two simple 1-dimensional filters -- i.e., the above 2-dimensional filter can be applied as two 121 filters. The first filter is in the horizontal direction, while the second filter is in the vertical direction.

Table 48 shows a representation of an 8x8 block of pixel data.

| | | | | | | | |
|---|---|---|---|---|---|---|---|
| $A_0$ | $A_1$ | $A_2$ | $A_3$ | $A_4$ | $A_5$ | $A_6$ | $A_7$ |
| $B_0$ | $B_1$ | $B_2$ | $B_3$ | $B_4$ | $B_5$ | $B_6$ | $B_7$ |
| $C_0$ | $C_1$ | $C_2$ | $C_3$ | $C_4$ | $C_5$ | $C_6$ | $C_7$ |
| • | • | • | • | • | • | • | • |
| • | • | • | • | • | • | • | • |
| • | • | • | • | • | • | • | • |
| $I_0$ | $I_1$ | $I_2$ | $I_3$ | $I_4$ | $I_5$ | $I_6$ | $I_7$ |

**Table 48**

The following steps are performed to implement the horizontal pass of the filter on this 8x8 block of pixel data:

1) accessing eight 8-bit pixel values as packed data using a move instruction;
2) unpacking the eight 8-bit pixels into a 16-bit packed data containing four 8-bit pixels (Source1) to maintain accuracy during accumulations;
3) duplicating Source1 two times to generate Source2 and Source3;
4) performing an unpacked shift right by 16 bits on Source1;
5) performing an unpacked shift left by 16 bits on Source 3;
6) generating (Source1 + 2*Source2 + Source3) by performing the following packed adds:

   a) Source1 = Source1 + Source2,
   b) Source1 = Source1 + Source2,
   c) Source1 = Source1 + Source3;

7) storing the resulting packed word data as part of an 8x8 intermediate result array; and
8) repeating these steps until the entire 8x8 intermediate result array is generated as shown in Table 49 below (e.g., $IA_0$ represents the intermediate result for $A_0$ from Table 49).

←16→

| IA$_0$ | IA$_1$ | IA$_2$ | IA$_3$ | IA$_4$ | IA$_5$ | IA$_6$ | IA$_7$ |
|---|---|---|---|---|---|---|---|
| IB$_0$ | IB$_1$ | IB$_2$ | IB$_3$ | IB$_4$ | IB$_5$ | IB$_6$ | IB$_7$ |
| IC$_0$ | IC$_1$ | IC$_2$ | IC$_3$ | IC$_4$ | IC$_5$ | IC$_6$ | IC$_7$ |
| • | • | • | • | • | • | • | • |
| • | • | • | • | • | • | • | • |
| • | • | • | • | • | • | • | • |
| II$_0$ | II$_1$ | II$_2$ | II$_3$ | II$_4$ | II$_5$ | II$_6$ | II$_7$ |

**Table 49**

The following steps are performed to implement the vertical pass of the filter on the 8x8 intermediate result array:

1) accessing a 4x4 block of data from the intermediate result array as packed data using a move instruction to generate Source1, Source2, and Source3 (e.g., see Table 50 for an example);

←16→

| IA$_0$ | IA$_1$ | IA$_2$ | IA$_3$ | Source1 |
|---|---|---|---|---|
| IB$_0$ | IB$_1$ | IB$_2$ | IB$_3$ | Source2 |
| IC$_0$ | IC$_1$ | IC$_2$ | IC$_3$ | Source3 |

**Table 50**

2) generating (Source1 + 2*Source2 + Source 3) by performing the following packed adds:

    a) Source1 = Source1 + Source2,
    b) Source1 = Source1 + Source2,
    c) Source1 = Source1 + Source3;

3) performing a packed shift right by 4 bits on the resulting Source1 to generate the sum of the weights -- this is effectively dividing by 16;
4) packing the resulting Source 1 with saturation to convert the 16-bit values back into 8-bit pixel values;
6) storing the resulting packed byte data as part of an 8x8 result array (in regards to the example shown in Table 50, these four bytes represent the new pixel values for B$_0$, B$_1$, B$_2$, and B$_3$); and
7) repeating these steps until the entire 8x8 result array is generated.

It is worth while to note, that the top and bottom rows of the 8x8 result array are determined using a different algorithm that is not described here so not to obscure the invention.

Thus, by providing on processor 109 the pack, unpack, move, packed shift, and packed add instructions, the invention provides for a significant performance increase over prior art general processors which must perform the operations required by such filters 1 data element at a time.

5) Motion Estimation

Motion estimation is used in several multimedia applications (e.g., video conferencing and MPEG (high quality video playback)). In regard to video conferencing, motion estimation is used to reduce the amount of data which must be transmitted between terminals. Motion estimation works by dividing the video frames into fixed size video blocks. For each block in Frame1 , it is determined whether there is a block containing a similar image in Frame2. If such a block is contained in Frame2, that block can be described with a motion vector reference into Frame 1. Thus, rather than transmitting all of the data representing that block, only a motion vector need be transmitted to the receiving terminal. For example, if a block in Frame1 is similar to and at the same screen coordinates as a block in Frame2, only a motion vector of 0 need to sent for that block. However, if a block in Frame1 is similar to, but at different screen coordinates than, a block in Frame2, only a motion vector indicating the new location of that block need be sent. According to one implementation, to determine if a block A in Frame1 is similar to a block B in Frame2, the sum of the absolute differences between the pixel values is determined. The lower the summation, the more similar block A is to block B (i.e., if the summation is 0, block A is identical to block B).

By including the move, unpack, packed add, packed subtract with saturate, and logical operations, the invention allows motion estimation to be performed using packed data. For example, if two 16x 16 blocks of video are represented by two arrays of 8-bit pixel values stored as packed data, the absolute difference of the pixel values in these blocks may be calculated by:

1) accessing eight 8-bit values from block A to generate Source1 using a move instruction;
2) accessing eight 8-bit values from block B to generate Source2 using a move instruction;
3) performing a packed subtract with saturate to subtract Source1 from Source2 generating Source 3 -- By subtracting with saturate, Source 3 will contain only the positive results of this subtraction (i.e., the negative results will be zeroed);
4) performing a packed subtract with saturate to subtract Source2 from Source1 generating Source 4 -- By subtracting with saturate, Source 4 will contain only the positive results of this subtraction (i.e., the negative results will be zeroed);
5) performing a packed OR operation on Source3 and Source4 to produce Source5 -- By performing this OR operation, Source5 contains the absolute value of Source1 and Source2;
6) repeating these steps until the 16x16 blocks have been processed. The resulting 8-bit absolute values are unpacked into 16-bit data elements to allow for 16-bit precision, and then summed using packed adds.

Thus, by providing on processor 109 move, unpack, packed add, packed subtract with saturate, and logical operations, the invention provides for a significant performance increase over prior art general purpose processors which must perform the additions and the absolute differences of the motion estimation calculation one data element at a time.

6) Discrete Cosign Transform

Discrete Cosine Transform (DCT) is a well known function used in many signal processing algorithms. Video and image compression algorithms, in particular, make extensive use of this transform.

In image and video compression algorithms, DCT is used to transform a block of pixels from the spatial representation to the frequency representation. In the frequency representation, the picture information is divided into frequency components, some of which are more important than others. The compression algorithm selectively quantizes or discards the frequency components that do not adversely affect the reconstructed picture contents. In this manner, compression is achieved.

There are many implementations of the DCT, the most popular being some kind of fast transform method modeled based on the Fast Fourier Transform (FFT) computation flow. In the fast transform, an order N transform is broken down to a combination of order N/2 transforms and the result recombined. This decomposition can be carried out until the smallest order 2 transform is reached. This elementary 2 transform kernel is often referred to as the butterfly operation. The butterfly operation is expressed as follows:

$$X = a*x + b*y$$

$$Y = c*x - d*y$$

where a, b, c and d are termed the coefficients, x and y are the input data, and X and Y are the transform output.

By including the move, multiply-add, and packed shift operations, the invention allows the DCT calculation to be performed using packed data in the following manner:

1) accessing the two 16-bit values representing x and y to generate Source1 (see Table 51 below) using the move and unpack instructions;

2) generating Source2 as shown in Table 51 below -- Note that Source2 may be reused over a numberof butterfly operations; and

3) performing a multiply-add instruction using Source1 and Source2 to generate the Result (see Table 51 below).

| x | y | x | y | Source1 |
|---|---|---|---|---------|

| a | b | c | -d | Source2 |
|---|---|---|----|---------|

| $a \cdot x + b \cdot y$ | $c \cdot x - d \cdot y$ | Source3 |
|-------------------------|-------------------------|---------|

**Table 51**

In some situations, the coefficients of the butterfly operation are 1. For these cases, the butterfly operation degenerates into just adds and subtracts that may be performed using the packed add and packed subtract instructions.

An IEEE document specifies the accuracy with which inverse DCT should be performed for video conferencing. (See, IEEE Circuits and Systems Society, "IEEE Standard Specifications for the Implementations of 8x8 Inverse Discrete Cosine Transform," IEEE Std. 1180-1990, IEEE Inc. 345 East 47th St., NY, NY 10017, USA, March 18, 1991). The required accuracy is met by the disclosed multiply-add instruction because it uses 16-bit inputs to generate 32-bit outputs.

Thus, by providing on processor 109 the move, multiply-add, and packed shift operations, the invention provides for a significant performance increase over prior art general purpose processors which must perform the additions and the multiplications of the DCT calculation one data element at a time.

ALTERNATIVE EMBODIMENTS

While the invention has been described in which each of the different operations have separate circuitry, alternative embodiments could be implemented such that certain circuitry is shared by different operations. For example, in one embodiment the following circuitry is used: 1) a single arithmetic logic unit (ALU) to perform the packed-add, packed subtract, packed compare, and packed logical operations; 2) a circuitry unit to perform the pack, unpack, and packed shift operations; 3) a circuitry unit to perform the packed multiply and multiply-add operations; and 4) a circuitry unit to perform the population count operation.

The terms corresponding and respective are used herein to refer to the predetermined relationship between the data elements stored in two or more packed data. In one embodiment, this relationship is based on the bit positions of the data elements in the packed data. For example, data element 0 (e.g., stored in bit positions 0-7 in packed byte format) of a first packed data corresponds to data elements 0 (e.g., stored in bit positions 0-7 in packed byte format) of a second packed data. However, this relationship may differ in alternative embodiments. For example, corresponding data elements in the first and second packed data may be of different sizes. As another example, rather than the least significant data element of a first packed data corresponding to the least significant data element of a second packed data (and so on), the data elements in the first and second packed data may correspond to each other in some other order. As another example, rather than having a 1 to 1 correspondence of data elements in the first and second packed data, the data elements may correspond at a different ratio (e.g., the first packed data may have one or more data elements which correspond to two or more different data elements in a second packed data).

While the invention has been described in terms of several embodiments, those skilled in the art will recognize that the invention is not limited to the embodiments described. The method and apparatus of the invention can be practiced with modification and alteration within the spirit and scope of the appended claims. The description is thus to be regarded as illustrative instead of limiting on the invention.

**Claims**

1. An apparatus comprising:

a first storage area operable to have stored therein a first packed data containing at least an $A_1$, an $A_2$, an $A_3$, and an $A_4$ element;
a second storage area operable to have stored therein a second packed data containing at least a $B_1$, a $B_2$, a $B_3$, and a $B_4$ element;
a multiply circuit including
a first multiplier coupled to said first storage area to receive said $A_1$ and coupled to said second storage area to receive said $B_1$;
a second multiplier coupled to said first storage area to receive said $A_2$ and coupled to said second storage are to receive said $B_2$;
a third multiplier coupled to said first storage area to receive said $A_3$ and coupled to said second storage area to receive said $B_3$;
a fourth multiplier coupled to said first storage area to receive said $A_4$ and coupled to said second storage area to receive said $B_4$;
a first adder coupled to said first multiplier and said second multiplier;
a second adder coupled to said third multiplier and said fourth multiplier; and
a third storage area coupled to said first adder and said second adder, said third storage area having at least a first field and a second field, said first field for saving an output of said first adder as a first data element of a third packed data, said second field for saving an output of said second adder as a second data element of said third packed data.

2. The apparatus of claim 1, wherein the first data element comprises twice as many bits as the elements of said first packed data.

3. The apparatus of claim 2, wherein A1 has 16 bits, and wherein the first data element has 32 bits.

4. The apparatus of claim 1, wherein the first multiplier is to receive said A1 element in parallel with the second multiplier receiving said A2 element.

5. The apparatus of claim 1, wherein the third storage area comprises a register.

6. The apparatus of claim 1, wherein the output of said first adder comprises $(A_1 \times B_1 + A_2 \times B_2)$, and wherein the output of said second adder comprises $(A_3 \times B_3 + A_4 \times B_4)$.

7. The apparatus of claim 1, wherein the output of said first adder comprises $(A_1 \times B_1 - A_2 \times B_2)$.

8. The apparatus of claim 1, wherein either the first storage area or the second storage area is used as the third storage area.

9. A method comprising:

receiving an instruction that specifies locations of a first packed data having a first plurality of data elements and a second packed data having a second plurality of data elements, each of the data elements of the first packed data corresponding to a different data element of the second packed data; and
generating a packed data result by executing the instruction, the packed data result having a plurality of result data elements, each of the result data elements comprising a sum of products of corresponding data elements of the first and second packed data.

10. The method of claim 9, further comprising storing the packed data result over either the first packed data or the second packed data.

11. The method of claim 9, wherein the result data elements each have higher precision than the data elements of the first packed data.

12. The method of claim 11, wherein the data elements of the first and second packed data comprise packed word data elements, and wherein the result data elements comprise packed double word data elements.

13. The method of claim 9, further comprising completing said executing the instruction without summing the plurality of result data elements.

14. The method of claim 9, further comprising:

accessing the second packed data from a location specified by bits zero through two of the instruction; accessing the first packed data from a location specified by bits three through five of the instruction; and storing the packed data result in a destination specified by said bits three through five of the instruction.

15. The method of claim 9, wherein the first packed data has $A_1$, an $A_2$, an $A_3$, and an $A_4$ as data elements, wherein the second packed data has $B_1$, a $B_2$, a $B_3$, and a $B_4$ as data elements, and wherein said generating the packed data result comprises generating a first result data element including $(A_1 \times B_1 + A_2 \times B_2)$ and a second result data element including $(A_3 \times B_3 + A_4 \times B_4)$.

16. A processor comprising:

a decoder to receive and decode an instruction that specifies locations of a first packed data having a first plurality of data elements and a second packed data having a second plurality of data elements, each of the data elements of the first packed data corresponding to a different data element of the second packed data; and an execution unit in communication with the decoder to generate a packed data result in response to the decoder decoding the instruction, the packed data result having a plurality of result data elements, each of the result data elements comprising a sum of products of corresponding data elements of the first and second packed data.

17. The processor of claim 16, wherein the execution unit is to store the packed data result over either the first packed data or the second packed data.

18. The processor of claim 16, wherein the execution unit is to generate result data elements that have higher precision-that-the data elements of the first packed data.

19. The processor of claim 16, wherein the execution unit is to complete execution of the instruction without summing the plurality of result data elements.

20. The processor of claim 16, wherein the decoder is to decode an instruction having a 24-bit instruction format, wherein bits zero through two of the instruction specify a location of the second packed data, and wherein bits three through five of the instruction specify a location of the first packed data.

21. The processor of claim 16, wherein the execution unit is to generate a packed data result having a result data element comprising a sum of two products of corresponding data elements of the first and second packed data.

22. The processor of claim 16, wherein the first packed data has $A_1$, an $A_2$, an $A_3$, and an $A_4$ as data elements, wherein the second packed data has $B_1$, a $B_2$, a $B_3$, and a $B_4$ as data elements, and wherein the execution unit is to generate a packed data result having a first result data elements including $(A_1 \times B_1 + A_2 \times B_2)$ and a second result data element including $(A_3 \times B_3 + A_4 \times B_4)$.

23. The processor of claim 16, wherein the first packed data has $A_1$, an $A_2$, an $A_3$, and an $A_4$ as data elements, wherein the second packed data has $B_1$, a $B_2$, a $B_3$, and a $B_4$ as data elements, and wherein the execution unit is to generate a packed data result having one or more selected from a first result data elements including $(A_1 \times B_1 - A_2 \times B_2)$ and a second result data element including $(A_3 \times B_3 - A_4 \times B_4)$.

24. The processor of claim 16 implemented in a computer system comprising: a memory; a bus coupled with the memory; and a speaker coupled with the bus.

25. The processor of claim 24, wherein the execution unit is to store the packed data result over either the first packed data or the second packed data.

26. The processor of claim 24, wherein the execution unit is to complete execution of the instruction without summing the plurality of 2N-bit result data elements.

27. The processor of claim 24, wherein the first packed data has a first data element, a second data element, a third data element, and a fourth data element, wherein the second packed data has a fifth data element, a sixth data element, a seventh data element, and an eighth data element, and wherein the execution unit is to generate a packed data result having a first result data elements including a sum of a first product of the first packed data element multiplied by the fifth data element and a second product of the second data element multiplied by the sixth data element, and a second result data element including a sum of a third product of the third packed data element multiplied by the seventh data element and a fourth product of the fourth data element multiplied by the eighth data element.

Figure 1

Display Device 121

Input Device 122

Cursor Control 123

Hard Copy Device 124

Sound Recording and Playback Device 125

Video Digitizing Device 126

Main Memory 104

ROM 106

Data Storage Device 107

Bus 101

Cache 160

Decoder 165

Execution Unit 130

Packed Instruction Set 140

Pack Operation
Unpack Operation
Packed Add Operation
Packed Subtract Operation
Packed Multiply Operation
Packed Shift Operation
Packed Compare Operation
Multiply-Add/Subtract Operations
Population Count Operation
Logical Operations
          (AND, ANDN, OR, XOR)

Internal Bus 170

Register File 150

Processor 109

Computer System 100

Register File
150

Registers
209

R₀ 212a

R₁ 212b

R₂ 212c

Integer
Registers
201

.

.

.

R₇ 212h

63------------0

Instruction
Pointer
Register
211

Status
Registers
208

# Figure 2

Start

Receive and Decode Instruction
301

Access Register File or Memory
302

Enable Execution Unit with
Operation
303

# Figure 3

Store Result In Register or
Memory
304

Stop

| 63 | 56 | 55 | 48 | 47 | 40 | 39 | 32 | 31 | 24 | 23 | 16 | 15 | 8 | 7 | 0 |
|---|---|---|---|---|---|---|---|---|---|---|---|---|---|---|---|
| Byte 7 | | Byte 6 | | Byte 5 | | Byte 4 | | Byte 3 | | Byte 2 | | Byte 1 | | Byte 0 | |

Packed Byte 401

| 63 | 48 | 47 | 32 | 31 | 16 | 15 | 0 |
|---|---|---|---|---|---|---|---|
| Word 3 | | Word 2 | | Word 1 | | Word 0 | |

Packed Word 402

| 63 | 32 | 31 | 0 |
|---|---|---|---|
| DoubleWord 1 | | DoubleWord 0 | |

Packed DoubleWord 403

# Figure 4

| 63 | 56 | 55 | 48 | 47 | 40 | 39 | 32 | 31 | 24 | 23 | 16 | 15 | 8 | 7 | 0 |
|---|---|---|---|---|---|---|---|---|---|---|---|---|---|---|---|
| bbbb bbbb | | bbbb bbbb | | bbbb bbbb | | bbbb bbbb | | bbbb bbbb | | bbbb bbbb | | bbbb bbbb | | bbbb bbbb | |

Unsigned Packed Byte In-register Representation 510

| 63 | 56 | 55 | 48 | 47 | 40 | 39 | 32 | 31 | 24 | 23 | 16 | 15 | 8 | 7 | 0 |
|---|---|---|---|---|---|---|---|---|---|---|---|---|---|---|---|
| sbbb bbbb | | sbbb bbbb | | sbbb bbbb | | sbbb bbbb | | sbbb bbbb | | sbbb bbbb | | sbbb bbbb | | sbbb bbbb | |

Signed Packed Byte In-register Representation 511

# Figure 5a

| 63 | 48 | 47 | 33 | 32 | 16 | 15 | 0 |
|---|---|---|---|---|---|---|---|
| wwww wwww wwww wwww | | wwww wwww wwww wwww | | wwww wwww wwww wwww | | wwww wwww wwww wwww | |

Unsigned Packed Word In-register Representation 512

| 63 | 46 | 47 | 33 | 32 | 16 | 15 | 0 |
|---|---|---|---|---|---|---|---|
| swww wwww wwww wwww | | swww wwww wwww wwww | | swww wwww wwww wwww | | swww wwww wwww wwww | |

Signed Packed Word In-register Representation 513

# Figure 5b

| 63 | 33 | 31 | 0 |
|---|---|---|---|
| dddd dddd dddd dddd    dddd dddd dddd dddd | | dddd dddd dddd dddd    dddd dddd dddd dddd | |

Unsigned Packed Doubleword In-register Representation 514

| 63 | 32 | 31 | 0 |
|---|---|---|---|
| sddd dddd dddd dddd    dddd dddd dddd dddd | | sddd dddd dddd dddd    dddd dddd dddd dddd | |

Signed Packed Doubleword In-register Representation 515

# Figure 5c

31        26 25        20 19        14 13 12 11 10    6 5        0

| OP | | SRC1 | SRC2 | SZ | T | S | ////// | DEST |
| 601 | | 602 | 603 | 610 | 611 | 612 | | 605 |

**Figure 6a**

23        16 15        8 7 6 5    3 2    0

OP 601, SZ 610, T 611, S 612    SRC1 602 (DEST 605)    SRC2 603 (DEST 605)

**Figure 6b**

EP 1 693 742 A2

Start

Decode Control Signal
701

Access Register File, SRC1 & SRC2
702

Enable Execution Unit with a Packed Add Operation
(Size, Sign, HighlLow)
703

8 bits

Size?
704

16 bits

Result[7:0] = Source1[7:0]
add to Source2[7:0]

Result[15:8] = Source1[15:8]
add to Source2[15:8]

Result[23:16] = Source1[23:16]
add to Source2[23:16]

Result[31:24] = Source1[31:24]
add to Source2[31:24]

Result[39:32] = Source1[39:32]
add to Source2[39:32]

Result[47:40] = Source1[47:40]
add to Source2[47:40]

Result[55:48] = Source1[55:48]
add to Source2[55:48]

Result[63:56] = Source1[63:56]
add to Source2[63:56]

705a

Result[15:0] = Source1[15:0]
add to Source2[15:0]

Result[31:16] = Source1[31:16]
add to Source2[31:16]

Result[47:32] = Source1[47:32]
add to Source2[47:32]

Result[63:48] = Source1[63:48]
add to Source2[63:48]

705b

Store Result in DEST Register
1220

Stop

# Figure 7a

Figure 7b

800

**803**

Operation and Carry Control

**809b**
Control$_{i+1}$

**809a**
Control$_i$

**808b**
COUT$_{i+1}$

**811**
Packed Data
Enable

**804b**
Source1$_{i+1}$

**804a**
Source1$_i$

**805b**
Source2$_{i+1}$

**805a**
Source2$_i$

**808a**
COUT$_i$

**801b**

**802**
Bit
Control

**801a**

Adder/Subtractor

Adder/Subtractor

**807b**
C$_{IN_{i+1}}$

**806b**
Result$_{i+1}$

**806a**
Result$_i$

**807a**
C$_{IN_i}$

# Figure 8

# Figure 9

OPERATION CONTROL                                                                903

PACKED CTRL
911

Source1 BUS 901

Source2 BUS 902

| CTRL Source2$_{IN}$ Source1$_{IN}$ | | | CTRL Source2$_{IN}$ Source1$_{IN}$ | CTRL Source2$_{IN}$ Source1$_{IN}$ | CTRL Source2$_{IN}$ Source1$_{IN}$ |
|---|---|---|---|---|---|
| 904h    905h        906h | ... | 904c    905c        906c | 904b    905b        906b | 904a    905a        906a |
| ADDER/SUBTRACTOR 908h | | ADDER/SUBTRACTOR 908c | ADDER/SUBTRACTOR 908b | ADDER/SUBTRACTOR 908a |
| RESULT OUT    907h | | RESULT OUT    907c | RESULT OUT    907b | RESULT OUT    907a |

b63                              b55          b23                      b16  b15                      b08  b07                      b00

| RESULT REGISTER 910h | RESULT REGISTER 910c | RESULT REGISTER 910b | RESULT REGISTER 910a |
|---|---|---|---|

· · ·

Result
BUS 909

EP 1 693 742 A2

# Figure 10

OPERATION CONTROL    903

PACKED CTRL
911

Source1 BUS 901

Source2 BUS 902

| CTRL 1004d | Source2IN 1005d | Source1IN 1006d |
| CTRL 1004b | Source2IN 1005b | Source1IN 1006b |
| CTRL 1004a | Source2IN 1005a | Source1IN 1006a |

VIRTUAL
ADDER/SUBTRACTOR    1008d

RESULT OUT    1007d

b63                                                    b48

VIRTUAL
ADDER/SUBTRACTOR    1008b

RESULT OUT    1007b

b31                                                    b16

VIRTUAL
ADDER/SUBTRACTOR    1008a

RESULT OUT    1007a

b15                                                    b00

• • •

VIRTUAL
RESULT REGISTER    1010d

VIRTUAL
RESULT REGISTER    1010b

VIRTUAL
RESULT REGISTER    1010a

• • •

• • •

Result
BUS 909

EP 1 693 742 A2

# Figure 11

EP 1 693 742 A2

Start

Decode Control Signal
1201

Access Register File, SRC1 & SRC2
1202

Enable Execution Unit with a Packed Multiply Operation
(Size, Sign, HighlLow)
1203

Byte ← Size?
1210 → Word

Result[7:0] = Source1[7:0]
multiply by Source2[7:0]

Result[15:8] = Source1[15:8]
multiply by Source2[15:8]

Result[23:16] = Source1[23:16]
multiply by Source2[23:16]

Result[31:24] = Source1[31:24]
multiply by Source2[31:24]

Result[39:32] = Source1[39:32]
multiply by Source2[39:32]

Result[47:40] = Source1[47:40]
multiply by Source2[47:40]

Result[55:48] = Source1[55:48]
multiply by Source2[55:48]

Result[63:56] = Source1[63:56]
multiply by Source2[63:56]
1212

Result[15:0] = Source1[15:0]
multiply by Source2[15:0]

Result[31:16] = Source1[31:16]
multiply by Source2[31:16]

Result[47:32] = Source1[47:32]
multiply by Source2[47:32]

Result[63:48] = Source1[63:48]
multiply by Source2[63:48]

1214

Store Result in DEST Register
1220

Stop

# Figure 12

**Figure 13**

Start

Decode Control Signal
1401

Access Register File, SRC1 & SRC2
1402

Enable Execution Unit with the
Decoded Instruction
1403

Multiply-Add                    Multiply-Subtract

Result[31:0] = (Source1[15:0]
multiply by Source2[15:0])+
(Source1[31:16] multiply by
Source2[31:16])

Result[63:32] = (Source1[47:32]
multiply by Source2[47:32])+
(Source1[63:48] multiply by
Source2[63:48])

1414

Result[31:0] = (Source1[15:0]
multiply by Source2[15:0]) -
(Source1[31:16] multiply by
Source2[31:16])

Result[63:32] = (Source1[47:32]
multiply by Source2[47:32]) -
(Source1[63:48] multiply by
Source2[63:48])

1415

Store Result in DEST
1420

Stop

# Figure 14

PACKED MULTIPLY-ADDER/SUBTRACTOR 1501

Operation Control 1500

Enable 1580

Source1[63:0] 1531    Source2[63:0] 1533

16x16 Multiplier A 1510

16x16 Multiplier B 1511

16x16 Multiplier C 1512

16x16 Multiplier D 1513

32    32    32    32

VIRTUAL ADDER/SUBTRACTOR 1550

VIRTUAL ADDER/SUBTRACTOR 1551

32    32

64

Result Register 1571

Result[63:0] 1590

64

Figure 15

Figure 16

Figure 17

EP 1 693 742 A2

```
                    ┌─────────┐
                    │  Start  │
                    └────┬────┘
                         ▼
          ┌──────────────────────────────┐
          │    Decode Control Signal      │
          │            1801               │
          └──────────────┬───────────────┘
                         ▼
          ┌──────────────────────────────┐
          │    Access Date at SRC1 & SRC2  │
          │            1802               │
          └──────────────┬───────────────┘
                         ▼
       ┌─────────────────────────────────────┐
       │  Enable Execution Unit with a Pack   │
       │           Operation                  │
       │    (Size, Saturation, Signed)        │
       │              1803                    │
       └──────────────────┬──────────────────┘
                          ▼
    Word          ╱─────────────╲         Doubleword
   ◄──────────────    Size?       ──────────────►
                  ╲    1810       ╱
                   ╲─────────────╱
```

| Word branch (1812) | Doubleword branch (1814) |
|---|---|
| Result[7:0] = Source1[7:0] or Saturate | |
| Result[15:8] = Source1[23:16] or Saturate | |
| Result[23:16] = Source1[39:32] or Saturate | Result[15:0] = Source1[15:0] or Saturate |
| Result[31:24] = Source1[48:55] or Saturate | Result[31:16] = Source1[47:32] or Saturate |
| Result[39:32] = Source2[7:0] or Saturate | Result[47:32] = Source2[15:0] or Saturate |
| Result[47:40] = Source2[23:16] or Saturate | Result[63:48] = Source2[47:32] or Saturate |
| Result[55:48] = Source2[39:32] or Saturate | 1814 |
| Result[63:56] = Source2[63:56] or Saturate | |
| 1812 | |

```
                         ▼
          ┌──────────────────────────────┐
          │     Store Result at DEST       │
          │            1820               │
          └──────────────┬───────────────┘
                         ▼
                    ┌─────────┐
                    │  Stop   │
                    └─────────┘
```

# Figure 18

Figure 19a

Figure 19b

Start

Decode Control Signal
2001

Access Date at SRC1 & SRC2
2002

Enable Execution Unit with an Unpack Operation
(Size)
2003

Byte

Size?
2010

Doubleword

Word

Result[7:0] =
Source1[7:0]

Result[15:8] =
Source2[7:0]

Result[23:16] =
Source1[15:8]

Result[31:24] =
Source2[15:8]

Result[39:32] =
Source1[23:16]

Result[47:40] =
Source2[23:16]

Result[55:48] =
Source1[31:24]

Result[63:56] =
Source2[31:24]

2012

Result[15:0] =
Source1[15:0]

Result[31:16] =
Source2[15:0]

Result[47:32] =
Source1[31:16]

Result[63:48] =
Source2[31:16]

2014

Result[31:0] =
Source1[31:0]

Result[63:32] =
Source2[31:0]

2016

Store Result at DEST
2020

Stop

# Figure 20

Figure 21

Source2[31:24]

Source1[31:24]    Source2[23:16]    Source2[15:8]    Source2[7:0]

Source1[23:16]    Source1[15:8]    Source1[7:0]

| 63:56 | 55:48 | 47:40 | 39:32 | 31:24 | 23:16 | 15:8 | 7:0 |

Result Register
2152

Source2[31:16]         Source2[15:0]

Source1[31:16]         Source1[15:0]

| 63:48 | 47:32 | 31:16 | 15:0 |

Result Register
2153

Output Enable
2132

Output Enable
2133

Source2[31:0]    Source1[31:0]

Operation Control
2100

Output Enable
2134

| 63:32 | 31:0 |

Result Register
2154

Result[63:0]
2160

EP 1 693 742 A2

82

Start

Decode Control Signal
2201

Access Register File, SRC1
2202

Enable Execution Unit with a Population Count Operation
(Size, Sign, HighlLow)
2203

Result[15:0]=Total Number of Bits
in Source1[15:0] set to one

Result[31:16]=Total Number of Bits
in Source1[31:16] set to one

Result[47:32]=Total Number of Bits
in Source1[47:32] set to one

Result[63:48]=Total Number of Bits
in Source1[63:48] set to one
2205

Store Result in DEST Register
2206

Stop

# Figure 22

Start

Generate CSum1a,
CCarry1a from:
Source1$_{15}$,
Source1$_{14}$,
Source1$_{13}$, and
Source1$_{12}$

2310a

Generate CSum1b,
CCarry1b from:
Source1$_{11}$,
Source1$_{10}$, Source1$_9$,
and Source1$_8$

2310b

Generate CSum1c,
CCarry1c from:
Source1$_7$,
Source1$_6$, Source1$_5$,
and
Source1$_4$

2310c

Generate CSum1d,
CCarry1d from:
Source1$_3$, Source1$_2$,
Source1$_1$, and
Source1$_0$

2310d

Generate CSum2a,
CCarry2a from:
CSum1a, CCarry1a,
CSum1b, CCarry1b
2320a

Generate CSum2b,
CCarry2b from: CSum1c,
CCarry1c,
CSum1d, CCarry1d
2320b

Generate CSum3 and CCarry3 from:
CSum2a, CCarry2a, CSum2b, and
CCarry2b.
2330

Result$_{4-0}$ = Add CSum3 + CCarry3
Result$_{15-5}$= 0
2340

Stop

# Figure 23

# Figure 24

OPERATION CONTROL
2410

Control
2403

Source1 BUS
2401
64

16     16     16     16

| Enable 2404d | Source1 IN 2406d | Enable 2404c | Source1 IN 2406c | Enable 2404b | Source1 IN 2406b | Enable 2404a | Source1 IN 2406a |

POPCNT CIRCUIT 2408d

POPCNT CIRCUIT 908c

POPCNT CIRCUIT 2408b

POPCNT CIRCUIT 2408a

RESULT OUT 2407d

RESULT OUT 2407c

RESULT OUT 2407b

RESULT OUT 2407a

b63     16     b48     b47     16     b32     b31     16     b16     b15     16     b00

64

Result
BUS 2409

$IN_{15}$  $IN_{13}$    $IN_{11}$  $IN_9$    $IN_7$  $IN_5$    $IN_3$  $IN_1$

Source1IN 15-0    $IN_{14}$  $IN_{12}$    $IN_{10}$  $IN_8$    $IN_6$  $IN_4$    $IN_2$  $IN_0$
2406a

| In3 In2 In1 In0 |
| 4->2 CSA |
| 2510d |
| Out1 Out2 |

| In3 In2 In1 In0 |
| 4->2 CSA |
| 2510c |
| Out1 Out2 |

| In3 In2 In1 In0 |
| 4->2 CSA |
| 2510b |
| Out1 Out2 |

| In3 In2 In1 In0 |
| 4->2 CSA |
| 2510a |
| Out1 Out2 |

2 / 2    2 / 2    2 / 2    2 / 2

| In3 In2 In1 In0 |
| 4->2 CSA |
| 2520b |
| Out1 Out2 |

| In3 In2 In1 In0 |
| 4->2 CSA |
| 2520a |
| Out1 Out2 |

3 / 3    3 / 3

RESULT OUT 2407a

RESULT OUT$_{15-5}$
11

16

Figure 25

| In3 In2 In1 In0 |
| 4->2 CSA |
| 2530 |
| Out1 Out2 |

4 / 4

| FA 2550 |
| Cin    CO 1252 |
| A In    Sum 2551 |
| B In |

RESULT OUT$_4$
1

RESULT OUT$_{3-0}$
4

```
                        ┌─────────┐
                        │  Start  │
                        └────┬────┘
                             │
                             ▼
               ┌──────────────────────────┐
               │   Decode Control Signal   │
               │          2601             │
               └─────────────┬─────────────┘
                             │
                             ▼
               ┌──────────────────────────┐
               │ Access Register File, SRC1 & SRC2 │
               │          2602             │
               └─────────────┬─────────────┘
                             │
                             ▼
          ┌────────────────────────────────────┐
          │ Enable Execution Unit with the selected one of │
          │   the AND, ANDN, OR, and XOR logical │
          │               2603                 │
          └─────────────────┬──────────────────┘
                             │
                             ▼
```

AND                   Logical Operation                    OR
                           2610

ANDN                                          XOR

| Result[63:0] = Source1[63:0] AND with Source2[63:0] 2612 | Result[63:0] = Not (Source1[63:0]) AND Source2[63:0] 2613 | Result[63:0] = Source1[63:0] XOR Source2[63:0] 2614 | Result[63:0] = Source1[63:0] OR Source2[63:0] 2615 |

```
               ┌──────────────────────────┐
               │    Store Result in DEST    │
               │          2620             │
               └─────────────┬─────────────┘
                             │
                             ▼
                        ┌─────────┐
                        │  Stop   │
                        └─────────┘
```

Figure 26

Figure 27

Start

Decode Control Signal
2801

Access Register File, SRC1 & SRC2
2802

Enable Execution Unit with a Compare
Operation (Size, Compare Relationship)
2803

Byte     Size?     Word
2810

Result[7:0] = Source1[7:0]
compare with Source2[7:0]

Result[15:8] = Source1[15:8]
compare with Source2[15:8]

Result[23:16] = Source1[23:16]
compare with Source2[23:16]

Result[31:24] = Source1[31:24]
compare with Source2[31:24]

Result[39:32] = Source1[39:32]
compare with Source2[39:32]

Result[47:40] = Source1[47:40]
compare with Source2[47:40]

Result[55:48] = Source1[55:48]
compare with Source2[55:48]

Result[63:56] = Source1[63:56]
compare with Source2[63:56]

2812

Result[15:0] = Source1[15:0]
compare with Source2[15:0]

Result[31:16] = Source1[31:16]
compare with Source2[31:16]

Result[47:32] = Source1[47:32]
compare with Source2[47:32]

Result[63:48] = Source1[63:48]
compare with Source2[63:48]

2814

Store Result in DEST
2820

Stop

# Figure 28

EP 1 693 742 A2

# Figure 29

Operation Control
2900

Source2$_{i+1}$
2934  Source1$_{i+1}$
2932

Control$_{i+1}$
2902

Packed
Data
Enable$_i$
2906

Source2$_i$
2933  Source1$_i$
2931

Control$_i$
2901

Last
Stage$_{i+1}$
2972

Next
Stage$_i$
2913

Next Stage$_{i+1}$
2973

Compare Unit$_{i+1}$
2971

Bit Control$_i$
2920

Compare Unit$_i$
2911

Last Stage$_i$
2912

Byte Slice
Stage$_i$
2999

Result Register$_{i+1}$
2952

Result Register$_i$
2951

Result[63:0]
2960